# EUROPEAN PATENT APPLICATION

(11) **EP 4 521 657 A1**
(43) Date of publication of application: **12.03.2025**
(21) Application number: 23810553.0
(22) Date of filing: 09.02.2023
(51) Int. Cl.: H04B 10/079

(54) **OPTICAL MODULE, ELECTRONIC DEVICE, COMMUNICATION SYSTEM AND RELATED PROCESSING METHOD**

(30) Priority: 26.05.2022 CN 202210588839; 16.09.2022 CN 202211131775
(71) Applicant: Huawei Technologies Co., Ltd., Shenzhen, Guangdong 518129 (CN)
(72) Inventor: SU, Changzheng, Shenzhen, Guangdong 518129 (CN); MAO, Baoping, Shenzhen, Guangdong 518129 (CN); ZHOU, Bing, Shenzhen, Guangdong 518129 (CN); WANG, Dong, Shenzhen, Guangdong 518129 (CN); ZHONG, Qiang, Shenzhen, Guangdong 518129 (CN)
(74) Representative: Pfenning, Meinig & Partner mbB
(86) International application number: PCT/CN2023/075248
(87) International publication number: WO 2023/226477

(57) **Abstract**

This application provides an optical module, an electronic device, a communication system, and a related processing method. The optical module includes: a first processing unit, and a sampling unit, a sampled information storage unit, and a fault information storage unit that are separately electrically connected to the first processing unit. The sampling unit is configured to collect first sampled parameters, and store the first sampled parameters in the sampled information storage unit by using the first processing unit. The first processing unit is configured to: when identifying alarm information, read the first sampled parameters in the sampled information storage unit, determine, based on the first sampled parameters, fault type information corresponding to the alarm information, and store the fault type information in the fault information storage unit. The optical module does not need to transmit a large amount of sampled data to the electronic device. This shortens data transmission time, and reduces data transmission pressure between the optical module and the electronic device. Therefore, after an optical path fault occurs in the communication system in embodiments of this application, a fault cause and a fault point location can be located in a timely manner.

## Description

### CROSS-REFERENCE TO RELATED APPLICATIONS

This application claims priority to Chinese Patent Application No. 202210588839.6, filed with the China National Intellectual Property Administration on May 26, 2022 and entitled "MODULE AND METHOD FOR LOCATING NETWORK FAULTS", which is incorporated herein by reference in its entirety. This application claims priority to Chinese Patent Application No. 202211131775.3, filed with the China National Intellectual Property Administration on September 16, 2022 and entitled "OPTICAL MODULE, ELECTRONIC DEVICE, COMMUNICATION SYSTEM, AND RELATED PROCESSING METHOD", which is incorporated herein by reference in its entirety.

### TECHNICAL FIELD

This application relates to the field of communication technologies, and in particular, to an optical module, an electronic device, a communication system, and a related processing method.

### BACKGROUND

An optical path fault is a common fault phenomenon in an optical fiber network. A fault cause may include a power fault, a line fault, a module fault, a device fault, and the like. The optical path fault may cause optical path interruption (for example, no optical signal is received by a device) or optical path degradation (for example, a power of an optical signal received by the device is low), affecting network service quality. When the optical path fault occurs, how to quickly and accurately identify and demarcate a fault point is of great significance to shorten mean time to recovery (Mean Time To Recovery, MTTR) of network services.

However, in a related technology, when an optical path fault occurs in a communication system, an optical module needs to upload collected sampled data to an electronic device, then the electronic device transmits the sampled data to a network management device, and the network management device performs calculation and analysis on the sampled data to locate a fault point. In this case, sampled data of a plurality of optical modules of a plurality of electronic devices in a network system needs to be transmitted to the network management device. A large amount of data needs to be transmitted. Limited by a transmission rate of a communication bus, it takes a long time to transmit the sampled data to the network management device. As a result, after the optical path fault occurs, a fault cause and a fault point location cannot be identified or reported in a timely manner.

### SUMMARY

Embodiments of this application provide an optical module, an electronic device, a communication system, and a related processing method, to resolve a problem that a fault cause and a fault point location cannot be identified or reported in a timely manner after an optical path fault occurs in the communication system.

According to a first aspect, an embodiment of this application provides an optical module. The optical module may be an optical-to-electrical conversion module, an optical amplification module, an optical switching module, or another functional module.

The optical module in this embodiment of this application may include a first processing unit, and a sampling unit, a sampled information storage unit, and a fault information storage unit that are separately electrically connected to the first processing unit.

The sampling unit is configured to collect first sampled parameters, and store the first sampled parameters in the sampled information storage unit by using the first processing unit. In a possible implementation, the sampling unit may collect the first sampled parameters in real time, and transmit the collected first sampled parameters to the first processing unit in real time. The first processing unit transmits the first sampled parameters to the sampled information storage unit in real time. The sampled information storage unit receives and stores the first sampled parameters in real time. During specific implementation, the first sampled parameters collected by the sampling unit may be data at a micro-granularity. The micro-granularity may be a sampling interval less than 100 milliseconds. For example, the first sampled parameter may include a photogenerated current that represents an optical power of an input optical signal.

The first processing unit is configured to: when identifying alarm information, read the first sampled parameters in the sampled information storage unit, determine, based on the first sampled parameters, fault type information corresponding to the alarm information, and store the fault type information in the fault information storage unit.

In the optical module provided in this embodiment of this application, when identifying the alarm information, the first processing unit may determine, based on the first sampled parameters, the fault type information corresponding to the alarm information, and store the fault type information in the fault information storage unit. In this way, functions such as collection, storage, and analysis of the first sampled parameters may be implemented inside the optical module. Subsequently, an electronic device or a network management device reads the fault type information stored in the optical module, and can quickly and accurately determine a fault cause and a fault point location based on a network topology relationship of a communication system. Therefore, the optical module does not need to transmit a large amount of sampled data to the electronic device. This shortens data transmission time, and reduces data transmission pressure between the optical module and the electronic device. Therefore, after an optical path fault occurs in the communication system in embodiments of this application, delay time required for determining the fault cause and the fault point location is short, and the fault cause and the fault point location can be located in a timely manner.

In this embodiment of this application, the first processing unit may be a component having a data processing function, for example, a central processing unit (central processing unit, CPU) or a microprocessor (Microcontroller Unit, MCU). The sampling unit may be a sampling circuit including an analog-to-digital converter. The sampled information storage unit and the fault information storage unit may be specific areas of a memory in the optical module, or at least one independent storage chip may be disposed in the optical module, and the storage chip is used as the sampled information storage unit and/or the fault information storage unit. That is, the sampled information storage unit and the fault information storage unit may separately use one storage chip, or may share a same storage chip. This is merely an example for description, and specific implementations of the sampled information storage unit and the fault information storage unit are not limited.

To help the electronic device or the network management device subsequently determine the fault cause and the fault point location, the fault information storage unit may store the fault type information, and the fault information storage unit may further store fault generation time information corresponding to the alarm information.

In some embodiments of this application, when the optical module is an optical-to-electrical conversion module, an optical amplification module, an optical switching module, or another functional module, the first sampled parameter may include a photogenerated current. In some other embodiments of this application, when the optical module is an optical-to-electrical conversion module, there may be a plurality of implementations of the first sampled parameters. Any one of parameters such as a photogenerated current, an optical signal amplitude, a pre-FEC bit error rate, a post-FEC bit error rate, an electrical eye pattern amplitude, an optical signal phase, and an optical signal spectrum may be used as the first sampled parameters. The photogenerated current is a direct current component of the input optical signal. The optical signal amplitude is a difference between a high level and a low level of the input optical signal. Both the photogenerated current and the optical signal amplitude have a positive correlation with the optical power of the input optical signal. Certainly, in some cases, when the optical module is another functional module, another parameter may also be used as the first sampled parameters, provided that the first processing unit can determine, based on the first sampled parameters, the fault type information corresponding to the alarm information. A specific implementation of the first sampled parameters is not limited herein.

The optical module in this embodiment of this application may determine an alarm status in a plurality of manners. The following describes several manners of determining the alarm status of the optical module by using examples.

### Determining manner 1:

The optical module may further include an alarm information generation unit. The alarm information generation unit is separately electrically connected to the sampling unit and the first processing unit. The sampling unit is further configured to send the first sampled parameters to the alarm information generation unit. The alarm information generation unit is configured to: determine whether the first sampled parameters are within a preset threshold range, generate the alarm information when the first sampled parameters are out of the threshold range, and send the alarm information to the first processing unit. The alarm information generation unit may receive, in real time, the plurality of first sampled parameters output by the sampling unit, compare the received first sampled parameters with endpoint values of the preset threshold range one by one, and generate the alarm information when the first sampled parameters are greater than a maximum value of the preset threshold range or less than a minimum value of the preset threshold range.

For example, the alarm information may be that a digital logic signal changes from a low level to a high level, or the alarm information may be that a digital logic signal changes from a high level to a low level. Certainly, the alarm information may alternatively be information of another type. This is not limited herein.

In the determining manner 1, a parameter used by the alarm information generation unit to determine the alarm status and a parameter used by the first processing unit to determine the fault type information may be the same, and may, for example, both use the first sampled parameters collected by the sampling unit. For example, when the optical module in this embodiment of this application is an optical-to-electrical conversion module, an optical-to-electrical amplification module, an optical switching module, or another module, the first sampled parameter may include a photogenerated current. When the optical module is an optical-to-electrical conversion module, the first sampled parameter may include parameters such as a photogenerated current, an optical signal amplitude, a pre-FEC bit error rate, a post-FEC bit error rate, an electrical eye pattern amplitude, an optical signal phase, or an optical signal spectrum. Certainly, in some cases, the first sampled parameter may further include another parameter. This is not limited herein.

### Determining manner 2:

The optical module may further include an alarm information generation unit. The alarm information generation unit is separately electrically connected to the sampling unit and the first processing unit. The sampling unit is further configured to collect second sampled parameters, and send the second sampled parameters to the alarm information generation unit, where the second sampled parameters are different from the first sampled parameters. The alarm information generation unit is configured to: determine whether the second sampled parameters are within a preset threshold range, generate the alarm information when the second sampled parameters are out of the threshold range, and send the alarm information to the first processing unit. The alarm information generation unit may receive, in real time, the plurality of second sampled parameters output by the sampling unit, compare the received second sampled parameters with endpoint values of the preset threshold range one by one, and generate the alarm information when the second sampled parameters are greater than a maximum value of the preset threshold range or less than a minimum value of the preset threshold range.

The sampling unit may be specifically configured to collect the second sampled parameters in real time at millisecond-level sampling time precision. The millisecond-level sampling time precision indicates that the sampling unit collects at least two pieces of data within 1s. Higher sampling precision of the sampling unit may indicate that more sampled data is provided for determining the fault type information.

The determining manner 2 is different from the determining manner 1 in that a parameter used by the alarm information generation unit to determine the alarm status and a parameter used by the first processing unit to determine the fault type information are different. Specifically, the first processing unit determines the fault type information based on the first sampled parameters, and the alarm information generation unit determines the alarm status based on the second sampled parameters different from the first sampled parameters.

For example, when the optical module is an optical-to-electrical conversion module, the first sampled parameter may include a photogenerated current, and the second sampled parameter may include an optical signal amplitude; or the first sampled parameter may include a photogenerated current, and the second sampled parameter may include a pre-FEC bit error rate. During specific implementation, the first sampled parameter and the second sampled parameter may alternatively include another parameter. This is not limited herein.

In the determining manner 1 and the determining manner 2, the alarm information generation unit may be an independent hardware unit. For example, the alarm information generation unit may be hardware such as a comparator, or the alarm information generation unit and the first processing unit may be integrated into a same processor or processing chip. A specific implementation of the alarm information generation unit is not limited herein. During specific implementation, a function of "determining whether the first sampled parameters (or the second sampled parameters) are within a preset threshold range, and generating alarm information when the first sampled parameters are out of the threshold range" in the alarm information generation unit may be implemented in a hardware or software manner.

In the determining manner 1 and the determining manner 2, the alarm information generation unit is configured to monitor the first sampled parameters in real time. When the first sampled parameters are abnormal, the alarm information generation unit may detect an anomaly in a timely manner, generate the alarm information, and send the alarm information to the first processing unit.

### Determining manner 3:

A function of determining the alarm status in the optical module may alternatively be implemented by using the first processing unit.

Similar to the alarm information generation unit functioning in the determining manner 1, the first processing unit in the determining manner 3 may determine the alarm status based on the first sampled parameters, that is, the first processing unit may determine whether the first sampled parameters are within a preset threshold range, and generate the alarm information when the first sampled parameters are out of the threshold range. The first processing unit may receive, in real time, the plurality of first sampled parameters output by the sampling unit, compare the received first sampled parameters with endpoint values of the preset threshold range one by one, and generate the alarm information when the first sampled parameters are greater than a maximum value of the preset threshold range or less than a minimum value of the preset threshold range.

Alternatively, similar to the alarm information generation unit functioning in the determining manner 2, the first processing unit in the determining manner 3 may determine the alarm status based on the second sampled parameters different from the first sampled parameters, that is, the first processing unit may determine whether the second sampled parameters are within a preset threshold range, and generate the alarm information when the second sampled parameters are out of the threshold range. The first processing unit may receive, in real time, the plurality of second sampled parameters output by the sampling unit, compare the received second sampled parameters with endpoint values of the preset threshold range one by one, and generate the alarm information when the second sampled parameters are greater than a maximum value of the preset threshold range or less than a minimum value of the preset threshold range.

In a possible implementation, the sampling unit may be specifically configured to collect the first sampled parameters at millisecond-level sampling time precision. The millisecond-level sampling time precision indicates that the sampling unit collects at least two pieces of data within 1s. Higher sampling precision of the sampling unit may indicate that more sampled data is provided for determining the fault type information. In addition, because the optical module does not need to send the first sampled parameters to the electronic device, sampling precision of the sampling unit is high, and data transmission pressure between the optical module and the electronic device is not increased. During specific implementation, the optical module in a normal operating state may collect the first sampled parameters in real time, encode the first sampled parameters, and store the encoded first sampled parameters in the sampled information storage unit by using the first processing unit. If storage space in the sampled information storage unit is full, the space is covered from the beginning in a wrapped connection manner.

The first processing unit may be specifically configured to: when identifying the alarm information, continue to store, in the sampled information storage unit, the first sampled parameters that are of p sampling points and that are collected by the sampling unit, where p is an integer greater than or equal to 0, during specific implementation, a specific value of p may be set according to an application scenario, and for example, p may be a value ranging from 10 to 1000; read the first sampled parameters (including at least two pieces of sampling point data) that are in a preset time window and that are in the sampled information storage unit; and determine, based on the read first sampled parameters, the fault type information corresponding to the alarm information. In this embodiment of this application, when identifying the alarm information, the first processing unit continues to store, in the sampled information storage unit, the first sampled parameters that are of the p sampling points and that are collected by the sampling unit, and reads the first sampled parameters that are in the preset time window and that are in the sampled information storage unit, where p is greater than or equal to 0. In other words, when identifying the alarm information, the first processing unit may immediately read the first sampled parameters in the sampled information storage unit, or may delay a period of time before reading the first sampled parameters in the sampled information storage unit. In this way, since the first sampled parameters obtained by the first processing unit after identifying the alarm information is large in data amount, the first processing unit may determine, according to a waveform of the obtained first sampled parameters in the preset time window, the fault type information corresponding to the alarm information. Therefore, accuracy of fault analysis is high.

During actual application, after reading the first sampled parameters that are in the preset time window and that are in the sampled information storage unit, the first processing unit may extract feature parameters of the first sampled parameters in the preset time window, and may, for example, store the extracted feature parameters in a buffer queue of the first processing unit according to a classification result by using a supervised and/or unsupervised algorithm. The first processing unit may classify fault types based on the feature parameters of the first sampled parameters in the preset time window, to determine the fault type information corresponding to the alarm information.

In some embodiments of this application, in a plurality of fault scenarios of the communication system, at least one parameter of the optical module is abnormal, and a parameter may be used as the first sampled parameters. For example, the first sampled parameter may include a photogenerated current or an optical signal amplitude. In some cases, the first sampled parameter may alternatively be another parameter. This is not limited herein. The first processing unit in the optical module may determine the fault type information based on the first sampled parameters used when a fault occurs.

The first processing unit may be specifically configured to:
after reading the first sampled parameters in the preset time window, compare the first sampled parameter at an initial moment with the first sampled parameter at a last moment.

If a difference between the first sampled parameter at the initial moment and the first sampled parameter at the last moment is less than a first threshold (that is, the difference between the first sampled parameter at the initial moment and the first sampled parameter at the last moment is small), and a fluctuation event occurs in a waveform rule of the first sampled parameters in the preset time window, in other words, the first sampled parameters in the preset time window may restore a before-fluctuation value after fluctuation, the fault type information corresponding to the alarm information is input optical power fluctuation;
if a difference between the first sampled parameter at the initial moment and the first sampled parameter at the last moment is greater than the first threshold, the first sampled parameter at the last moment is less than a second threshold (that is, the difference between the first sampled parameter at the initial moment and the first sampled parameter at the last moment is large, and a first sampled value at the last moment is small), and a fluctuation and descent event occurs in a waveform rule of the first sampled parameters in the preset time window, in other words, the first sampled parameters in the preset time window have a small value after fluctuation, the fault type information corresponding to the alarm information is an input optical power fluctuation loss;
if a difference between the first sampled parameter at the initial moment and the first sampled parameter at the last moment is greater than the first threshold, the first sampled parameter at the last moment is less than a second threshold (that is, the difference between the first sampled parameter at the initial moment and the first sampled parameter at the last moment is large, and a first sampled value at the last moment is small), and a quick descent event occurs in a waveform rule of the first sampled parameters in the preset time window, in other words, the first sampled parameters in the preset time window quickly decrease to a small value, the fault type information corresponding to the alarm information is an input optical power quick loss;
if a difference between the first sampled parameter at the initial moment and the first sampled parameter at the last moment is greater than the first threshold, the first sampled parameter at the last moment is less than a second threshold (that is, the difference between the first sampled parameter at the initial moment and the first sampled parameter at the last moment is large, and the first sampled parameter at the last moment is small), and a stepped descent event occurs in a waveform rule of the first sampled parameters in the preset time window, in other words, the first sampled parameters in the preset time window decrease to a small value in a stepped manner, the fault type information corresponding to the alarm information is an input optical power stepped loss; or
if a difference between the first sampled parameter at the initial moment and the first sampled parameter at the last moment is greater than the first threshold (that is, the difference between the first sampled parameter at the initial moment and the first sampled parameter at the last moment is large), the first sampled parameter at the last moment is greater than a second threshold, and a waveform rule of the first sampled parameters in the preset time window has a degradation characteristic, in other words, in the preset time window, the first sampled parameters decrease to a specific extent, and the first sampled parameter at the last moment ranges from the second threshold and the first threshold, for example, the first sampled parameter at the last moment may be half of the first sampled parameter at the initial moment, the fault type information corresponding to the alarm information is input optical power degradation.

In this embodiment of this application, the fault type information is determined based on the first sampled parameters in the preset time window. The fault type information corresponding to the alarm information can be accurately determined based on the waveform and the endpoint values of the first sampled parameters in the preset time window, so that accuracy of subsequently determining the fault cause and the fault point is high.

In some other embodiments of this application, in some fault scenarios of the communication system, at least two parameters may be used as the first sampled parameters. For example, the first sampled parameter may include a photogenerated current and a pre-FEC bit error rate. The first processing unit in the optical module may determine the fault type information based on the at least two parameters used when a fault occurs. In this way, the first processing unit performs fault classification based on a large quantity of parameters, and can accurately determine a fault type corresponding to the alarm information. This improves accuracy of locating a fault cause.

The first processing unit may be specifically configured to:
after reading the first sampled parameters in the preset time window, compare the photogenerated current at the initial moment with the photogenerated current at the last moment, and compare the pre-FEC bit error rate at the initial moment with the pre-FEC bit error rate at the last moment.

If a difference between the photogenerated current at the initial moment and the photogenerated current at the last moment is less than a first threshold, and a difference between the pre-FEC bit error rate at the initial moment and the pre-FEC bit error rate at the last moment is greater than a third threshold (that is, the difference between the photogenerated current at the initial moment and the photogenerated current at the last moment is small, and the difference between the pre-FEC bit error rate at the initial moment and the pre-FEC bit error rate at the last moment is large), in other words, in the preset time window, the pre-FEC bit error rate decreases, and the photogenerated current basically does not change, the fault type information corresponding to the alarm information is optical power multipath interference degradation.

During specific implementation, specific values of the first threshold, the second threshold, the third threshold, and the preset time window may be set according to factors such as an application scenario of the network system.

According to a second aspect, an embodiment of this application further provides an electronic device. The electronic device may be an optical transmission device, an optical access device, an optical switching device, an optical amplification device, a router, a switch, a radio base station, a wireless remote access device, a radio baseband signal processing device, or the like.

The electronic device in this embodiment of this application may include a second processing unit and any one of the foregoing optical modules. The optical module is connected to the second processing unit. The optical module is configured to: when identifying alarm information, send the alarm information to the second processing unit. The second processing unit is configured to: after first preset time after receiving the alarm information, read fault type information that corresponds to the alarm information and that is in the fault information storage unit of the optical module. The second processing unit may be a component having a strong data processing function, for example, a server.

In this embodiment of this application, when identifying the alarm information, the first processing unit in the optical module may determine, based on the first sampled parameters, the fault type information corresponding to the alarm information, and store the fault type information in the fault information storage unit. The second processing unit in the electronic device may read, after first preset time after receiving the alarm information, the fault type information that corresponds to the alarm information and that is in the fault information storage unit, and can quickly and accurately determine a fault cause and a fault point location based on a network topology relationship of a communication system in which the optical module is located. Therefore, the optical module does not need to transmit a large amount of sampled data to the electronic device. This shortens data transmission time, and reduces data transmission pressure between the optical module and the electronic device. Therefore, after an optical path fault occurs in the communication system in embodiments of this application, delay time required for determining the fault cause and the fault point location is short, and the fault cause and the fault point location can be located in a timely manner.

In some embodiments of this application, the electronic device may include at least one optical module. The electronic device may be an integrated device. The optical module may be directly inserted into the electronic device as a pluggable independent module, or the optical module may be disposed inside the electronic device. The second processing unit may be connected to an alarm information generation unit in the optical module through a hardware pin interface. The alarm information generation unit is configured to send the alarm information to the second processing unit through a level jump of the hardware pin interface when generating the alarm information. A level of the hardware pin interface may be changed from a high level to a low level, or may be changed from a low level to a high level. Through the level jump of the hardware pin interface, the alarm information generation unit can quickly transmit the alarm information to the second processing unit.

The second processing unit may be connected to the first processing unit through a communication bus. The first processing unit is configured to send the alarm information to the second processing unit through the communication bus when identifying the alarm information. The second processing unit may further read parameters such as the fault type information and fault generation time in the fault information storage unit through the communication bus. In addition, the second processing unit may read a status parameter and a performance parameter of the optical module and configure an operating parameter of the optical module through the communication bus. Certainly, the second processing unit may also exchange other information with the optical module through the communication bus. Examples are not described one by one herein.

In some other embodiments of this application, the electronic device may include at least one board. The board may be inserted into the electronic device in a pluggable manner, or the board may be disposed inside the electronic device. At least one optical module may be disposed in the board. The optical module may be inserted into the board in a pluggable manner, or the optical module may be disposed inside the board. The optical module may exchange information with the electronic device by using the board. The board may include a third processing unit. The third processing unit is connected to an alarm information generation unit in the optical module through a hardware pin interface. The alarm information generation unit is configured to send the alarm information to the third processing unit through a level jump of the hardware pin interface when generating the alarm information. A level of the hardware pin interface may change from a high level to a low level, or may change from a low level to a high level. Through the level jump of the hardware pin interface, the alarm information generation unit can quickly transmit the alarm information to the third processing unit. In addition, the third processing unit may send the alarm information to the second processing unit through a communication interface.

The third processing unit may be connected to the first processing unit through a communication bus. The third processing unit is connected to the second processing unit through the communication interface. The first processing unit is configured to send the alarm information to the third processing unit through the communication bus when identifying the alarm information. The third processing unit is configured to send the alarm information to the second processing unit through the communication interface. During specific implementation, the third processing unit may read parameters such as the fault type information and fault generation time in the fault information storage unit through the communication bus, and transmit the read parameters such as the fault type information and the fault generation time to the second processing unit. During specific implementation, the optical module may further exchange other information with the electronic device by using the board. Examples are not described one by one herein.

In this embodiment of this application, the communication bus may be a serial peripheral interface (Serial Perripheral Interface, SPI) bus or an inter-integrated circuit (Inter-Integrated Circuit, I2C) serial communication bus. To improve a transmission rate, the communication bus may alternatively be a high-speed communication bus, and may, for example, be a management data input/output interface bus (Management Data Input Output Interface, MDIO). Certainly, the communication bus may alternatively be another type of bus, provided that a transmission requirement between the first processing unit and the electronic device can be met. This is not limited herein.

In a possible implementation, the first processing unit is further configured to store delay prompt information in the fault information storage unit. The second processing unit is further configured to read the delay prompt information in the fault information storage unit. The delay prompt information indicates shortest duration from time when the second processing unit receives the alarm information to time when the second processing unit can read the fault type information corresponding to the alarm information. The first preset time is greater than or equal to the shortest duration. This can ensure that the second processing unit can read the fault type information after waiting for the first preset time. At least the following needs to be considered for the shortest duration: a time length required for the first processing unit to continue to store the first sampled parameters collected by the sampling unit in the sampled information storage unit after the optical module generates the alarm information, a time length required for the first processing unit to read the first sampled parameters in the sampled information storage unit, and a time length required by the first processing unit to determine the fault type information based on the first sampled parameters. During specific implementation, the delay prompt information may be written into the fault information storage unit in a manufacturing process of the optical module.

During specific implementation, the first processing unit is further configured to delete the fault type information from the fault information storage unit after the second processing unit reads the fault type information, so that after reporting the fault type information, the optical module restores to a state of being indicated by no alarm information.

In some embodiments of this application, the second processing unit may be configured to determine the fault cause based on the read fault type information and the network topology relationship of the network system in which the optical module is located. Because the first processing unit in the optical module has determined the fault type information, the second processing unit may determine the fault cause based on the fault type information and the network topology relationship of the network system in which the optical module is located. This simplifies a process of analyzing the fault cause by the second processing unit, reduces a calculation amount, and shortens time required for analyzing the fault cause.

Specifically, the second processing unit may be specifically configured to:
if identifying the fault type information as input optical power fluctuation, determine, based on the network topology relationship of the network system, a cable sharing relationship of the optical module generating the alarm information; and if an optical module that shares a same cable with and belongs to the same electronic device as the optical module generating the alarm information is proper, or there is no optical module that shares a same cable with and belongs to the same electronic device as the optical module generating the alarm information, determine that the fault cause is an optical jumper vibration fault; or if the fault type of at least two optical modules that share a same cable and belong to the same electronic device is input optical power fluctuation, determine that the fault cause is an optical cable vibration fault; or
if identifying the fault type information as an input optical power fluctuation loss, determine, based on the network topology relationship of the network system, a cable sharing relationship of the optical module generating the alarm information; and if an optical module that shares a same cable with and belongs to the same electronic device as the optical module generating the alarm information is proper, or there is no optical module that shares a same cable with and belongs to the same electronic device as the optical module generating the alarm information, determine that the fault cause is an optical jumper breakage fault; or if the fault type of at least two optical modules that share a same cable and belong to the same electronic device is input optical power fluctuation, determine that the fault cause is an optical cable breakage fault.

In some other embodiments of this application, the second processing unit may be configured to determine the fault cause based on the read fault type information. Because the first processing unit in the optical module has determined the fault type information, the second processing unit may determine the fault cause based on the fault type information. This simplifies a process of analyzing the fault cause by the second processing unit, reduces a calculation amount, and shortens time required for analyzing the fault cause.

Specifically, the second processing unit may be specifically configured to:
if identifying the fault type information as an input optical power stepped loss, determine that the fault cause is a device power-off fault;
if identifying the fault type information as an input optical power quick loss, determine that the fault cause is an optical jumper fall-off fault;
if identifying the fault type information as input optical power degradation, determine that the fault cause is an optical jumper bending fault; or
if identifying the fault type information as optical power multipath interference degradation, determine that the fault cause is an optical path quality degradation fault.

According to a third aspect, an embodiment of this application further provides a communication system. The communication system in this embodiment of this application may include any one of the foregoing electronic devices and a power supply line. The power supply line is configured to supply power to the electronic device.

During specific implementation, the communication system in this embodiment of this application may further include a network management device. The network management device may perform unified management and control on the communication system in which the optical module is located. A second processing unit in the electronic device may be connected to the network management device through a network communication interface. The electronic device may exchange information with a grid device through the network communication interface. For example, the electronic device may transmit parameters such as fault type information and fault generation time to the network management device through the network communication interface.

In some embodiments of this application, the network management device may be configured to obtain the fault type information of the electronic device, and determine a fault cause based on the fault type information and a network topology relationship of a network system. Because a first processing unit in an optical module has determined the fault type information, the network management device may determine the fault cause based on the fault type information and the network topology relationship of the network system. This simplifies a process of analyzing the fault cause by the network management device, reduces a calculation amount, and shortens time required for analyzing the fault cause.

Specifically, the electronic device may be specifically configured to:
if identifying the fault type information as input optical power fluctuation, determine, based on the network topology relationship of the network system, a cable sharing relationship of the optical module generating alarm information; and if an optical module that shares a same cable with the optical module generating the alarm information is proper, or there is no optical module that shares a same cable with the optical module generating the alarm information, determine that the fault cause is an optical jumper vibration fault; or if the fault type of at least two optical modules that share a same cable is input optical power fluctuation, determine that the fault cause is an optical cable vibration fault; or
if identifying the fault type information as an input optical power fluctuation loss, determine, based on the network topology relationship of the network system, a cable sharing relationship of the optical module generating alarm information; and if an optical module that shares a same cable with the optical module generating the alarm information is proper, or there is no optical module that shares a same cable with as the optical module generating the alarm information, determine that the fault cause is an optical jumper breakage fault; or if the fault type information of at least two optical modules that share a same cable is input optical power fluctuation, determine that the fault cause is an optical cable breakage fault.

In some other embodiments of this application, the network management device may be configured to obtain the fault type information of the electronic device, and determine a fault cause based on the fault type information. Because a first processing unit in an optical module has determined the fault type information, the network management device may determine the fault cause based on the fault type information. This simplifies a process of analyzing the fault cause by the network management device, reduces a calculation amount, and shortens time required for analyzing the fault cause.

Specifically, the electronic device may be specifically configured to:
if identifying the fault type information as an input optical power stepped loss, determine that the fault cause is a device power-off fault;
if identifying the fault type information as an input optical power quick loss, determine that the fault cause is an optical jumper fall-off fault;
if identifying the fault type information as input optical power degradation, determine that the fault cause is an optical jumper bending fault; or
if identifying the fault type information as optical power multipath interference degradation, determine that the fault cause is an optical path quality degradation fault.

According to a fourth aspect, an embodiment of this application further provides a fault type determining method applied to an optical module. The optical module may include a first processing unit, and a sampling unit, a sampled information storage unit, and a fault information storage unit that are separately electrically connected to the first processing unit.

The fault type determining method in this embodiment of this application may include:
The sampling unit collects first sampled parameters, and stores the first sampled parameters in the sampled information storage unit by using the first processing unit; and
when identifying alarm information, the first processing unit reads the first sampled parameters in the sampled information storage unit, determines, based on the first sampled parameters, fault type information corresponding to the alarm information, and stores the fault type information in the fault information storage unit.

In the fault type determining method provided in this embodiment of this application, when identifying the alarm information, the first processing unit may determine, based on the first sampled parameters, the fault type information corresponding to the alarm information, and store the fault type information in the fault information storage unit. In this way, functions such as collection, storage, and analysis of the first sampled parameters may be implemented inside the optical module. Subsequently, an electronic device or a network management device reads the fault type information stored in the optical module, and can quickly and accurately determine a fault cause and a fault point location based on a network topology relationship of a communication system. In this way, a fault in the communication system can be quickly corrected, and troubleshooting costs can be reduced.

In this embodiment of this application, the optical module has at least the following several manners of determining an alarm.

### Determining manner 1:

The optical module may further include an alarm information generation unit.

The fault type determining method may further include:
The sampling unit sends the first sampled parameters to the alarm information generation unit; and
the alarm information generation unit determines whether the first sampled parameters are within a preset threshold range, generates alarm information when the first sampled parameters are out of the threshold range, and sends the alarm information to the first processing unit. The alarm information generation unit may receive, in real time, the plurality of first sampled parameters output by the sampling unit, compare the received first sampled parameters with endpoint values of the preset threshold range one by one, and generate the alarm information when the first sampled parameters are greater than a maximum value of the preset threshold range or less than a minimum value of the preset threshold range.

In the determining manner 1, a parameter used by the alarm information generation unit to determine an alarm status and a parameter used by the first processing unit to determine the fault type information may be the same. For example, when the optical module in this embodiment of this application is an optical-to-electrical conversion module, an optical-to-electrical amplification module, an optical switching module, or another module, the first sampled parameter may include a photogenerated current. When the optical module is an optical-to-electrical conversion module, the first sampled parameter may include parameters such as a photogenerated current, an optical signal amplitude, a pre-FEC bit error rate, a post-FEC bit error rate, an electrical eye pattern amplitude, an optical signal phase, or an optical signal spectrum. Certainly, in some cases, the first sampled parameter may further include another parameter. This is not limited herein.

### Determining manner 2:

The optical module may further include an alarm information generation unit.

The fault type determining method may further include:
The sampling unit collects second sampled parameters, and sends the second sampled parameters to the alarm information generation unit, where the second sampled parameters are different from the first sampled parameters; and
the alarm information generation unit determines whether the second sampled parameters are within a preset threshold range, generates alarm information when the second sampled parameters are out of the threshold range, and sends the alarm information to the first processing unit. The alarm information generation unit may receive, in real time, the plurality of second sampled parameters output by the sampling unit, compare the received second sampled parameters with endpoint values of the preset threshold range one by one, and generate the alarm information when the second sampled parameters are greater than a maximum value of the preset threshold range or less than a minimum value of the preset threshold range.

The sampling unit may be specifically configured to collect the second sampled parameters in real time at millisecond-level sampling time precision. The millisecond-level sampling time precision indicates that the sampling unit collects at least two pieces of data within 1s. Higher sampling precision of the sampling unit may indicate that more sampled data is provided for determining the fault type information.

The determining manner 2 is different from the determining manner 1 in that a parameter used by the alarm information generation unit to determine the alarm status and a parameter used by the first processing unit to determine the fault type information are different. Specifically, the first processing unit determines the fault type information based on the first sampled parameters, and the alarm information generation unit determines the alarm status based on the second sampled parameters different from the first sampled parameters. For example, when the optical module is an optical-to-electrical conversion module, the first sampled parameter may include a photogenerated current, and the second sampled parameter may include an optical signal amplitude; or the first sampled parameter may include a photogenerated current, and the second sampled parameter may include a pre-FEC bit error rate. During specific implementation, the first sampled parameter and the second sampled parameter may alternatively include another parameter. This is not limited herein.

In the determining manner 1 and the determining manner 2, the alarm information generation unit is configured to monitor the first sampled parameters in real time. When the first sampled parameters are abnormal, the alarm information generation unit may detect an anomaly in a timely manner, generate the alarm information, and send the alarm information to the first processing unit.

### Determining manner 3:

A function of determining the alarm status in the optical module may alternatively be implemented by using the first processing unit.

In a possible implementation, the sampling unit collects the first sampled parameters at millisecond-level sampling time precision. The millisecond-level sampling time precision indicates that the sampling unit collects at least two pieces of data within 1s. Higher sampling precision of the sampling unit may indicate that more sampled data is provided for determining the fault type information. In addition, because the optical module does not need to send the first sampled parameters to the electronic device, sampling precision of the sampling unit is high, and data transmission pressure between the optical module and the electronic device is not increased.

That the first processing unit reads the first sampled parameters in the sampled information storage unit and determines, based on the first sampled parameters, fault type information corresponding to alarm information when identifying the alarm information may specifically include:
When identifying the alarm information, the first processing unit continues to store, in the sampled information storage unit, the first sampled parameters that are of p sampling points and that are collected by the sampling unit, where p is an integer greater than or equal to 0, during specific implementation, a specific value of p may be set according to an application scenario, and for example, p may be a value ranging from 10 to 1000; and
the first processing unit reads the first sampled parameters (including at least two pieces of sampling point data) that are in a preset time window and that are in the sampled information storage unit; and
determines, based on the read first sampled parameters, the fault type information corresponding to the alarm information.

In this embodiment of this application, when identifying the alarm information, the first processing unit continues to store, in the sampled information storage unit, the first sampled parameters that are of the p sampling points and that are collected by the sampling unit, and reads the first sampled parameters that are in the preset time window and that are in the sampled information storage unit, where p is greater than or equal to 0. In other words, when identifying the alarm information, the first processing unit may immediately read the first sampled parameters in the sampled information storage unit, or may delay a period of time before reading the first sampled parameters in the sampled information storage unit. In this way, since the first sampled parameters obtained by the first processing unit after identifying the alarm information is large in data amount, the first processing unit may determine, according to a waveform of the obtained first sampled parameters in the preset time window, the fault type information corresponding to the alarm information. Therefore, accuracy of fault analysis is high.

In a possible implementation, after reading the first sampled parameters in the sampled information storage unit and before determining the fault type information corresponding to the alarm information, the first processing unit may further detect whether the sampled information storage unit is zeroed out, and if the sampled information storage unit is not zeroed out, may control the sampled information storage unit to be zeroed out.

In some embodiments of this application, the first sampled parameter may include a photogenerated current or an optical signal amplitude. In some cases, the first sampled parameter may alternatively be another parameter. This is not limited herein. That the first processing unit determines, based on the read first sampled parameters, the fault type information corresponding to the alarm information may specifically include:
after reading the first sampled parameters in the preset time window, comparing the first sampled parameter at an initial moment with the first sampled parameter at a last moment. During specific implementation, the first processing unit may extract events in a buffer queue and sort the events according to time, so as to determine, in a subsequent step, whether a fluctuation event, a fluctuation and descent event, or the like occurs in the waveform of the first sampled parameters.

If a difference between the first sampled parameter at the initial moment and the first sampled parameter at the last moment is less than a first threshold, and a fluctuation event occurs in a waveform rule of the first sampled parameters in the preset time window, the fault type information corresponding to the alarm information is input optical power fluctuation;
if a difference between the first sampled parameter at the initial moment and the first sampled parameter at the last moment is greater than the first threshold, the first sampled parameter at the last moment is less than a second threshold, and a fluctuation and descent event occurs in a waveform rule of the first sampled parameters in the preset time window, the fault type information corresponding to the alarm information is an input optical power fluctuation loss;
if a difference between the first sampled parameter at the initial moment and the first sampled parameter at the last moment is greater than the first threshold, the first sampled parameter at the last moment is less than a second threshold, and a quick descent event occurs in a waveform rule of the first sampled parameters in the preset time window, the fault type information corresponding to the alarm information is an input optical power quick loss;
if a difference between the first sampled parameter at the initial moment and the first sampled parameter at the last moment is greater than the first threshold, the first sampled parameter at the last moment is less than a second threshold, and a stepped descent event occurs in a waveform rule of the first sampled parameters in the preset time window, the fault type information corresponding to the alarm information is an input optical power stepped loss; or
if a difference between the first sampled parameter at the initial moment and the first sampled parameter at the last moment is greater than the first threshold, the first sampled parameter at the last moment is greater than a second threshold, and a waveform rule of the first sampled parameters in the preset time window has a degradation characteristic, the fault type information corresponding to the alarm information is input optical power degradation.

In some other embodiments of this application, the first sampled parameter may include at least two types of parameters. For example, the first sampled parameter may include a photogenerated current and a pre-FEC bit error rate. That the first processing unit determines, based on the read first sampled parameters, the fault type information corresponding to the alarm information may specifically include:
after reading the first sampled parameters in the preset time window, comparing the photogenerated current at the initial moment with the photogenerated current at the last moment, and comparing the pre-FEC bit error rate at the initial moment with the pre-FEC bit error rate at the last moment.

If a difference between the photogenerated current at the initial moment and the photogenerated current at the last moment is less than a first threshold, and a difference between the pre-FEC bit error rate at the initial moment and the pre-FEC bit error rate at the last moment is greater than a third threshold, the fault type information corresponding to the alarm information is optical power multipath interference degradation.

During specific implementation, specific values of the first threshold, the second threshold, the third threshold, and the preset time window may be set according to factors such as an application scenario of the network system.

According to a fifth aspect, an embodiment of this application further provides another fault type determining method. The fault type determining method is applied to a first processing unit in an optical module. The fault type determining method may include:
storing, in a sampled information storage unit, first sampled parameters collected by a sampling unit; and
when identifying alarm information, reading the first sampled parameters in the sampled information storage unit, determining, based on the first sampled parameters, fault type information corresponding to the alarm information, and storing the fault type information in the fault information storage unit.

In the fault type determining method provided in this embodiment of this application, when identifying the alarm information, the first processing unit may determine, based on the first sampled parameters, the fault type information corresponding to the alarm information, and store the fault type information in the fault information storage unit. In this way, functions such as collection, storage, and analysis of the first sampled parameters may be implemented inside the optical module. Subsequently, an electronic device or a network management device reads the fault type information stored in the optical module, and can quickly and accurately determine a fault cause and a fault point location based on a network topology relationship of a communication system. In this way, a fault in the communication system can be quickly corrected, and troubleshooting costs can be reduced.

In a possible implementation, the reading the first sampled parameters in the sampled information storage unit and determining, based on the first sampled parameters, fault type information corresponding to alarm information when identifying the alarm information may specifically include:
when identifying the alarm information, continuing to store, in the sampled information storage unit, the first sampled parameters that are of p sampling points and that are collected by the sampling unit, where p is an integer greater than or equal to 0;
reading the first sampled parameters that are in a preset time window and that are in the sampled information storage unit; and
determining, based on the read first sampled parameters, the fault type information corresponding to the alarm information.

In this embodiment of this application, when identifying the alarm information, the first processing unit continues to store, in the sampled information storage unit, the first sampled parameters that are of the p sampling points and that are collected by the sampling unit, and reads the first sampled parameters that are in the preset time window and that are in the sampled information storage unit, where p is greater than or equal to 0. In other words, when identifying the alarm information, the first processing unit may immediately read the first sampled parameters in the sampled information storage unit, or may delay a period of time before reading the first sampled parameters in the sampled information storage unit. In this way, since the first sampled parameters obtained by the first processing unit after identifying the alarm information is large in data amount, the first processing unit may determine, according to a waveform of the obtained first sampled parameters in the preset time window, the fault type information corresponding to the alarm information. Therefore, accuracy of fault analysis is high.

In some embodiments of this application, the first sampled parameter may include a photogenerated current or an optical signal amplitude. In some cases, the first sampled parameter may alternatively be another parameter. This is not limited herein. The determining, based on the read first sampled parameters, the fault type information corresponding to the alarm information may specifically include:
after reading the first sampled parameters in the preset time window, compare the first sampled parameter at an initial moment with the first sampled parameter at a last moment.

If a difference between the first sampled parameter at the initial moment and the first sampled parameter at the last moment is less than a first threshold, and a fluctuation event occurs in a waveform rule of the first sampled parameters in the preset time window, the fault type information corresponding to the alarm information is input optical power fluctuation;
if a difference between the first sampled parameter at the initial moment and the first sampled parameter at the last moment is greater than the first threshold, the first sampled parameter at the last moment is less than a second threshold, and a fluctuation and descent event occurs in a waveform rule of the first sampled parameters in the preset time window, the fault type information corresponding to the alarm information is an input optical power fluctuation loss;
if a difference between the first sampled parameter at the initial moment and the first sampled parameter at the last moment is greater than the first threshold, the first sampled parameter at the last moment is less than a second threshold, and a quick descent event occurs in a waveform rule of the first sampled parameters in the preset time window, the fault type information corresponding to the alarm information is an input optical power quick loss;
if a difference between the first sampled parameter at the initial moment and the first sampled parameter at the last moment is greater than the first threshold, the first sampled parameter at the last moment is less than a second threshold, and a stepped descent event occurs in a waveform rule of the first sampled parameters in the preset time window, the fault type information corresponding to the alarm information is an input optical power stepped loss; or
if a difference between the first sampled parameter at the initial moment and the first sampled parameter at the last moment is greater than the first threshold, the first sampled parameter at the last moment is greater than a second threshold, and a waveform rule of the first sampled parameters in the preset time window has a degradation characteristic, the fault type information corresponding to the alarm information is input optical power degradation.

In some other embodiments of this application, the first sampled parameter may include at least two types of parameters. For example, the first sampled parameter may include a photogenerated current and a pre-FEC bit error rate. The determining, based on the read first sampled parameters, the fault type information corresponding to the alarm information may specifically include:
after reading the first sampled parameters in the preset time window, comparing the photogenerated current at the initial moment with the photogenerated current at the last moment, and comparing the pre-FEC bit error rate at the initial moment with the pre-FEC bit error rate at the last moment.

If a difference between the photogenerated current at the initial moment and the photogenerated current at the last moment is less than a first threshold, and a difference between the pre-FEC bit error rate at the initial moment and the pre-FEC bit error rate at the last moment is greater than a third threshold, the fault type information corresponding to the alarm information is optical power multipath interference degradation.

According to a sixth aspect, an embodiment of this application further provides a fault type determining apparatus, including a processor and a memory. The memory is configured to store the steps in the fault type determining method in the fifth aspect. The processor is configured to perform the steps stored in the memory.

For a specific implementation of the fault type determining apparatus, refer to the implementation of the fault type determining method in the fifth aspect. Details are not described herein again.

According to a seventh aspect, an embodiment of this application further provides a fault processing method. The fault processing method may be applied to a communication system. The communication system may include an electronic device. The electronic device may include a second processing unit and an optical module. The optical module may include a first processing unit, and a sampling unit, a sampled information storage unit, and a fault information storage unit that are separately electrically connected to the first processing unit.

The fault processing method in this embodiment of this application may include:
The sampling unit collects first sampled parameters, and stores the first sampled parameters in the sampled information storage unit by using the first processing unit;
when identifying alarm information, the optical module sends the alarm information to the second processing unit;
the first processing unit reads the first sampled parameters in the sampled information storage unit, determines, based on the first sampled parameters, fault type information corresponding to the alarm information, and stores the fault type information in the fault information storage unit, where for a specific process in which the first processing unit determines the fault type information, refer to the foregoing description, and details are not described herein again; and
after first preset time after receiving the alarm information, the second processing unit reads the fault type information that corresponds to the alarm information and that is in the fault information storage unit.

In the fault processing method in this embodiment of this application, when identifying the alarm information, the first processing unit in the optical module may determine, based on the first sampled parameters, the fault type information corresponding to the alarm information, and store the fault type information in the fault information storage unit. The second processing unit in the electronic device may read, after first preset time after identifying the alarm information, the fault type information that corresponds to the alarm information and that is in the fault information storage unit, and the electronic device or a network management device can quickly and accurately determine a fault cause and a fault point location based on the fault type information and a network topology relationship of a communication system in which the optical module is located. Therefore, the optical module does not need to transmit a large amount of sampled data to the electronic device. This shortens data transmission time, and reduces data transmission pressure between the optical module and the electronic device. Therefore, after an optical path fault occurs in the communication system in embodiments of this application, delay time required for determining the fault cause and the fault point location is short, and the fault cause and the fault point location can be located in a timely manner.

During specific implementation, the first processing unit in the optical module is connected to the second processing unit through a communication bus, and the first processing unit may send the alarm information to the second processing unit through the communication bus. Alternatively, when the optical module includes an alarm information generation unit, the alarm information generation unit may be connected to the second processing unit through a hardware pin interface, and the alarm information generation unit may send the alarm information to the second processing unit through a level jump of the hardware pin interface. Alternatively, the first processing unit may write the alarm information into the fault information storage unit, and the second processing unit may query the alarm information stored in the fault information storage unit through a communication bus and the first processing unit.

In this embodiment of this application, after identifying the alarm information, the second processing unit needs to wait for the first preset time and then read the fault type information in the fault information storage unit, so that the first processing unit can complete the operation of determining and storing the fault type information within the first preset time. During specific implementation, specific duration of the first preset time may be determined based on an actual calculation amount of the first processing unit, so that the second processing unit can read the fault type information after waiting for the first preset time.

In a possible implementation, the first processing unit may further delete the fault type information from the fault information storage unit after the second processing unit reads the fault type information, so that after reporting the fault type information, the optical module restores to a state of being indicated by no alarm information.

During actual application, the fault processing method in this embodiment of this application may further include:
The first processing unit stores delay prompt information in the fault information storage unit; and
the second processing unit reads the delay prompt information in the fault information storage unit, where the second processing unit may read the delay prompt information before identifying the alarm information, or the second processing unit may read the delay information after identifying the alarm information.

The delay prompt information indicates shortest duration from time when the second processing unit receives the alarm information to time when the second processing unit can read the fault type information corresponding to the alarm information. The first preset time is greater than or equal to the shortest duration. This can ensure that the second processing unit can read the fault type information after waiting for the first preset time. At least the following needs to be considered for the shortest duration: a time length required for the first processing unit to continue to store the first sampled parameters collected by the sampling unit in the sampled information storage unit after the optical module generates the alarm information, a time length required for the first processing unit to read the first sampled parameters in the sampled information storage unit, and a time length required by the first processing unit to determine the fault type information based on the first sampled parameters. During specific implementation, the delay prompt information may be written into the fault information storage unit in a manufacturing process of the optical module.

In some embodiments of this application, the second processing unit in the optical module may determine the fault cause based on the read fault type information and a network topology relationship of a network system in which the optical module is located. The steps specifically include:
If identifying the fault type information as an input optical power stepped loss, the second processing unit determines that the fault cause is a device power-off fault;
if identifying the fault type information as an input optical power quick loss, the second processing unit determines that the fault cause is an optical jumper fall-off fault;
if identifying the fault type information as input optical power degradation, the second processing unit determines that the fault cause is an optical jumper bending fault;
if identifying the fault type information as input optical power fluctuation, the second processing unit determines, based on the network topology relationship of the network system, a cable sharing relationship of the optical module generating the alarm information; and if an optical module that shares a same cable with and belongs to the same electronic device as the optical module generating the alarm information is proper, or there is no optical module that shares a same cable with and belongs to the same electronic device as the optical module generating the alarm information, determines that the fault cause is an optical jumper vibration fault; or if the fault type of at least two optical modules that share a same cable and belong to the same electronic device is input optical power fluctuation, determines that the fault cause is an optical cable vibration fault;
if identifying the fault type information as an input optical power fluctuation loss, the second processing unit determines, based on the network topology relationship of the network system, a cable sharing relationship of the optical module generating the alarm information; and if an optical module that shares a same cable with and belongs to the same electronic device as the optical module generating the alarm information is proper, or there is no optical module that shares a same cable with and belongs to the same electronic device as the optical module generating the alarm information, determines that the fault cause is an optical jumper breakage fault; or if the fault type of at least two optical modules that share a same cable and belong to the same electronic device is input optical power fluctuation, determines that the fault cause is an optical cable breakage fault; or
if identifying the fault type information as optical power multipath interference degradation, the second processing unit determines that the fault cause is an optical path quality degradation fault.

In conclusion, the electronic device can accurately determine the fault cause based on information such as the fault type information and fault generation time information of the optical module in combination with information such as fault type information and fault generation time of another optical module. In addition, after determining the fault cause, the electronic device may further push information such as the fault cause and the fault point location to the user.

In some other embodiments of this application, the electronic device may upload, to the network management device, information such as the fault type information and fault generation time information that correspond to the alarm information, and the network management device may determine the fault cause based on the read fault type information and a network topology relationship of a network system in which the optical module is located. The steps specifically include:
If identifying the fault type information as an input optical power stepped loss, the network management device determines that the fault cause is a device power-off fault;
if identifying the fault type information as an input optical power quick loss, the network management device determines that the fault cause is an optical jumper fall-off fault;
if identifying the fault type information as input optical power degradation, the network management device determines that the fault cause is an optical jumper bending fault;
if identifying the fault type information as input optical power fluctuation, the network management device determines, based on the network topology relationship of the network system, a cable sharing relationship of the optical module generating the alarm information; and if an optical module that shares a same cable with the optical module generating the alarm information is proper, or there is no optical module that shares a same cable with the optical module generating the alarm information, determines that the fault cause is an optical jumper vibration fault; or if the fault type of at least two optical modules that share a same cable is input optical power fluctuation, determines that the fault cause is an optical cable vibration fault;
if identifying the fault type information as an input optical power fluctuation loss, the network management device determines, based on the network topology relationship of the network system, a cable sharing relationship of the optical module generating the alarm information; and if an optical module that shares a same cable with the optical module generating the alarm information is proper, or there is no optical module that shares a same cable with as the optical module generating the alarm information, determines that the fault cause is an optical jumper breakage fault; or if the fault type of at least two optical modules that share a same cable is input optical power fluctuation, determines that the fault cause is an optical cable breakage fault; or
if identifying the fault type information as optical power multipath interference degradation, the network management device determines that the fault cause is an optical path quality degradation fault.

In conclusion, the network management device can accurately determine the fault cause based on information such as the fault type information and fault generation time information of the optical module in combination with information such as fault type information and fault generation time of another optical module. In addition, after determining the fault cause, the network management device may further push information such as the fault cause and the fault point location to the user.

The foregoing describes a specific process in which the electronic device or the network management device determines the fault cause and the fault point. During specific implementation, in another fault scenario, the electronic device or the network management device may also use a similar method to determine the fault cause and the fault point location. Examples are not described one by one herein.

In embodiments of this application, a process of determining the fault cause and the fault point location may be implemented in the electronic device, or may be implemented in the network management device, or the electronic device may preliminarily determine the fault cause and the fault point location, and then the network management device performs secondary determining. Through a combination of the electronic device and the network management device, effect of accurately determining the fault cause and the fault point location is achieved.

### BRIEF DESCRIPTION OF DRAWINGS

FIG. 1 is a diagram of a structure of a communication system according to an embodiment of this application;
FIG. 2 is a diagram of another structure of a communication system according to an embodiment of this application;
FIG. 3 is a diagram of another structure of a communication system according to an embodiment of this application;
FIG. 4 is a diagram of another structure of a communication system according to an embodiment of this application;
FIG. 5 is a diagram of another structure of a communication system according to an embodiment of this application;
FIG. 6 is a diagram of a structure of an optical-to-electrical conversion module according to an embodiment of this application;
FIG. 7 is a diagram of a structure of an optical amplification module according to an embodiment of this application;
FIG. 8 is a diagram of a structure of an optical switching module according to an embodiment of this application;
FIG. 9a is a diagram of a partial structure of an optical-to-electrical conversion module according to an embodiment of this application;
FIG. 9b is a diagram of another partial structure of an optical-to-electrical conversion module according to an embodiment of this application;
FIG. 9c is a diagram of another partial structure of an optical-to-electrical conversion module according to an embodiment of this application;
FIG. 9d is a diagram of another structure of a communication system according to an embodiment of this application;
FIG. 10 is a diagram of another structure of a communication system according to an embodiment of this application;
FIG. 11 is a diagram of another structure of an optical-to-electrical conversion module according to an embodiment of this application;
FIG. 12 is a diagram of another structure of an optical-to-electrical conversion module according to an embodiment of this application;
FIG. 13 is a diagram of a structure of an electronic device according to an embodiment of this application;
FIG. 14 is a diagram of another structure of an electronic device according to an embodiment of this application;
FIG. 15 is a diagram of another structure of a communication system according to an embodiment of this application;
FIG. 16 is a diagram of a communication system in which a device power-off fault occurs according to an embodiment of this application;
FIG. 17 is a sampling diagram obtained by collecting first sampled parameters by a second optical module when a device power-off fault occurs;
FIG. 18 is a diagram of a communication system in which an optical jumper fall-off fault occurs according to an embodiment of this application;
FIG. 19 is a sampling diagram obtained by collecting first sampled parameters by a second optical module when an optical jumper fall-off fault occurs;
FIG. 20 is a diagram of a communication system in which an optical cable breakage fault or an optical jumper breakage fault occurs according to an embodiment of this application;
FIG. 21 shows sampling diagrams obtained by collecting first sampled parameters by a second optical module and a fourth optical module when an optical cable breakage fault occurs;
FIG. 22 shows sampling diagrams obtained by collecting first sampled parameters by a second optical module and a fourth optical module when an optical jumper breakage fault occurs;
FIG. 23 is another diagram of a communication system in which an optical cable breakage fault or an optical jumper breakage fault occurs according to an embodiment of this application;
FIG. 24 is a diagram of a communication system in which an optical jumper bending fault occurs according to an embodiment of this application;
FIG. 25 is a sampling diagram obtained by collecting first sampled parameters by a second optical module when an optical jumper bending fault occurs;
FIG. 26 is a diagram of a communication system in which an optical cable vibration fault or an optical jumper vibration fault occurs according to an embodiment of this application;
FIG. 27 shows sampling diagrams obtained by collecting first sampled parameters by a second optical module and a fourth optical module when an optical cable vibration fault occurs;
FIG. 28 shows sampling diagrams obtained by collecting first sampled parameters by a second optical module and a fourth optical module when an optical jumper vibration fault occurs;
FIG. 29 is another diagram of a communication system in which an optical cable vibration fault or an optical jumper vibration fault occurs according to an embodiment of this application;
FIG. 30 is a diagram of a communication system in which an optical path quality degradation fault occurs according to an embodiment of this application;
FIG. 31 shows sampling diagrams obtained by collecting first sampled parameters by a second optical module when an optical path quality degradation fault occurs;
FIG. 32 shows diagrams of waveforms of first sampled parameters corresponding to different fault type information according to an embodiment of this application;
FIG. 33 shows diagrams of waveforms of first sampled parameters corresponding to an optical path quality degradation fault according to an embodiment of this application;
FIG. 34 is a flowchart of a fault type determining method according to an embodiment of this application;
FIG. 35 is a flowchart of extracting feature parameters of first sampled parameters by a first processing unit according to an embodiment of this application;
FIG. 36 is a flowchart of determining fault type information by a first processing unit according to an embodiment of this application;
FIG. 37 is a flowchart of another fault type determining method according to an embodiment of this application;
FIG. 38 is a diagram of a structure of a fault type determining apparatus according to an embodiment of this application.
FIG. 39 is a flowchart of a fault processing method according to an embodiment of this application;
FIG. 40 is another flowchart of a fault processing method according to an embodiment of this application;
FIG. 41 is another flowchart of a fault processing method according to an embodiment of this application; and
FIG. 42 is another flowchart of a fault processing method according to an embodiment of this application.

### Reference numerals:

11-electronic device; 11a-second processing unit; 111-first electronic device; 112-second electronic device; 113-third electronic device; 114-fourth electronic device; 12-optical module; 12a-optical-to-electrical conversion module; 12b-optical amplification module; 12c-optical switching module; 121-first optical module; 122-second optical module; 122a-first submodule; 122b-second submodule; 123-third optical module; 124-fourth optical module; 12j-J^{th} optical module; 13-optical jumper; 131-first optical jumper; 132-second optical jumper; 133-third optical jumper; 134-fourth optical jumper; 135-fifth optical jumper; 136-sixth optical jumper; 137-seventh optical jumper; 138-eighth optical jumper; 14-communication optical cable; 141-first communication optical cable; 142-second communication optical cable; 151-first power supply line; 152-second power supply line; 153-third power supply line; 154-fourth power supply line; 16-network management device; 171-first optical distribution frame; 172-second optical distribution frame; 173-third optical distribution frame; 18-board; 181-first board; 182-second board; 18a-third processing unit; 18m-M^{th} board; 201-first processing unit; 2011-processor; 2012-memory; 202-sampling unit; 202a-first sampling unit; 202b-second sampling unit; 203-sampled information storage unit; 204-fault information storage unit; 205-alarm information generation unit; 206-optical-to-electrical conversion unit; 207-electrical-to-optical conversion unit; 208-optical amplification unit; 209-optical switching unit; 31-photodetector; 311-first photodetector; 31n-N^{th} photodetector; 32-transimpedance amplifier; 33-optical splitter; 331-first optical splitter; 33n-N^{th} optical splitter; 34-optical amplifier; 35-optical switching component; 36-optical digital signal processor; 37-wavelength division demultiplexer.

### DESCRIPTION OF EMBODIMENTS

To make the objectives, technical solutions, and advantages of this application clearer, the following further describes this application in detail with reference to the accompanying drawings.

It should be noted that same reference numerals in the accompanying drawings of this application represent same or similar structures, and therefore repeated descriptions thereof are omitted. Expressions of locations and directions in this application are described by using the accompanying drawings as an example. However, changes may also be made as required, and all the changes fall within the protection scope of this application. The accompanying drawings in this application are merely used to illustrate relative position relationships and do not represent an actual scale. In addition, it should be understood that in description of this application, terms such as "first" and "second" are merely used for distinguishing and description, but should not be understood as indicating or implying relative importance, or should not be understood as indicating or implying a sequence.

To resolve a problem that a fault cause and a fault point location cannot be identified or reported in a timely manner after an optical path fault occurs in a communication system, embodiments of this application provide an optical module, an electronic device, a communication system, and a related processing method. The communication system may be applicable to any communication network that uses optical fibers as a main information transmission medium. The electronic device may be an optical transmission device, an optical access device, an optical switching device, an optical amplification device, a router, a switch, a radio base station, a wireless remote access device, a radio baseband signal processing device, or the like. The optical module may be an optical-to-electrical conversion module, an optical amplification module, an optical switching module, or another functional module.

The following describes several structures of the communication system in embodiments of this application with reference to the accompanying drawings.

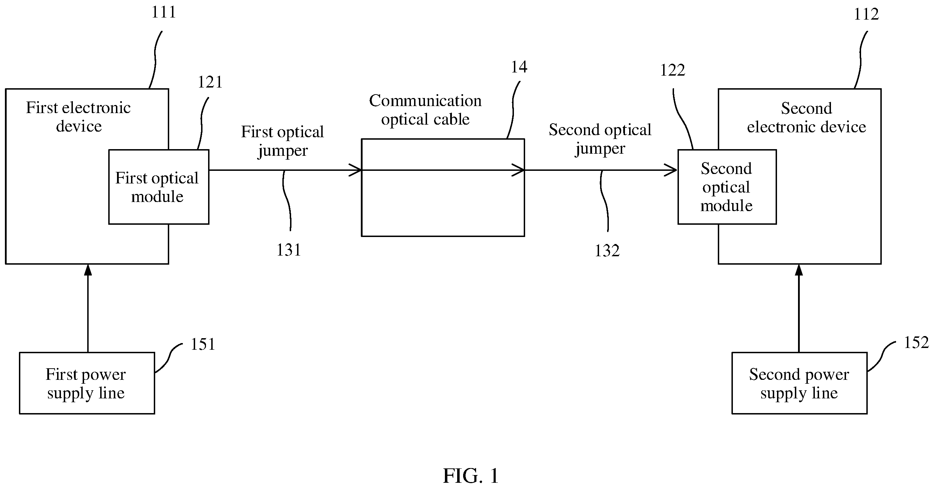

FIG. 1 is a diagram of a structure of a communication system according to an embodiment of this application. As shown in FIG. 1, the communication system in this embodiment of this application may include an electronic device and a power supply line. The power supply line is configured to supply power to the electronic device. The electronic device may include at least one optical module. Optical modules in different electronic devices may implement an optical signal connection through an optical jumper, a communication optical cable, and the like. For example, the communication system shown in FIG. 1 may at least include a first electronic device 111 and a second electronic device 112. An optical signal output by a first optical module 121 in the first electronic device 111 is input to a communication optical cable 14 through a first optical jumper 131. An optical signal output by the communication optical cable 14 is input to a second optical module 122 in the second electronic device 112 through a second optical jumper 132. In this way, transmission of optical signals between the first optical module 121 and the second optical module 122 is implemented. A first power supply line 151 is connected to the first electronic device 111. The first power supply line 151 is configured to supply power to the first electronic device 111. A second power supply line 152 is connected to the second electronic device 112. The second power supply line 152 is configured to supply power to the second electronic device 112.

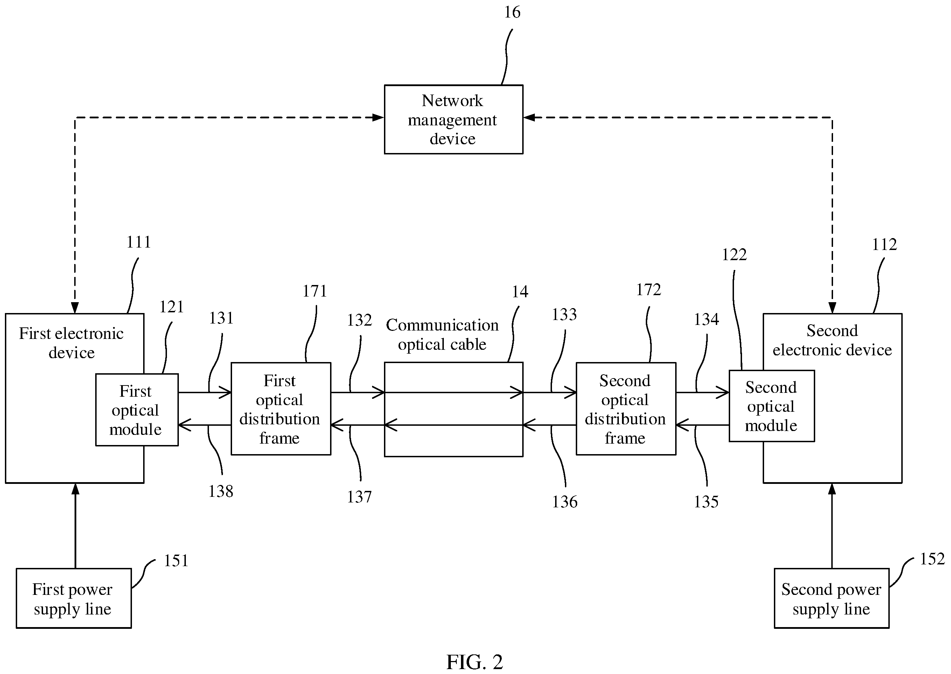

FIG. 2 is a diagram of another structure of a communication system according to an embodiment of this application. Refer to FIG. 1 and FIG. 2. Compared with the communication system shown in FIG. 1, the communication system shown in FIG. 2 may further include a network management device 16 configured to perform unified management and control on the entire communication system. In addition, the first optical module 121 and the second optical module 122 in the communication system shown in FIG. 2 may implement bidirectional transmission of optical signals. To be specific, the first optical module 121 may send an optical signal to the second optical module 122, and may also receive an optical signal sent by the second optical module 122, and the second optical module 122 may receive the optical signal sent by the first optical module 121, and may also send the optical signal to the first optical module 121. In addition, the communication system shown in FIG. 2 may further include optical distribution frames (optical distribution frame, ODF), including a first optical distribution frame 171 and a second optical distribution frame 172. The first optical distribution frame 171 is located between the first optical module 121 and the communication optical cable 14. The second optical distribution frame 172 is located between the second optical module 122 and the communication optical cable 14. Corresponding optical jumpers are added. An optical signal output by the first optical module 121 is input to the communication optical cable 14 through the first optical jumper 131, the first optical distribution frame 171, and the second optical jumper 132. An optical signal output by the communication optical cable 14 is input to the second optical module 122 through a third optical jumper 133, the second optical distribution frame 172, and a fourth optical jumper 134. An optical signal output by the second optical module 122 is input to the communication optical cable 14 through a fifth optical jumper 135, the second optical distribution frame 172, and a sixth optical jumper 136. An optical signal output by the communication optical cable 14 is input to the first optical module 121 through a seventh optical jumper 137, the first optical distribution frame 171, and an eighth optical jumper 138. In this way, the bidirectional transmission of the optical signals between the first optical module 121 and the second optical module 122 is implemented. During specific implementation, if the first electronic device 111 includes at least two optical modules, the eighth optical jumper 138 may be connected to the first optical module 121, or the eighth optical jumper 138 may be connected to another optical module in the first electronic device 111.

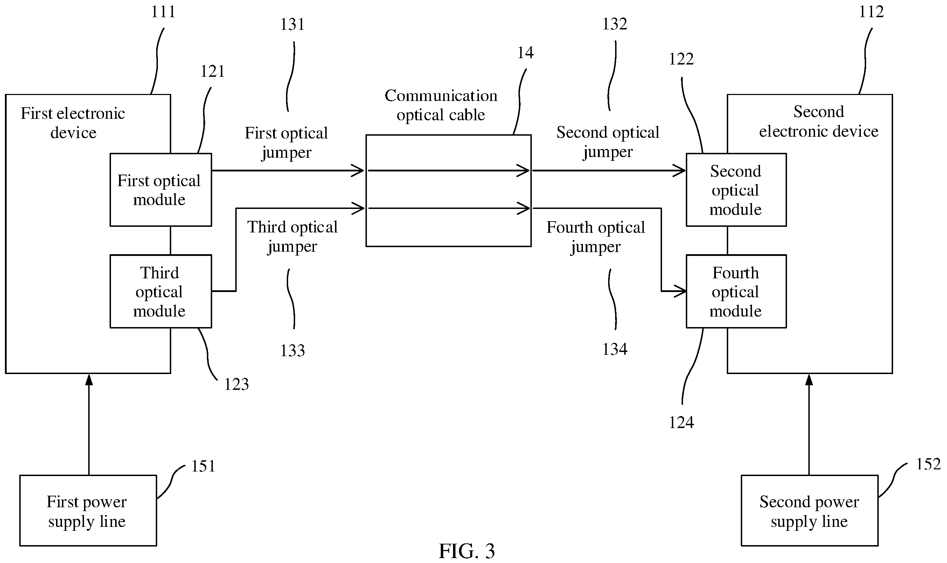

FIG. 3 is a diagram of another structure of a communication system according to an embodiment of this application. As shown in FIG. 3, an electronic device may include two or more optical modules. For example, a first electronic device 111 may include a first optical module 121 and a third optical module 123. A second electronic device 112 may include a second optical module 122 and a fourth optical module 124. An optical signal output by the first optical module 121 may be transmitted to the second optical module 122 through a first optical jumper 131, a communication optical cable 14, and a second optical jumper 132. An optical signal output by the third optical module 123 may be transmitted to the fourth optical module 124 through a third optical jumper 133, the communication optical cable 14, and a fourth optical jumper 134. Certainly, the first optical module 121 and the second optical module 122 may also implement bidirectional transmission of optical signals, and the third optical module 123 and the fourth optical module 124 may also implement bidirectional transmission of optical signals. In other words, the first electronic device 111 may transmit an optical signal to the second electronic device 112 by using two optical modules. When the first electronic device 111 and the second electronic device 112 include a plurality of optical modules, the first electronic device 111 may also transmit optical signals to the second electronic device 112 by using the plurality of optical modules.

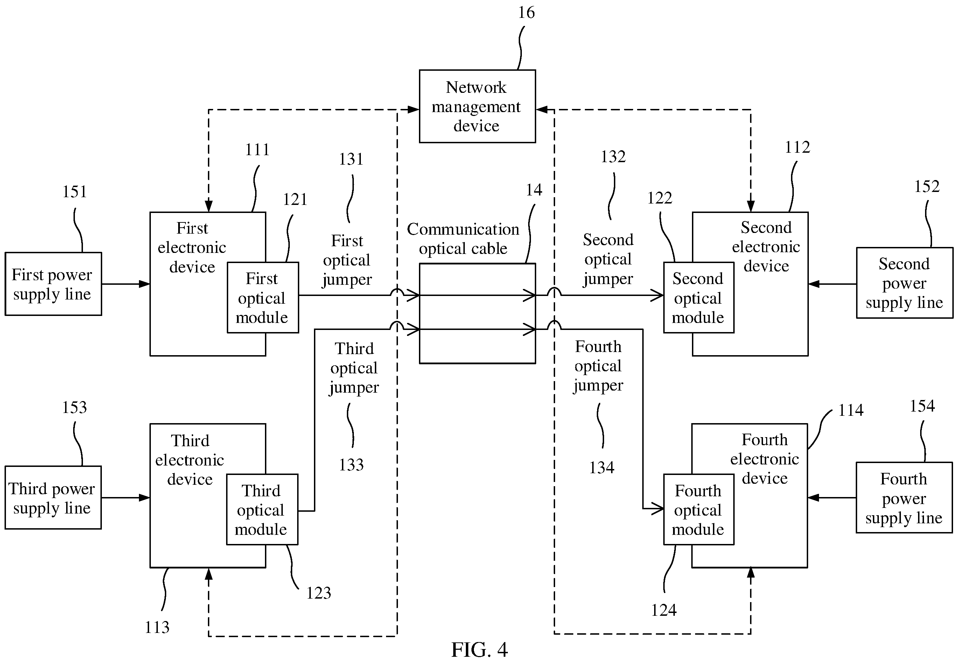

FIG. 4 is a diagram of another structure of a communication system according to an embodiment of this application. As shown in FIG. 4, optical modules in different electronic devices may send optical signals to optical modules in a same electronic device or different electronic devices through a same communication optical cable. For example, the communication system shown in FIG. 4 may include a first electronic device 111, a second electronic device 112, a third electronic device 113, and a fourth electronic device 114. A first power supply line 151 is configured to supply power to the first electronic device 111. A second power supply line 152 is configured to supply power to the second electronic device 112. A third power supply line 153 is configured to supply power to the third electronic device 113. A fourth power supply line 154 is configured to supply power to the fourth electronic device 114. The first electronic device 111 may include a first optical module 121. The second electronic device 112 may include a second optical module 122. The third electronic device 113 may include a third optical module 123. The fourth electronic device 114 may include a fourth optical module 124. The first optical module 121 and the third optical module 123 that belong to different electronic devices may send, through a same communication optical cable 14, optical signals to the second optical module 122 and the fourth optical module 124 that belong to different electronic devices, respectively.

The foregoing describes several structures of the communication system in embodiments of this application. During specific implementation, the communication system may alternatively have another structure. Components and connection relationships in the communication system may be specifically set according to an actual application scenario. Details are not described herein again.

The following describes a specific structure of an optical module in embodiments of this application with reference to the accompanying drawings.

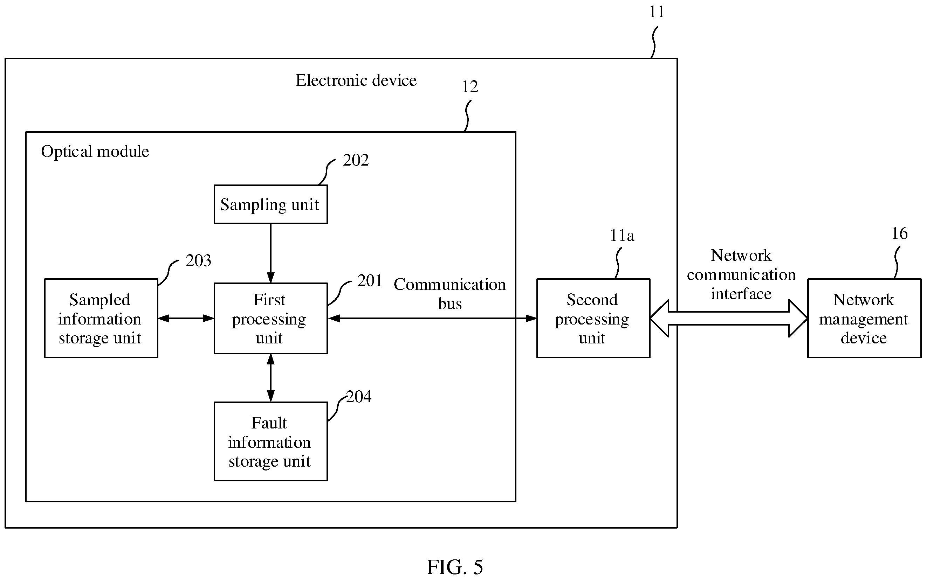

FIG. 5 is a diagram of another structure of a communication system according to an embodiment of this application. As shown in FIG. 5, an optical module 12 in this embodiment of this application may include a first processing unit 201, and a sampling unit 202, a sampled information storage unit 203, and a fault information storage unit 204 that are separately electrically connected to the first processing unit 201.

The sampling unit 202 is configured to collect first sampled parameters, and store the first sampled parameters in the sampled information storage unit 203 by using the first processing unit 201. In a possible implementation, the sampling unit 202 may collect the first sampled parameters in real time, and transmit the collected first sampled parameters to the first processing unit 201 in real time. The first processing unit 201 transmits the first sampled parameters to the sampled information storage unit 203 in real time. The sampled information storage unit 203 receives and stores the first sampled parameters in real time. During specific implementation, the first sampled parameters collected by the sampling unit 202 may be data at a micro-granularity. The micro-granularity may be a sampling interval less than 100 milliseconds. For example, the first sampled parameter may include a photogenerated current that represents an optical power of an input optical signal.

The first processing unit 201 is configured to: when identifying alarm information, read the first sampled parameters in the sampled information storage unit 203, determine, based on the first sampled parameters, fault type information corresponding to the alarm information, and store the fault type information in the fault information storage unit 204.

In the optical module provided in this embodiment of this application, when identifying the alarm information, the first processing unit may determine, based on the first sampled parameters, the fault type information corresponding to the alarm information, and store the fault type information in the fault information storage unit. In this way, functions such as collection, storage, and analysis of the first sampled parameters may be implemented inside the optical module. Subsequently, an electronic device or a network management device reads the fault type information stored in the optical module, and can quickly and accurately determine a fault cause and a fault point location based on a network topology relationship of a communication system. Therefore, the optical module does not need to transmit a large amount of sampled data to the electronic device. This shortens data transmission time, and reduces data transmission pressure between the optical module and the electronic device. Therefore, after an optical path fault occurs in the communication system in embodiments of this application, delay time required for determining the fault cause and the fault point location is short, and the fault cause and the fault point location can be located in a timely manner.

Still refer to FIG. 5. In this embodiment of this application, the first processing unit 201 may be a component having a data processing function, for example, a central processing unit (central processing unit, CPU) or a microprocessor (Microcontroller Unit, MCU). The sampling unit 202 may be a sampling circuit including an analog-to-digital converter. The sampled information storage unit 203 and the fault information storage unit 204 may be specific areas of a memory in the optical module 12, or at least one independent storage chip may be disposed in the optical module 12, and the storage chip is used as the sampled information storage unit 203 and/or the fault information storage unit 204. That is, the sampled information storage unit 203 and the fault information storage unit 204 may separately use one storage chip, or may share a same storage chip. This is merely an example for description, and specific implementations of the sampled information storage unit 203 and the fault information storage unit 204 are not limited.

To help the electronic device or the network management device subsequently determine the fault cause and the fault point location, the fault information storage unit 204 may store the fault type information, and the fault information storage unit 204 may further store fault generation time information corresponding to the alarm information.

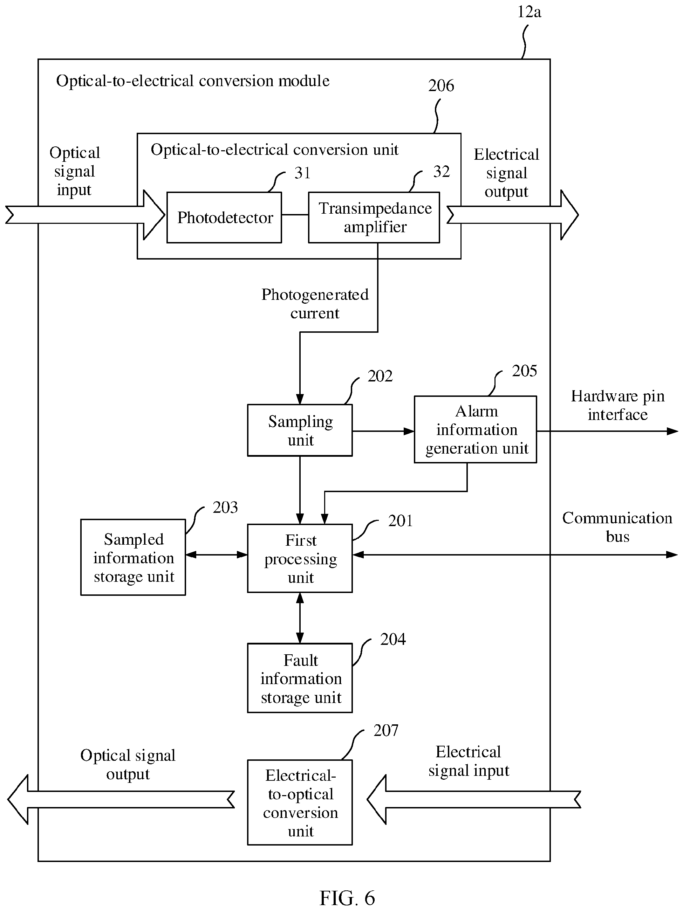

In a possible implementation, the optical module in this embodiment of this application may be an optical-to-electrical conversion module. FIG. 6 is a diagram of a structure of an optical-to-electrical conversion module according to an embodiment of this application. As shown in FIG. 6, in addition to the first processing unit 201, the sampling unit 202, the sampled information storage unit 203, and the fault information storage unit 204, the optical-to-electrical conversion module 12a may further include an optical-to-electrical conversion unit 206 and an electrical-to-optical conversion unit 207. The optical-to-electrical conversion unit 206 is configured to convert an input optical signal into an electrical signal, and output the electrical signal obtained through conversion to an electronic device. The electrical-to-optical conversion unit 207 is configured to convert an electrical signal output by the electronic device into an optical signal. The optical-to-electrical conversion unit 206 may include a photodetector 31 and a transimpedance amplifier 32. The photodetector 31 is configured to convert an input optical signal into a photogenerated current signal that carries information, and input the photogenerated current signal to the transimpedance amplifier 32. The transimpedance amplifier 32 is configured to convert the photogenerated current signal into a voltage signal and amplify the voltage signal.

In this embodiment of this application, a direct current component of the photogenerated current signal may be defined as a photogenerated current. The photogenerated current is in a linear relationship with a magnitude of an optical power of the input optical signal. A larger photogenerated current indicates a larger optical power of the input optical signal, and a smaller photogenerated current indicates a smaller optical power of the input optical signal. Therefore, the photogenerated current may be used to represent the magnitude of the optical power. The sampling unit 202 may collect a photogenerated current output by the optical-to-electrical conversion unit 206, and may use the photogenerated current as the foregoing first sampled parameter. Functions of detecting the photogenerated current and transmitting the photogenerated current to the sampling unit 202 may be integrated into the photodetector 31, or may be integrated into the transimpedance amplifier 32. In FIG. 6, an example in which the functions are integrated into the transimpedance amplifier 32 is used for illustration.

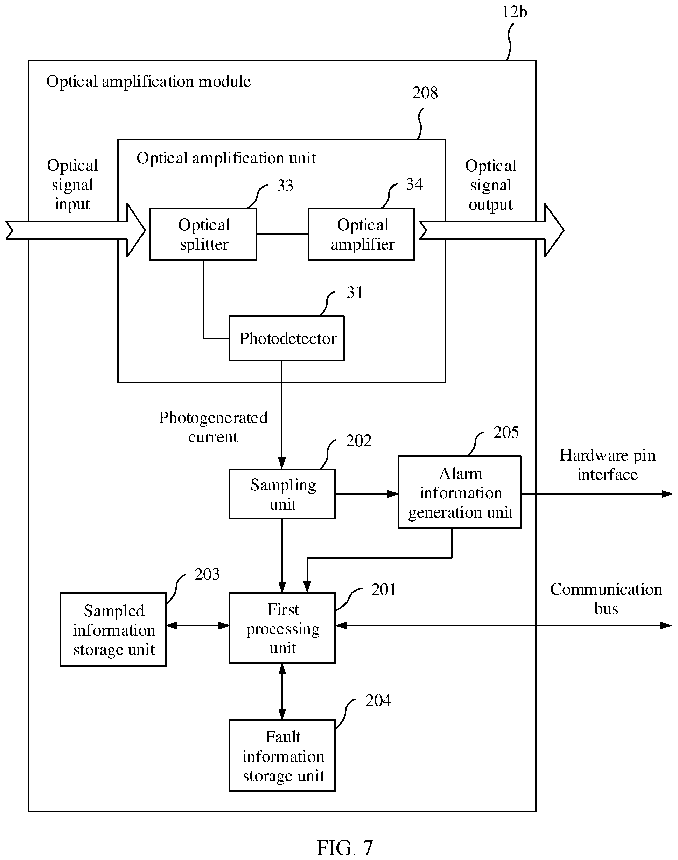

In another possible implementation, the optical module in this embodiment of this application may be an optical amplification module. FIG. 7 is a diagram of a structure of an optical amplification module according to an embodiment of this application. As shown in FIG. 7, in addition to the first processing unit 201, the sampling unit 202, the sampled information storage unit 203, and the fault information storage unit 204, the optical amplification module 12b may further include an optical amplification unit 208. The optical amplification unit 208 is configured to amplify an input optical signal to output an optical signal with a higher optical power. The optical amplification unit 208 may include an optical splitter 33, a photodetector 31, and an optical amplifier 34. The optical splitter 33 is configured to divide an input optical signal into two parts. One part is input to the optical amplifier 34, and the other part is input to the photodetector 31. The optical amplifier 34 is configured to amplify and output the input optical signal. The photodetector 31 is configured to convert the input optical signal into a photogenerated current signal. Because the optical amplification module 12b does not need to process an electrical signal included in the optical signal, the photodetector 31 detects only a direct current component (namely, a photogenerated current) of the photogenerated current signal. The photodetector 31 is further configured to transmit the photogenerated current to the sampling unit 202. The sampling unit 202 may collect the photogenerated current output by the photodetector 31, and may use the photogenerated current as the foregoing first sampled parameter.

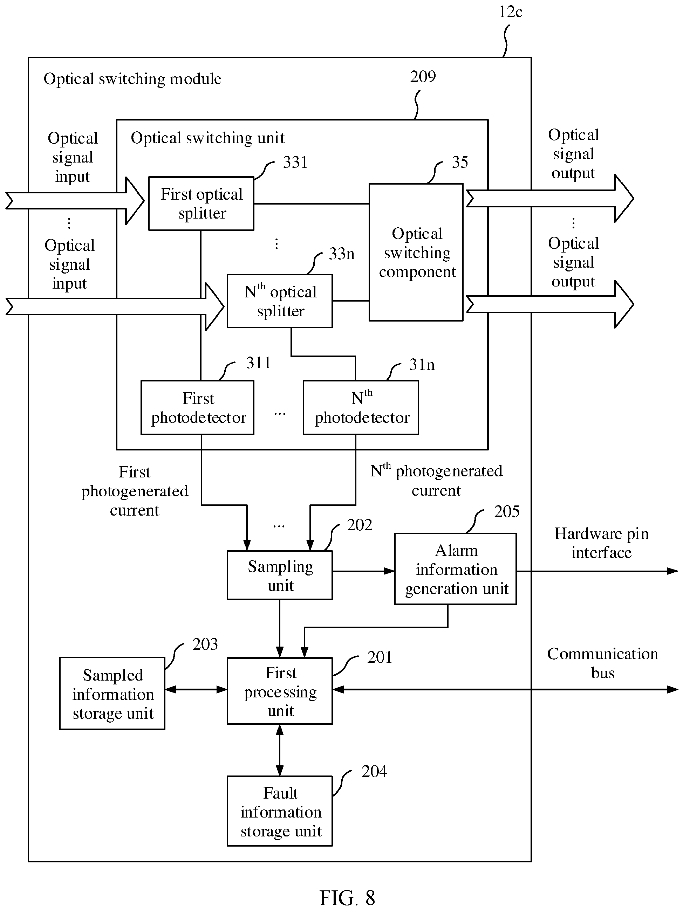

In another possible implementation, the optical module in this embodiment of this application may be an optical switching module. FIG. 8 is a diagram of a structure of an optical switching module according to an embodiment of this application. As shown in FIG. 8, in addition to the first processing unit 201, the sampling unit 202, the sampled information storage unit 203, and the fault information storage unit 204, the optical switching module 12c may further include an optical switching unit 209. The optical switching unit 209 is configured to perform channel or wavelength switching on optical signals input through a plurality of ports, and output switched optical signals to different output ports. An input optical signal or an output optical signal of each port may include an optical signal of one or more wavelengths. The optical switching unit 209 may include a plurality of optical splitters (for example, a first optical splitter 331, ..., and an N^{th} optical splitter 33n in FIG. 8), a plurality of photodetectors (for example, a first photodetector 311, ..., and an N^{th} photodetector 31n in FIG. 8), and an optical switching component 35. The optical splitter is configured to divide an input optical signal into two parts. One part is input to the optical switching component 35, and the other part is input to a corresponding photodetector. The optical switching component 35 is configured to perform channel or wavelength switching on an input optical signal for outputting. The photodetector is configured to convert an input optical signal into a photogenerated current signal. Because the optical switching module 12c does not need to process an electrical signal included in the optical signal, the photodetector detects only a direct current component (namely, a photogenerated current) of the photogenerated current signal. The photodetector is further configured to transmit the photogenerated current to the sampling unit 202. The sampling unit 202 may collect the photogenerated current output by the photodetector, and may use the photogenerated current as the foregoing first sampled parameter.

In some embodiments of this application, when the optical module is an optical-to-electrical conversion module, an optical amplification module, an optical switching module, or another functional module, the first sampled parameter may include a photogenerated current. In some other embodiments of this application, when the optical module is an optical-to-electrical conversion module, there may be a plurality of implementations of the first sampled parameters. The following provides detailed descriptions with reference to the accompanying drawings.

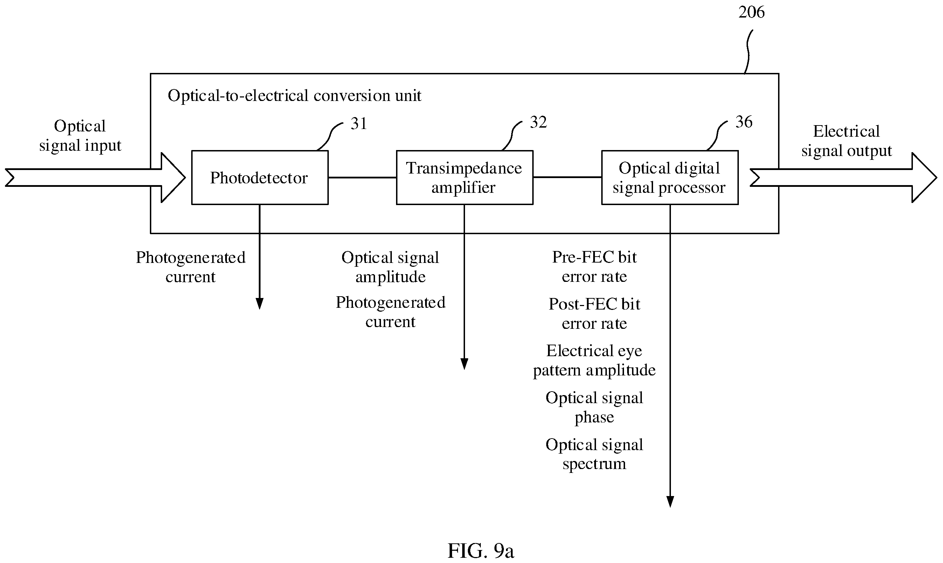

FIG. 9a is a diagram of a partial structure of an optical-to-electrical conversion module according to an embodiment of this application. As shown in FIG. 9a, the optical-to-electrical conversion unit 206 may include a photodetector 31, a transimpedance amplifier 32, and an optical digital signal processor 36 (Optical Digital Signal Processor, ODSP). The photodetector 31 is configured to convert an input optical signal into a photogenerated current signal that carries information, and input the photogenerated current signal to the transimpedance amplifier 32. The transimpedance amplifier 32 is configured to convert the photogenerated current signal into a voltage signal and amplify the voltage signal, and input an electrical signal obtained through amplification to the optical digital signal processor 36. The optical digital signal processor 36 is configured to convert the electrical signal into a digital electrical signal by sampling, perform digital signal processing, and output a processed electrical signal to the electronic device. A real-time parameter that may be output by the photodetector 31 includes but is not limited to a photogenerated current, and the like. A real-time parameter that may be output by the transimpedance amplifier 32 includes but is not limited to an optical signal amplitude, a photogenerated current, and the like. The photogenerated current is a direct current component of the input optical signal. The optical signal amplitude is a difference between a high level and a low level of the input optical signal. Both the photogenerated current and the optical signal amplitude have a positive correlation with the optical power of the input optical signal. The real-time parameter that may be output by the optical digital signal processor 36 includes but is not limited to a pre-FEC bit error rate, a post-FEC bit error rate, an electrical eye pattern amplitude, an optical signal phase, an optical signal spectrum, and the like. In other words, the optical-to-electrical conversion unit 206 may output a plurality of parameters: a photogenerated current, an optical signal amplitude, a pre-FEC bit error rate, a post-FEC bit error rate, an electrical eye pattern amplitude, an optical signal phase, and an optical signal spectrum. The sampling unit may sample any parameter output by the optical-to-electrical conversion unit 206. That is, any one of parameters such as the photogenerated current, the optical signal amplitude, the pre-FEC bit error rate, the post-FEC bit error rate, the electrical eye pattern amplitude, the optical signal phase, and the optical signal spectrum that are output by the optical-to-electrical conversion unit 206 may be used as the foregoing first sampled parameter.

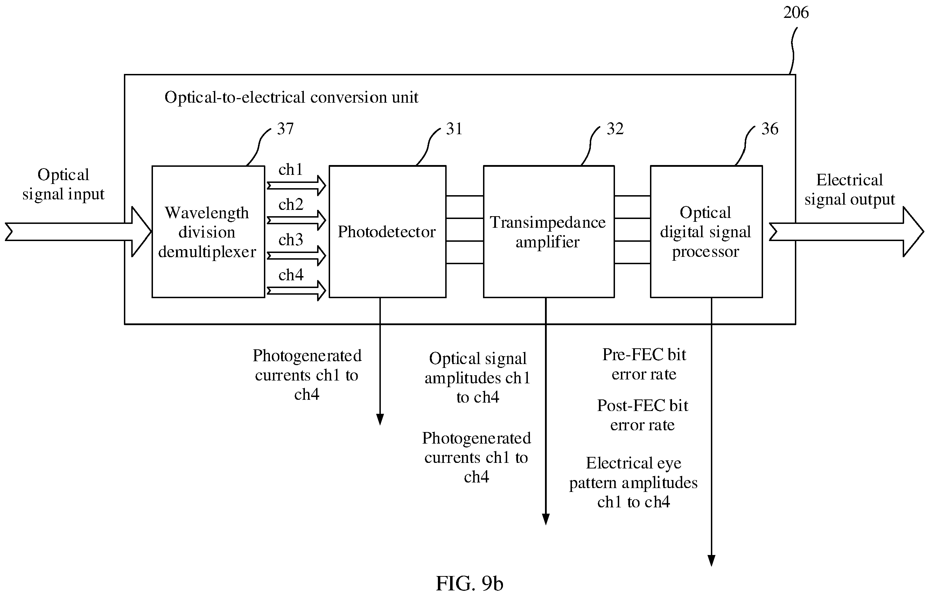

During actual application, the optical-to-electrical conversion module may have a plurality of optical signal transmission channels, and the optical-to-electrical conversion unit in the optical-to-electrical conversion module may output more parameters. FIG. 9b is a diagram of another partial structure of an optical-to-electrical conversion module according to an embodiment of this application. As shown in FIG. 9b, the optical-to-electrical conversion module may be a wavelength division optical-to-electrical conversion module. The optical-to-electrical conversion unit 206 may include a wavelength division demultiplexer 37, a photodetector 31, and a transimpedance amplifier 32. The wavelength division demultiplexer 37 is configured to demultiplex an input multi-wavelength optical signal, so as to output optical signals of a plurality of channels. For example, four channels (ch1, ch2, ch3, and ch4, respectively) are used as an example in the figure for illustration. During actual application, a quantity of channels may be any integer greater than or equal to 2. For example, the quantity of channels may be 2, 4, 6, or 8. The photodetector 31 is configured to convert the multi-wavelength optical signal into a photogenerated current signal that carries information, and transmit the photogenerated current signal obtained through conversion to the transimpedance amplifier 32. The transimpedance amplifier 32 is configured to convert the photogenerated current signal into a voltage signal and amplify the voltage signal. Optionally, the optical-to-electrical conversion unit 206 may further include an optical digital signal processor 36. The optical digital signal processor 36 is configured to collect a voltage signal obtained through amplification of the transimpedance amplifier 32, convert the voltage signal into a digital electrical signal, perform digital signal processing, and output a processed electrical signal to the electronic device.

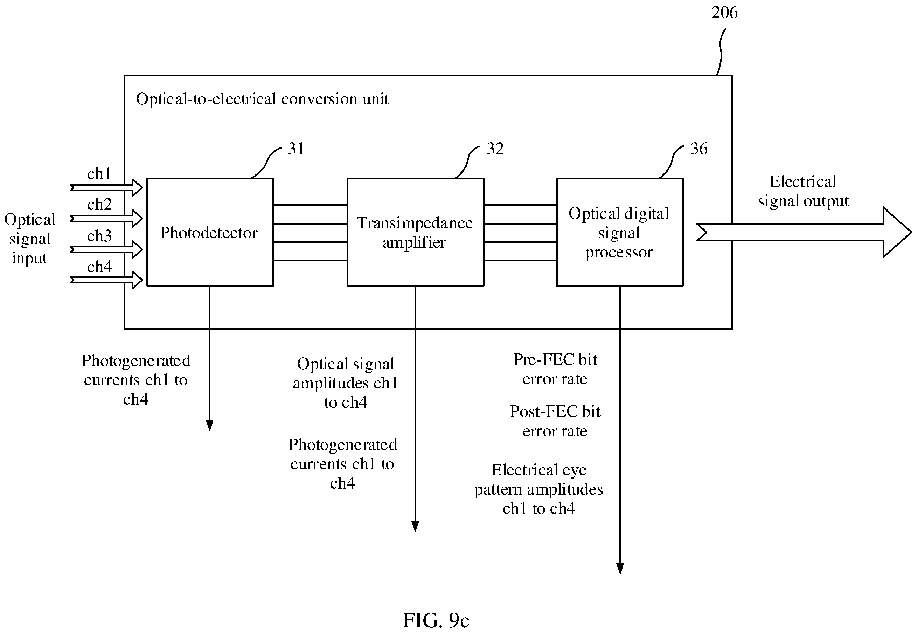

FIG. 9c is a diagram of another partial structure of an optical-to-electrical conversion module according to an embodiment of this application. As shown in FIG. 9c, the optical-to-electrical conversion module may be a parallel single mode (Parallel Single Mode, PSM) optical-to-electrical conversion module. The optical-to-electrical conversion unit 206 may include a photodetector 31 and a transimpedance amplifier 32. Optionally, the optical-to-electrical conversion unit 206 may further include an optical digital signal processor 36. Optical signals of a plurality of channels are input to the photodetector 31 through a plurality of optical fibers. Four channels (ch1, ch2, ch3, and ch4, respectively) are used as an example in the figure. During actual application, a quantity of channels may be any integer greater than or equal to 2. For example, the quantity of channels may be 2, 4, 6, or 8. The photodetector 31 is configured to convert the optical signals of the plurality of channels into a photogenerated current signal that carries information, and transmit the photogenerated current signal obtained through conversion to the transimpedance amplifier 32. The transimpedance amplifier 32 is configured to convert the photogenerated current signal into a voltage signal and amplify the voltage signal. The optical digital signal processor 36 is configured to collect a voltage signal obtained through amplification of the transimpedance amplifier 32, convert the voltage signal into a digital electrical signal, perform digital signal processing, and output a processed electrical signal to the electronic device. The PSM optical-to-electrical conversion module usually uses a parallel single mode fiber (Parallel Single Mode Fiber, PSM) as an optical jumper, and optical signals of the channels have a same sending end and a same receiving end (same source and same sink). Therefore, the PSM optical-to-electrical conversion module may use a hardware apparatus and method procedure that are the same as those of the wavelength division optical-to-electrical conversion module.

As shown in FIG. 9b and FIG. 9c, when the optical-to-electrical conversion module may be a wavelength division optical-to-electrical conversion module or a PSM optical-to-electrical conversion module, the optical-to-electrical conversion module may have a plurality of optical signal transmission channels. For example, a quantity of channels is 4. A real-time parameter output by the photodetector 31 includes but is not limited to photogenerated currents ch1 to ch4 of the four channels. A real-time parameter that may be output by the transimpedance amplifier 32 includes but is not limited to optical signal amplitudes ch1 to ch4 of the four channels, photogenerated currents ch1 to ch4 of the four channels, and the like. A real-time parameter that may be output by the optical digital signal processor 36 includes but is not limited to a pre-FEC bit error rate, a post-FEC bit error rate, electrical eye pattern amplitudes ch1 to ch4 of the four channels, and the like. Any parameter output by the optical-to-electrical conversion unit 206 may be used as the foregoing first sampled parameter.

During specific implementation, when the optical-to-electrical conversion module has a plurality of optical signal transmission channels, sampled data of any channel may be used as the first sampled parameter, or an average value or a sum value of sampled data of the plurality of channels may be used as the first sampled parameter. Correspondingly, in a sampling process, the sampling unit may sample and store only the sampled data of any one of the plurality of channels, or may sample the sampled data of the plurality of channels, and store the average value or the sum value of the sampled data in the sampled information storage unit. The photogenerated current in FIG. 9b and FIG. 9c is used as an example. A photogenerated current of any one of the four channels may be used as the first sampled parameter, or an average photogenerated current of the four channels or a sum photogenerated current of the four channels may be used as the first sampled parameter.

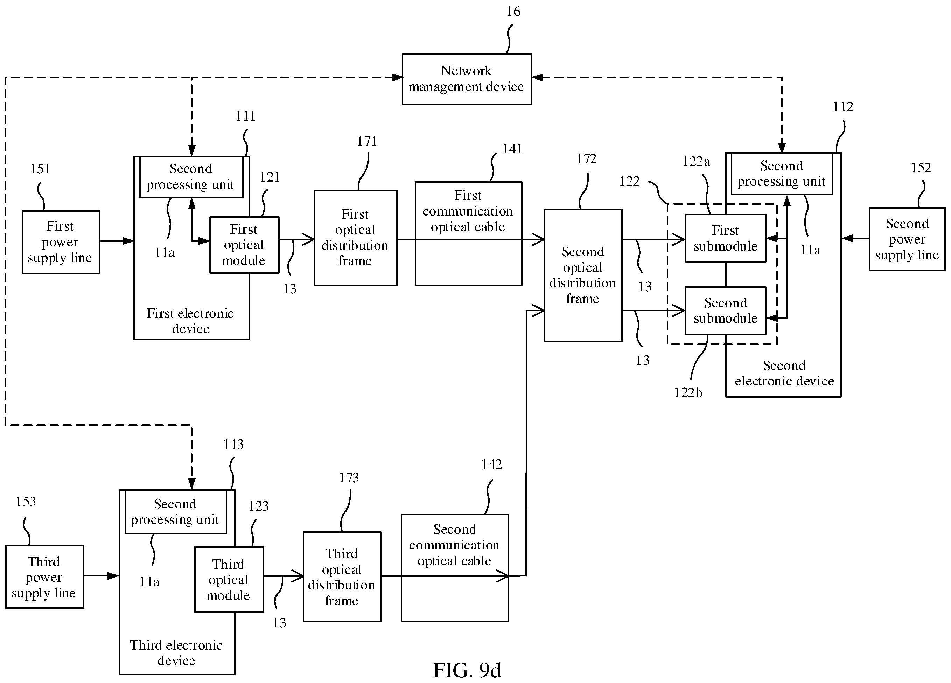

During specific implementation, for the optical-to-electrical conversion module with a plurality of channels for input, if input optical signals of the optical-to-electrical conversion module come from different optical modules, the optical-to-electrical conversion module may be logically divided into a plurality of independent submodules according to different sources of the input optical signals. Each submodule independently performs operations such as real-time parameter sampling, alarming, real-time parameter sampled data storage, fault type analysis and calculation, and fault type analysis and calculation result storage and reporting. FIG. 9d is a diagram of another structure of a communication system according to an embodiment of this application. As shown in FIG. 9d, a first optical module 121 in a first electronic device 111 and a second optical module 122 in a second electronic device 112 implement an optical signal connection through optical jumpers 13, a first optical distribution frame 171, a first communication optical cable 141, a second optical distribution frame 172, and the like. A third optical module 123 in a third electronic device 113 and the second optical module 122 in the second electronic device 112 implement an optical signal connection through optical jumpers 13, a third optical distribution frame 173, a second communication optical cable 142, the second optical distribution frame 172, and the like. That is, the second optical module 122 is an optical-to-electrical conversion module with a plurality of channels for input. Some channels receive optical signals transmitted by the first optical module 121 through the first communication optical cable 141, and these channels may be logically defined as a first submodule 122a. Other channels receive optical signals transmitted by the third optical module 123 through the second communication optical cable 142, and these channels may be logically defined as a second submodule 122b. Both the first submodule 122a and the second submodule 122b may independently perform operations such as real-time parameter sampling, alarming, real-time parameter sampled data storage, fault type analysis and calculation, and fault type analysis and calculation result storage and reporting.

Certainly, in some cases, when the optical module is another functional module, another parameter may also be used as the first sampled parameters, provided that the first processing unit can determine, based on the first sampled parameters, the fault type information corresponding to the alarm information. A specific implementation of the first sampled parameters is not limited herein.

The optical module in this embodiment of this application may determine an alarm status in a plurality of manners. The following describes several manners of determining the alarm status of the optical module by using examples.

### Determining manner 1:

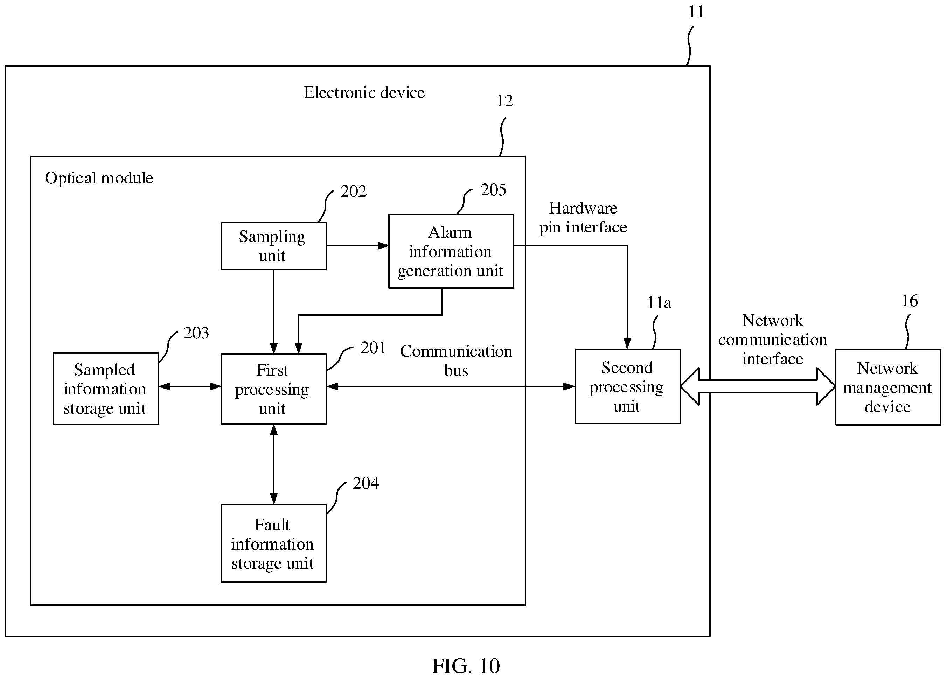

FIG. 10 is a diagram of another structure of a communication system according to an embodiment of this application. As shown in FIG. 10, the optical module 12 may further include an alarm information generation unit 205. The alarm information generation unit 205 is separately electrically connected to the sampling unit 202 and the first processing unit 201. The sampling unit 202 is further configured to send the first sampled parameters to the alarm information generation unit 205. The alarm information generation unit 205 is configured to: determine whether the first sampled parameters are within a preset threshold range, generate the alarm information when the first sampled parameters are out of the threshold range, and send the alarm information to the first processing unit 201.

During specific implementation, the alarm information generation unit 205 may receive, in real time, the plurality of first sampled parameters output by the sampling unit 202. The first sampled parameter may be an analog parameter, or the first sampled parameter may be a quantized analog parameter, or the first sampled parameter may be a digital parameter. The alarm information generation unit 205 may monitor statuses of the first sampled parameters in real time, and compare the first sampled parameters with endpoint values of the preset threshold range one by one. When the first sampled parameters decrease from a normal value to be less than a minimum value of the preset threshold range, or when the first sampled parameters increase from a normal value to be greater than a maximum value of the preset threshold range, the alarm information generation unit 205 generates alarm information. For example, the alarm information may be that a digital logic signal changes from a low level to a high level, or the alarm information may be that a digital logic signal changes from a high level to a low level. Certainly, the alarm information may alternatively be information of another type. This is not limited herein.

In the determining manner 1, a parameter used by the alarm information generation unit 205 to determine the alarm status and a parameter used by the first processing unit 201 to determine the fault type information may be the same, and may, for example, both use the first sampled parameters collected by the sampling unit 202. For example, when the optical module in this embodiment of this application is an optical-to-electrical conversion module, an optical-to-electrical amplification module, an optical switching module, or another module, the first sampled parameter may include a photogenerated current. When the optical module is an optical-to-electrical conversion module, the first sampled parameter may include parameters such as a photogenerated current, an optical signal amplitude, a pre-FEC bit error rate, a post-FEC bit error rate, an electrical eye pattern amplitude, an optical signal phase, or an optical signal spectrum. Certainly, in some cases, the first sampled parameter may further include another parameter. This is not limited herein.

### Determining manner 2:

As shown in FIG. 10, the optical module 12 may further include an alarm information generation unit 205. The alarm information generation unit 205 is separately electrically connected to the sampling unit 202 and the first processing unit 201. The sampling unit 202 is further configured to collect second sampled parameters, and send the second sampled parameters to the alarm information generation unit 205, where the second sampled parameters are different from the first sampled parameters. The alarm information generation unit 205 is configured to: determine whether the second sampled parameters are within a preset threshold range, generate the alarm information when the second sampled parameters are out of the threshold range, and send the alarm information to the first processing unit 201.

The sampling unit may be specifically configured to collect the second sampled parameters in real time at millisecond-level sampling time precision. The millisecond-level sampling time precision indicates that the sampling unit collects at least two pieces of data within 1s. Higher sampling precision of the sampling unit may indicate that more sampled data is provided for determining the fault type information.

The determining manner 2 is different from the determining manner 1 in that a parameter used by the alarm information generation unit 205 to determine the alarm status and a parameter used by the first processing unit 201 to determine the fault type information are different. Specifically, the first processing unit 201 determines the fault type information based on the first sampled parameters, and the alarm information generation unit 205 determines the alarm status based on the second sampled parameters different from the first sampled parameters.

During specific implementation, the alarm information generation unit 205 may receive, in real time, the plurality of second sampled parameters output by the sampling unit 202. The second sampled parameter may be an analog parameter, or the second sampled parameter may be a quantized analog parameter, or the second sampled parameter may be a digital parameter. The alarm information generation unit 205 may monitor statuses of the second sampled parameters in real time, and compare the second sampled parameters with endpoint values of the preset threshold range one by one. When the second sampled parameters decrease from a normal value to be less than a minimum value of the preset threshold range, or when the second sampled parameters increase from a normal value to be greater than a maximum value of the preset threshold range, the alarm information generation unit 205 generates alarm information. For example, the alarm information may be that a digital logic signal changes from a low level to a high level, or the alarm information may be that a digital logic signal changes from a high level to a low level. Certainly, the alarm information may alternatively be information of another type. This is not limited herein.

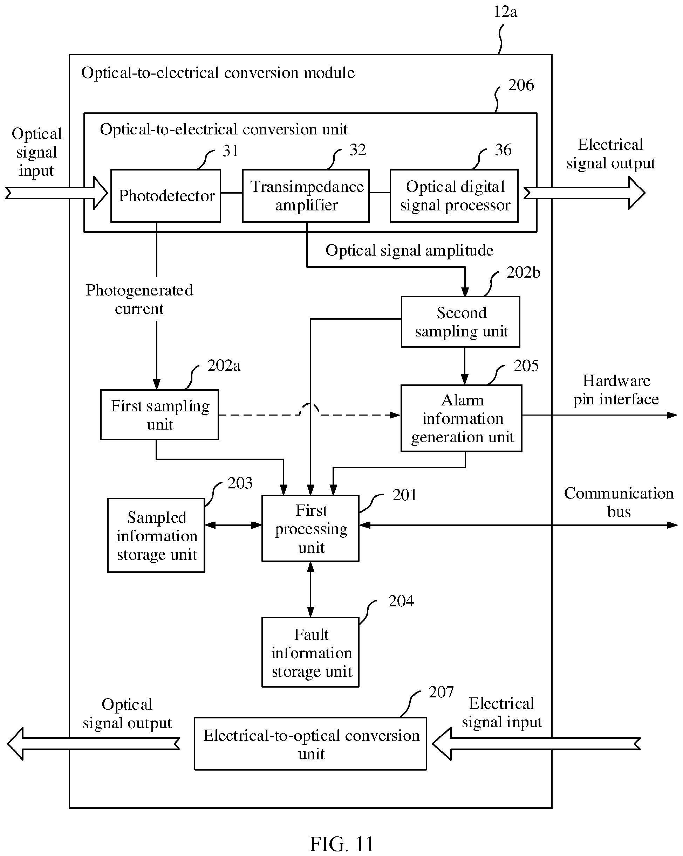

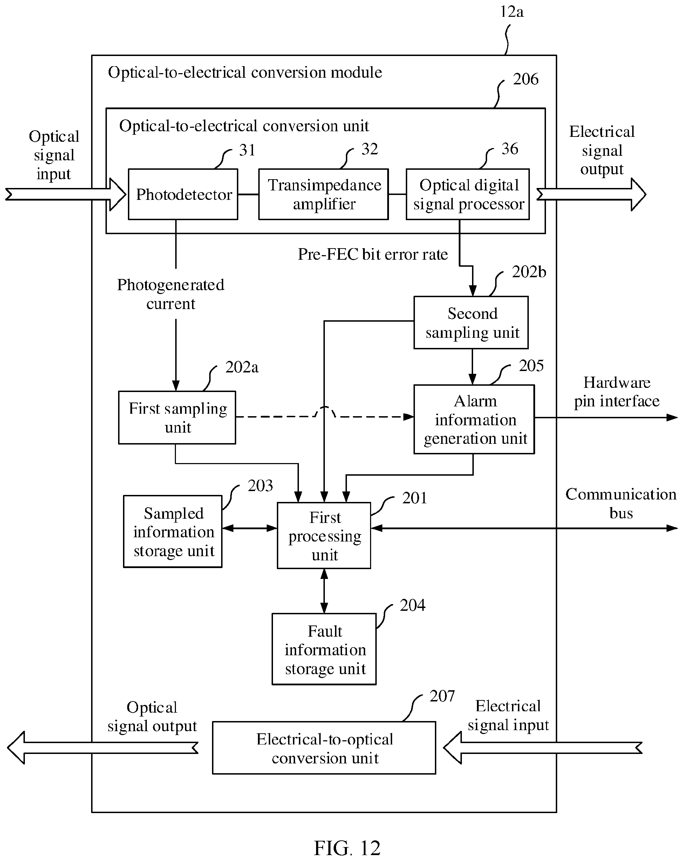

FIG. 11 is a diagram of another structure of an optical-to-electrical conversion module according to an embodiment of this application. FIG. 12 is a diagram of another structure of an optical-to-electrical conversion module according to an embodiment of this application. As shown in FIG. 11 and FIG. 12, the sampling unit may include a first sampling unit 202a and a second sampling unit 202b. The first sampling unit 202a is configured to collect first sampled parameters, and store the first sampled parameters in the sampled information storage unit 203 by using the first processing unit 201. The second sampling unit 202b is further configured to collect second sampled parameters, and send the second sampled parameters to the alarm information generation unit 205.

For example, when the optical module is an optical-to-electrical conversion module, the first sampled parameter may include a photogenerated current, and the second sampled parameter may include an optical signal amplitude. As shown in FIG. 11, the first sampling unit 202a may collect the photogenerated current output by the photodetector 31, and use the photogenerated current as the foregoing first sampled parameter, and the second sampling unit 202b may collect the optical signal amplitude output by the transimpedance amplifier 32, and use the optical signal amplitude as the foregoing second sampled parameter. Alternatively, the first sampled parameter may include a photogenerated current, and the second sampled parameter may include a pre-FEC bit error rate. As shown in FIG. 12, the first sampling unit 202a may collect the photogenerated current output by the photodetector 31, and use the photogenerated current as the foregoing first sampled parameter, and the second sampling unit 202b may collect the pre-FEC bit error rate output by the optical digital signal processor 36, and use the pre-FEC bit error rate as the foregoing second sampled parameter. During specific implementation, the first sampled parameter and the second sampled parameter may alternatively include another parameter. This is not limited herein.

In the determining manner 1 and the determining manner 2, the alarm information generation unit 205 may be an independent hardware unit. For example, the alarm information generation unit may be hardware such as a comparator, or the alarm information generation unit 205 and the first processing unit 201 may be integrated into a same processor or processing chip. A specific implementation of the alarm information generation unit 205 is not limited herein. During specific implementation, a function of "determining whether the first sampled parameters (or the second sampled parameters) are within a preset threshold range, and generating alarm information when the first sampled parameters are out of the threshold range" in the alarm information generation unit 205 may be implemented in a hardware or software manner.

In the determining manner 1 and the determining manner 2, the alarm information generation unit is configured to monitor the first sampled parameters in real time. When the first sampled parameters are abnormal, the alarm information generation unit may detect an anomaly in a timely manner, generate the alarm information, and send the alarm information to the first processing unit.

### Determining manner 3:

As shown in FIG. 5, a function of determining the alarm status in the optical module 12 may alternatively be implemented by using the first processing unit 201.

Similar to the alarm information generation unit functioning in the determining manner 1, the first processing unit in the determining manner 3 may determine the alarm status based on the first sampled parameters, that is, the first processing unit 201 may determine whether the first sampled parameters are within a preset threshold range, and generate the alarm information when the first sampled parameters are out of the threshold range. The first processing unit 201 may receive, in real time, the plurality of first sampled parameters output by the sampling unit 202, compare the received first sampled parameters with endpoint values of the preset threshold range one by one, and generate the alarm information when the first sampled parameters are greater than a maximum value of the preset threshold range or less than a minimum value of the preset threshold range.

Alternatively, similar to the alarm information generation unit functioning in the determining manner 2, the first processing unit in the determining manner 3 may determine the alarm status based on the second sampled parameters different from the first sampled parameters, that is, the first processing unit 201 may determine whether the second sampled parameters are within a preset threshold range, and generate the alarm information when the second sampled parameters are out of the threshold range. The first processing unit 201 may receive, in real time, the plurality of second sampled parameters output by the sampling unit 202, compare the received second sampled parameters with endpoint values of the preset threshold range one by one, and generate the alarm information when the second sampled parameters are greater than a maximum value of the preset threshold range or less than a minimum value of the preset threshold range.

The foregoing describes a basic structure of the optical module. The following describes a connection relationship between the optical module and components such as the electronic device and the network management device in the communication system in embodiments of this application with reference to the accompanying drawings.

As shown in FIG. 10, the electronic device 11 in this embodiment of this application may include a second processing unit 11a and any optical module 12 in embodiments of this application. The optical module 12 is connected to the second processing unit 11a. The second processing unit 11a is configured to implement control on the electronic device 11. The optical module 12 is configured to: when identifying alarm information, send the alarm information to the second processing unit 11a. The second processing unit 11a is configured to: after first preset time after receiving the alarm information, read fault type information that corresponds to the alarm information and that is in the fault information storage unit 204 of the optical module 12. The second processing unit 11a may be a component having a strong data processing function, for example, a server.

Further, the second processing unit 11a may be configured to determine the fault cause based on the read fault type information and a network topology relationship of a network system in which the optical module is located 11. Alternatively, the second processing unit 11a may be configured to determine the fault cause based on the read fault type information. Because the first processing unit 201 in the optical module 12 has determined the fault type information, the second processing unit 11a may determine the fault cause based on the fault type information. This simplifies a process of analyzing the fault cause by the second processing unit 11a, reduces a calculation amount, and shortens time required for analyzing the fault cause.

In this embodiment of this application, when identifying the alarm information, the first processing unit 201 in the optical module may determine, based on the first sampled parameters, the fault type information corresponding to the alarm information, and store the fault type information in the fault information storage unit 204. The second processing unit 11a in the electronic device 11 may read, after first preset time after receiving the alarm information, the fault type information that corresponds to the alarm information and that is in the fault information storage unit 204, and can quickly and accurately determine a fault cause and a fault point location based on a network topology relationship of a communication system in which the optical module is located. Therefore, the optical module does not need to transmit a large amount of sampled data to the electronic device. This shortens data transmission time, and reduces data transmission pressure between the optical module and the electronic device. Therefore, after an optical path fault occurs in the communication system in embodiments of this application, delay time required for determining the fault cause and the fault point location is short, and the fault cause and the fault point location can be located in a timely manner.

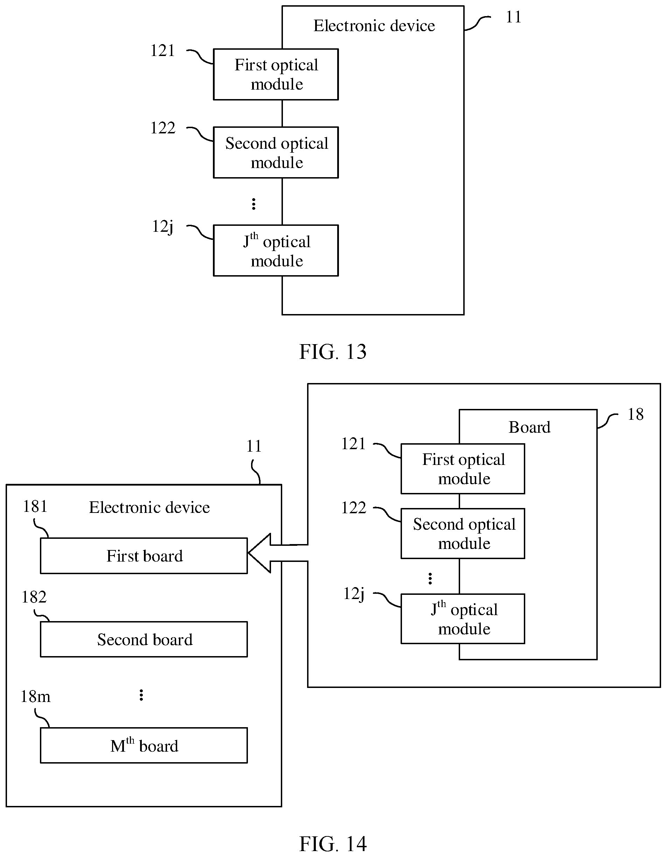

FIG. 13 is a diagram of a structure of an electronic device according to an embodiment of this application. As shown in FIG. 13, in some embodiments of this application, the electronic device 11 may include at least one optical module. For example, in FIG. 13, the electronic device may include a first optical module 121, a second optical module 122, ..., and a J^{th} optical module 12j. Refer to FIG. 10 and FIG. 13. The electronic device 11 may be an integrated device, and the optical module may be directly inserted into the electronic device 11 as a pluggable independent module, or the optical module may be disposed inside the electronic device 11. The second processing unit 11a may be connected to the alarm information generation unit 205 in the optical module 12 through a hardware pin interface. The alarm information generation unit 205 is configured to send the alarm information to the second processing unit 11a through a level jump of the hardware pin interface when generating the alarm information. A level of the hardware pin interface may be changed from a high level to a low level, or may be changed from a low level to a high level. For example, the alarm information may be a loss of signal (loss of signal, LOS) alarm, and the alarm information may be transmitted through a corresponding hardware pin interface. Through the level jump of the hardware pin interface, the alarm information generation unit 205 can quickly transmit the alarm information to the second processing unit 11a.

Still refer to FIG. 10 and FIG. 13. The second processing unit 11a may be connected to the first processing unit 201 through a communication bus. The first processing unit 201 is configured to send the alarm information to the second processing unit 11a through the communication bus when identifying the alarm information. During specific implementation, the first processing unit 201 may also store the alarm information in the fault information storage unit 204 when identifying the alarm information, and the second processing unit 11a may read the alarm information in the fault information storage unit 204 through the communication bus. The second processing unit 11a may further read parameters such as the fault type information and fault generation time in the fault information storage unit 204 through the communication bus. In addition, the second processing unit 11a may read a status parameter and a performance parameter of the optical module and configure an operating parameter of the optical module through the communication bus. Certainly, the second processing unit 11a may also exchange other information with the optical module through the communication bus. Examples are not described one by one herein.

FIG. 14 is a diagram of another structure of an electronic device according to an embodiment of this application. As shown in FIG. 14, in some other embodiments of this application, the electronic device 11 may include at least one board 18. For example, in FIG. 14, the electronic device 11 may include a first board 181, a second board 182, ..., and an M^{th} board 18m that are independent of each other. The board 18 may be inserted into the electronic device 11 in a pluggable manner, or the board 18 may be disposed inside the electronic device 11. At least one optical module may be disposed in the board 18. The optical module may be inserted into the board 18 in a pluggable manner, or the optical module may be disposed inside the board 18. For example, in FIG. 14, a first optical module 121, a second optical module 122, ..., and a J^{th} optical module 12j may be inserted into the board 18 in a pluggable manner.

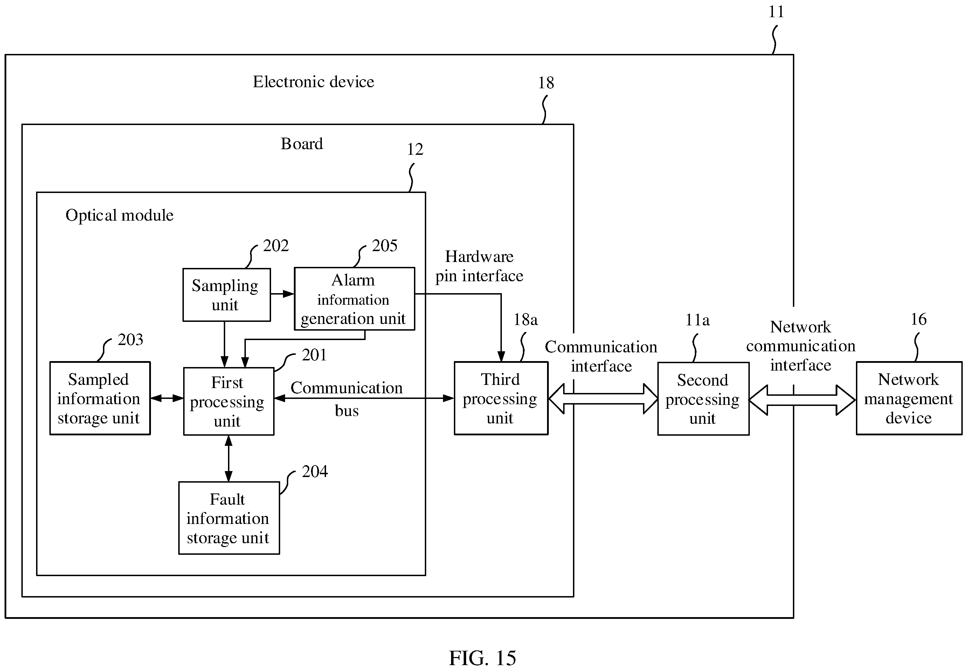

FIG. 15 is a diagram of another structure of a communication system according to an embodiment of this application. Refer to FIG. 14 and FIG. 15. The optical module 12 may exchange information with the electronic device 11 by using a board 18. The board 18 may include a third processing unit 18a. The third processing unit 18a is connected to an alarm information generation unit 205 in the optical module 12 through a hardware pin interface. The alarm information generation unit 205 is configured to send alarm information to the third processing unit 18a through a level jump of the hardware pin interface when generating the alarm information. A level of the hardware pin interface may change from a high level to a low level, or may change from a low level to a high level. For example, the alarm information may be a loss of signal (loss of signal, LOS) alarm, and the alarm information may be transmitted through a corresponding hardware pin interface. Through the level jump of the hardware pin interface, the alarm information generation unit 205 can quickly transmit the alarm information to the third processing unit 18a. In addition, the third processing unit 18a may send the alarm information to the second processing unit 11a through a communication interface. The third processing unit 18a may be a component having a data processing function, for example, a central processing unit (central processing unit, CPU) or a microprocessor (Microcontroller Unit, MCU).

Still refer to FIG. 14 and FIG. 15. The third processing unit 18a may be connected to the first processing unit 201 through a communication bus. The third processing unit 18a is connected to the second processing unit 11a through the communication interface. The first processing unit 201 is configured to send the alarm information to the third processing unit 18a through the communication bus when identifying the alarm information. The third processing unit 18a is configured to send the alarm information to the second processing unit 11a through the communication interface. During specific implementation, the third processing unit 18a may read parameters such as the fault type information and fault generation time in the fault information storage unit 204 through the communication bus, and transmit the read parameters such as the fault type information and the fault generation time to the second processing unit 11a. During specific implementation, the optical module 12 may further exchange other information with the electronic device 11 by using the board 18. Examples are not described one by one herein.

In this embodiment of this application, the communication bus may be a serial peripheral interface (Serial Perripheral Interface, SPI) bus or an inter-integrated circuit (Inter-Integrated Circuit, I2C) serial communication bus. To improve a transmission rate, the communication bus may alternatively be a high-speed communication bus, and may, for example, be a management data input/output interface bus (Management Data Input Output Interface, MDIO). Certainly, the communication bus may alternatively be another type of bus, provided that a transmission requirement between the first processing unit and the electronic device can be met. This is not limited herein.

During specific implementation, as shown in FIG. 10, the communication system in this embodiment of this application may further include a network management device 16. The network management device 16 may perform unified management and control on the communication system in which the optical module is located. A second processing unit 11a in the electronic device 11 may be connected to the network management device 16 through a network communication interface. The electronic device 11 may exchange information with a grid device 16 through the network communication interface. For example, the electronic device 11 may transmit parameters such as fault type information and fault generation time to the network management device 16 through the network communication interface. The network management device 16 may be configured to obtain the fault type information of the electronic device 11, and determine a fault cause based on the fault type information and a network topology relationship of a network system. Alternatively, the network management device 16 may be configured to obtain the fault type information of the electronic device 11, and determine a fault cause based on the fault type information.

The foregoing describes a connection relationship between components in the communication system. The following describes a scenario in which a fault occurs in the communication system in embodiments of this application by using examples with reference to the accompanying drawings.

In some embodiments of this application, in a plurality of fault scenarios of the communication system, at least one parameter of the optical module is abnormal. A parameter may be used as the first sampled parameter. The first processing unit in the optical module may determine the fault type information based on the first sampled parameter used when the fault occurs. Subsequently, the electronic device or the network management device may determine the fault cause and the fault point based on the fault type information and the network topology relationship.

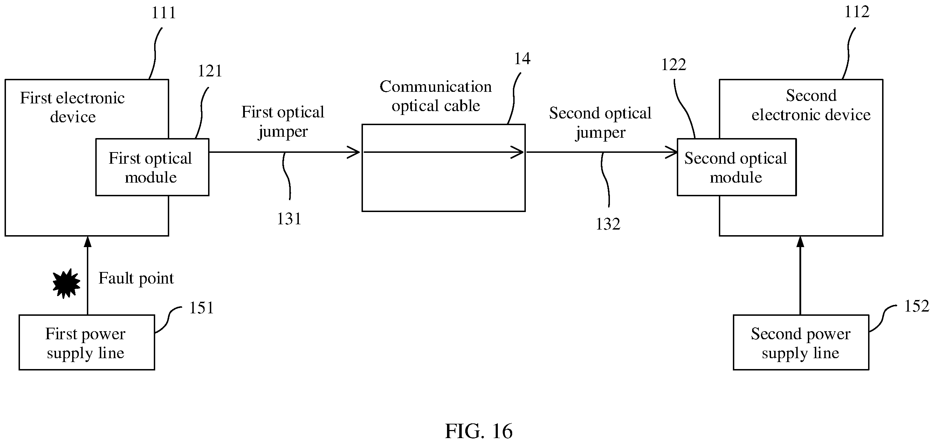

FIG. 16 is a diagram of a communication system in which a device power-off fault occurs according to an embodiment of this application. As shown in FIG. 16, the communication system may include an electronic device and a power supply line. The power supply line is configured to supply power to the electronic device. The electronic device may include at least one optical module. Optical modules in different electronic devices may implement an optical signal connection through an optical jumper, a communication optical cable, and the like. For example, the communication system shown in FIG. 16 may at least include a first electronic device 111 and a second electronic device 112. An optical signal output by a first optical module 121 in the first electronic device 111 is input to a second optical module 122 in the second electronic device 112 through a first optical jumper 131, a communication optical cable 14, and a second optical jumper 132. In this way, transmission of optical signals between the first optical module 121 and the second optical module 122 is implemented. A first power supply line 151 is connected to the first electronic device 111. The first power supply line 151 is configured to supply power to the first electronic device 111. A second power supply line 152 is connected to the second electronic device 112. The second power supply line 152 is configured to supply power to the second electronic device 112.

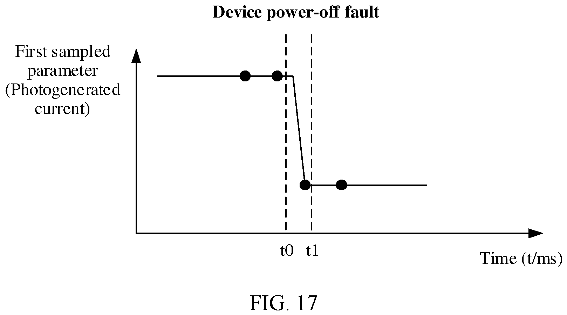

When the device power-off fault occurs in the first electronic device 111, the first electronic device 111 is powered off to be offline. When the communication system properly operates, the first optical module 121 and the second optical module 122 may transmit an optical signal in a point-to-point peer manner. After the first electronic device 111 is powered off to be offline, an anomaly occurs in first sampled parameters sampled by the second optical module 122. FIG. 17 is a sampling diagram obtained by collecting first sampled parameters by a second optical module when a device power-off fault occurs. As shown in FIG. 17, when the device power-off fault occurs in the communication system, a main feature of the sampling diagram is as follows: The first sampled parameter (for example, a photogenerated current) decreases in a quite short time (from a moment t0 to a moment t1 in the figure) from a normal value to a state of no optical signal input. A time window (a time difference between the moment t0 and the moment t1) in which the first sampled parameter decreases from the normal value to the state of no signal input is generally less than 20 ms. In different scenarios and different types of optical modules, a specific value of the time window may vary to an extent. During specific implementation, it is detected, as a determining basis, that the first sampled parameter decreases in a stepped manner in the time window from the normal value to be less than a threshold of several microamps to several milliamps. When the first processing unit in the second optical module 122 identifies that the first sampled parameter meets the determining basis, it may be determined that the fault type information is an input optical power stepped loss. The second electronic device 112 may determine, based on the fault type information and the network topology relationship, that the fault cause is that the first electronic device 111 is powered off, and the fault point is at a location of the first power supply line 151.

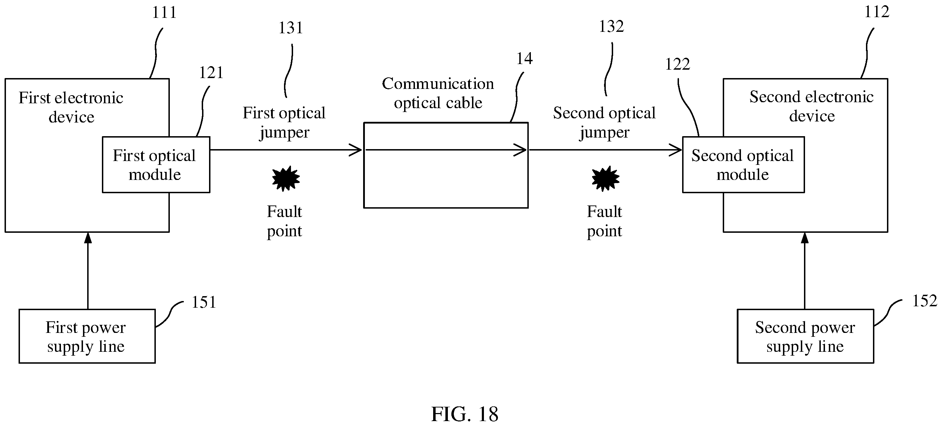

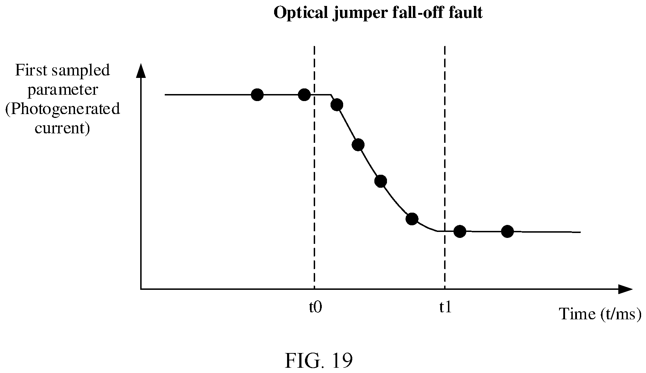

FIG. 18 is a diagram of a communication system in which an optical jumper fall-off fault occurs according to an embodiment of this application. As shown in FIG. 18, when an optical jumper in an optical signal transmission link between a first electronic device 111 and a second electronic device 112 falls off, for example, when the optical jumper is in poor contact or is manually removed, an anomaly occurs in first sampled parameters sampled by a second optical module 122. FIG. 19 is a sampling diagram obtained by collecting first sampled parameters by a second optical module when an optical jumper fall-off fault occurs. As shown in FIG. 19, when the optical jumper fall-off fault occurs in the communication system, a main feature of the sampling diagram is as follows: The first sampled parameter (for example, a photogenerated current) decreases in a quite short time window (from a moment t0 to a moment t1 in the figure) to a state of no optical signal input. A time window (a time difference between the moment t0 and t1) generally ranges from 20 ms to 500 ms. In different scenarios and different types of optical modules, a specific value of the time window may vary to an extent. During specific implementation, it is detected, as a determining basis, that the first sampled parameter quickly decreases in the time window from a normal value to be less than a threshold of several microamps to several milliamps. When a first processing unit in the second optical module 122 identifies that the first sampled parameter meets the determining basis, it may be determined that the fault type information is an input optical power quick loss. The second electronic device 112 may determine, based on the fault type information and the network topology relationship, that the fault cause is the optical jumper fall-off fault, and the fault point is at a location of a first optical jumper 131 or a second optical jumper 132.

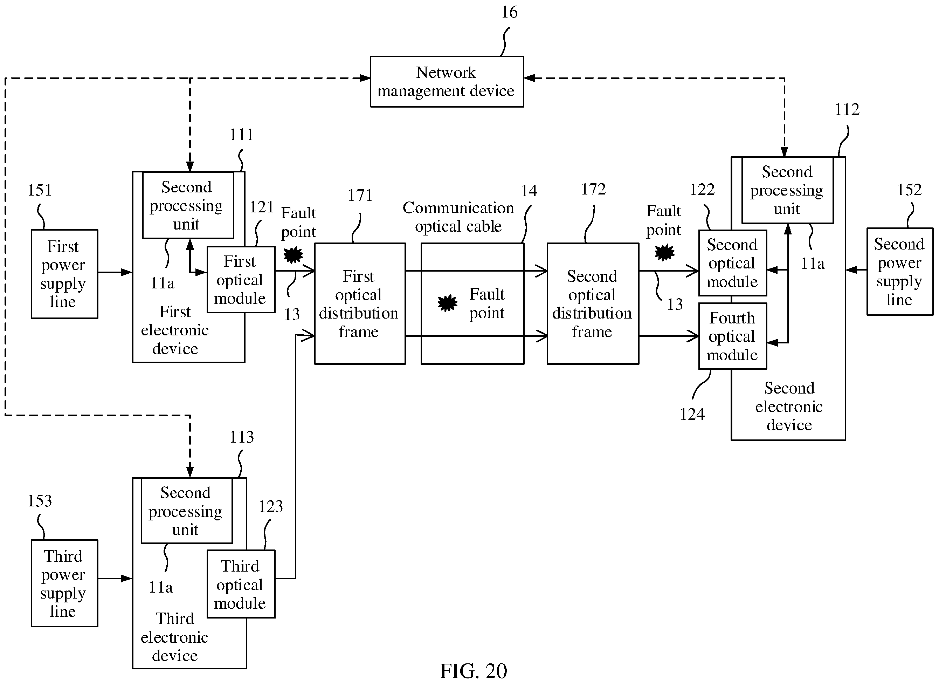

FIG. 20 is a diagram of a communication system in which an optical cable breakage fault or an optical jumper breakage fault occurs according to an embodiment of this application. As shown in FIG. 20, the communication system may include a first electronic device 111, a second electronic device 112, a third electronic device 113, and a network management device 16. The network management device 16 is separately connected to a second processing unit in the first electronic device 111, a second processing unit in the second electronic device 112, and a second processing unit in the third electronic device 113. The first electronic device 111 includes a first optical module 121, and the third electronic device 113 includes a third optical module 123. That is, the first optical module 121 and the third optical module 123 are distributed in different electronic devices. Certainly, in some cases, the first optical module 121 and the third optical module 123 may alternatively be distributed in a same electronic device. The second electronic device 112 includes a second optical module 122 and a fourth optical module 124 that share a cable for transmission. In other words, the second optical module 122 and the fourth optical module 124 transmit optical signals through a same communication optical cable 14. The first optical module 121 and the second optical module 122 implement optical signal transmission through optical jumpers 13, a first optical distribution frame 171, the communication optical cable 14, and a second optical distribution frame 172. The third optical module 123 and the fourth optical module 124 implement optical signal transmission through optical jumpers 13, the first optical distribution frame 171, the communication optical cable 14, and the second optical distribution frame 172.

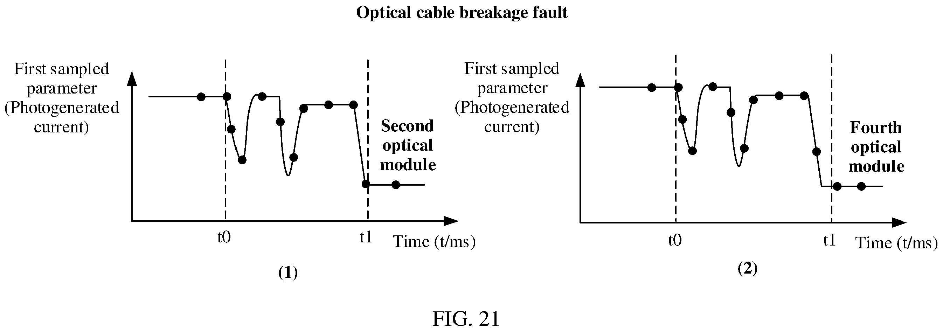

Still refer to FIG. 20. When the optical cable breakage fault occurs in an optical signal transmission link, for example, when the communication optical cable 14 is cut or damaged due to an external force, an anomaly occurs in first sampled parameters sampled by the second optical module 122 and the fourth optical module 124 that share a cable for transmission and that are in the second electronic device 112. FIG. 21 shows sampling diagrams obtained by collecting first sampled parameters by a second optical module and a fourth optical module when an optical cable breakage fault occurs. (1) in FIG. 21 is a sampling diagram obtained by collecting first sampled parameters by the second optical module when the optical cable breakage fault occurs. (2) in FIG. 21 is a sampling diagram obtained by collecting first sampled parameters by the fourth optical module when the optical cable breakage fault occurs. Refer to FIG. 20 and FIG. 21. When the optical cable breakage fault occurs in the communication system, a main feature of the sampling diagrams of the second optical module 122 and the fourth optical module 124 is as follows: In a process in which the first sampled parameter (for example, a photogenerated current) decreases to a state of no optical signal input, a fluctuation and descent feature occurs, and a quantity and magnitude of fluctuations are directly related to a degree of excavation or damage. During specific implementation, it is detected, as a determining basis, that the first sampled parameter decreases from a normal value to be less than a threshold of several microamps to several milliamps and a fluctuation and descent event occurs in a waveform rule of the first sampled parameters.

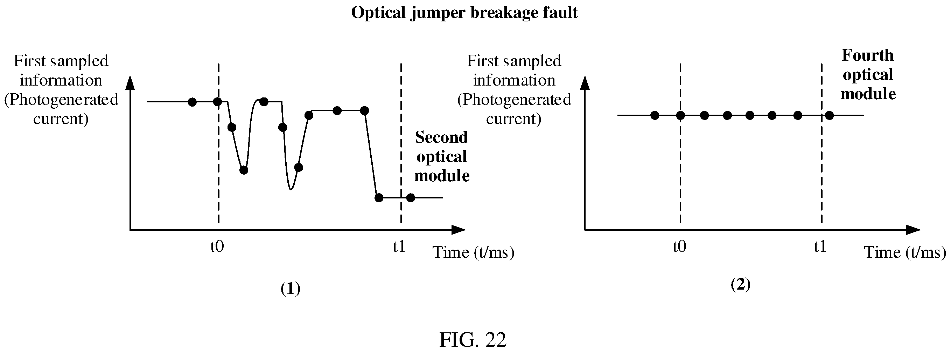

As shown in FIG. 20, when the optical jumper breakage fault occurs in an optical signal transmission link, an anomaly occurs in first sampled parameters sampled by at least one of the second optical module 122 and the fourth optical module 124 that share a cable for transmission and that are in the second electronic device 112. FIG. 22 shows sampling diagrams obtained by collecting first sampled parameters by a second optical module and a fourth optical module when an optical jumper breakage fault occurs. (1) in FIG. 22 is a sampling diagram obtained by collecting first sampled parameters by the second optical module. (2) in FIG. 22 is a sampling diagram obtained by collecting first sampled parameters by the fourth optical module. Refer to FIG. 20 and FIG. 22. When the optical jumper breakage fault occurs in the communication system, a main feature of the sampling diagrams is as follows: A sampling diagram of one of the two optical modules that share a cable for transmission has a fluctuation and descent characteristic, and a sampling diagram of the other optical module is normal. For example, in FIG. 22, the sampling diagram of the second optical module has a fluctuation and descent characteristic, and the sampling diagram of the fourth optical module is normal.

Still refer to FIG. 20. During specific implementation, a first processing unit in the second optical module 122 and a first processing unit in the fourth optical module 124 may determine the fault type information based on the first sampled parameters. For example, the fault type information corresponding to the sampling diagrams (1) and (2) in FIG. 21 is an input optical power fluctuation loss, the fault type information corresponding to the sampling diagram (1) in FIG. 22 is an input optical power fluctuation loss, and the sampling diagram (2) in FIG. 22 is normal (no fault type information exists). The second electronic device 112 may determine a fault cause and a fault point location based on the fault type information of the second optical module 122 and the fourth optical module 124 and a network topology relationship of a network system in which the second electronic device 112 is located. When the second electronic device 112 detects that the fault type information of at least two optical modules that share a cable for transmission is the input optical power fluctuation loss, for example, the fault type information corresponding to the sampling diagrams of the second optical module 122 and the fourth optical module 124 in FIG. 21 is the input optical power fluctuation loss, it may be determined that the fault cause is the optical cable breakage fault, and the fault point is at a location of the communication optical cable 14. When the second electronic device 112 detects that the fault type information of at least one of the optical modules that share a cable for transmission is the input optical power fluctuation loss, and other optical modules are normal, for example, the fault type information corresponding to the sampling diagram of the second optical module 122 in FIG. 22 is the input optical power fluctuation loss, and the sampling diagram of the fourth optical module 124 is normal, it may be determined that the fault cause is the optical jumper breakage fault, and the fault point is at a location of an optical jumper corresponding to the optical module whose fault type information is the input optical power fluctuation loss.

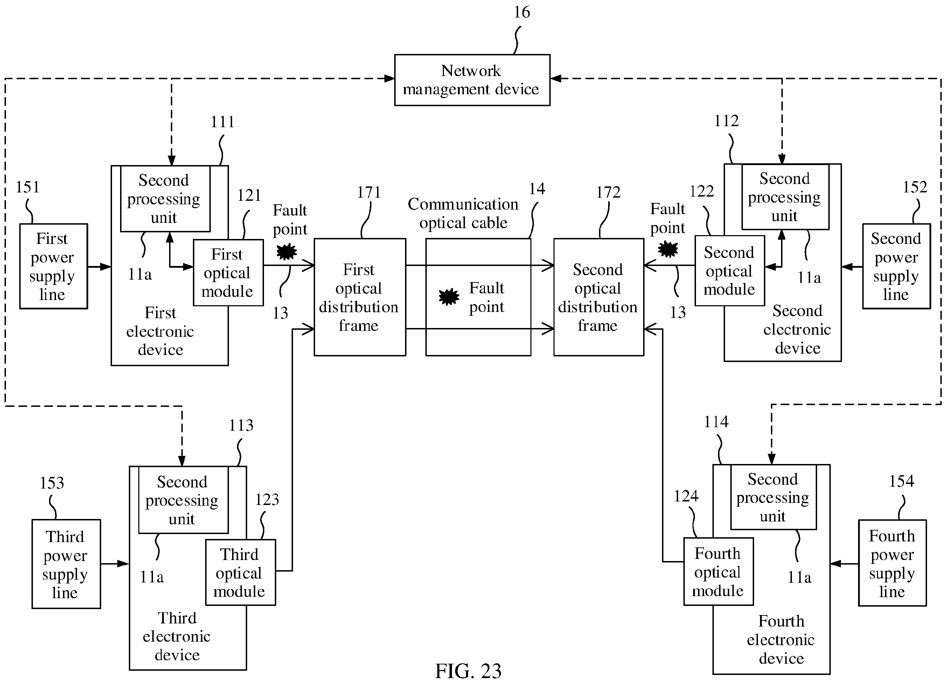

FIG. 23 is another diagram of a communication system in which an optical cable breakage fault or an optical jumper breakage fault occurs according to an embodiment of this application. FIG. 23 is different from FIG. 20 in that: In FIG. 23, a second optical module 122 and a fourth optical module 124 that share a cable for transmission are distributed in different electronic devices, where the second optical module 122 is located in a second electronic device 112, and the fourth optical module 124 is located in a fourth electronic device 114.

As shown in FIG. 23, when the optical cable breakage fault occurs in an optical signal transmission link, for example, when a communication optical cable 14 is cut or damaged due to an external force, an anomaly occurs in first sampled parameters sampled by the second optical module 122 and the fourth optical module 124 that share a cable for transmission. For sampling diagrams of the first sampled parameters sampled by the second optical module 122 and the fourth optical module 124, refer to FIG. 21. Refer to FIG. 21 and FIG. 23. When the optical cable breakage fault occurs in the communication system, a main feature of the sampling diagrams of the second optical module 122 and the fourth optical module 124 is as follows: In a process in which the first sampled parameter (for example, a photogenerated current) decreases to a state of no optical signal input, a fluctuation and descent feature occurs, and a quantity and magnitude of fluctuations are directly related to a degree of excavation or damage. During specific implementation, it is detected, as a determining basis, that the first sampled parameter decreases from a normal value to be less than a threshold of several microamps to several milliamps and a fluctuation and descent event occurs in a waveform rule of the first sampled parameters. When the optical jumper breakage fault occurs in an optical signal transmission link, an anomaly occurs in first sampled parameters sampled by at least one of the second optical module 122 and the fourth optical module 124 that share a cable for transmission. For sampling diagrams of the first sampled parameters sampled by the second optical module 122 and the fourth optical module 124, refer to FIG. 22. When the optical jumper breakage fault occurs in the communication system, a main feature of the sampling diagrams is as follows: A sampling diagram of one of the two optical modules that share a cable for transmission has a fluctuation and descent characteristic, and a sampling diagram of the other optical module is normal. For example, in FIG. 22, the sampling diagram of the second optical module has a fluctuation and descent characteristic, and the sampling diagram of the fourth optical module is normal.

Still refer to FIG. 23. During specific implementation, a first processing unit in the second optical module 122 and a first processing unit in the fourth optical module 124 may determine the fault type information based on the sampling diagrams of the first sampled parameters. For example, the fault type information corresponding to the sampling diagrams (1) and (2) in FIG. 21 is an input optical power fluctuation loss, the fault type information corresponding to the sampling diagram (1) in FIG. 22 is an input optical power fluctuation loss, and the sampling diagram (2) in FIG. 22 is normal (no fault type information exists). The second electronic device 112 obtains fault type information and fault generation time information of the second optical module 122, and reports the fault type information and the fault generation time information of the second optical module 122 to a network management device 16. The fourth electronic device 114 obtains fault type information and fault generation time information of the fourth optical module 124, and reports the fault type information and the fault generation time information of the fourth optical module 124 to the network management device 16. The network management device 16 may determine the fault cause and the fault point location based on the fault type information and fault generation time of the second optical module 122 and the fourth optical module 124 and the network topology relationship of a network system in which the optical module is locateds are. When the network management device 16 detects that the fault type information of at least two optical modules that share a cable for transmission is the input optical power fluctuation loss, for example, the fault type information corresponding to the sampling diagrams of the second optical module 122 and the fourth optical module 124 in FIG. 21 is the input optical power fluctuation loss, it may be determined that the fault cause is the optical cable breakage fault, and the fault point is at a location of the communication optical cable 14. When the network management device 16 detects that the fault type information of at least one of the optical modules that share a cable for transmission is the input optical power fluctuation loss, and other optical modules are normal, for example, the fault type information corresponding to the sampling diagram of the second optical module 122 in FIG. 22 is the input optical power fluctuation loss, and the sampling diagram of the fourth optical module 124 is normal, it may be determined that the fault cause is the optical jumper breakage fault, and the fault point is at a location of an optical jumper of the optical module whose fault type information is the input optical power fluctuation loss.

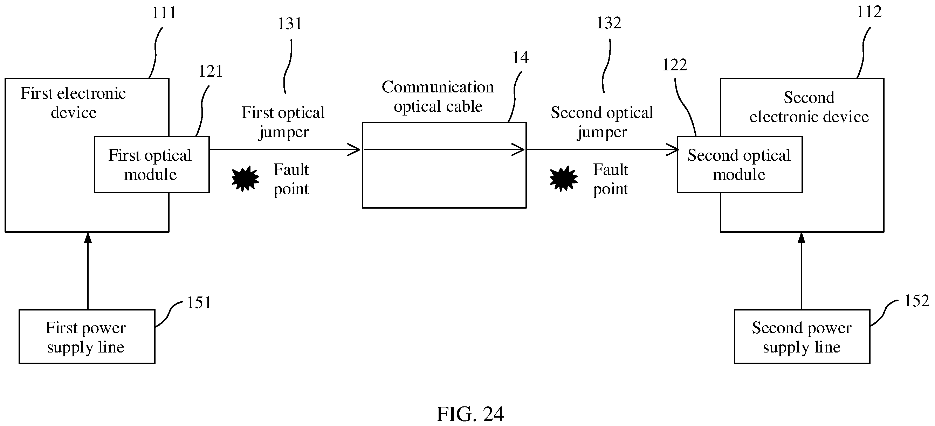

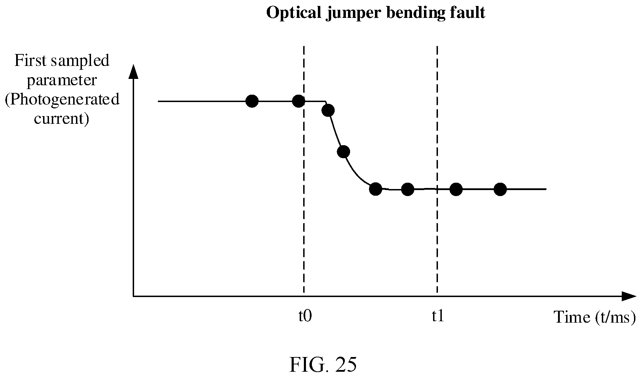

FIG. 24 is a diagram of a communication system in which an optical jumper bending fault occurs according to an embodiment of this application. As shown in FIG. 24, when the optical jumper bending fault occurs in an optical signal transmission link between a first electronic device 111 and a second electronic device 112, for example, when an optical jumper is bent under an action of an external force, an anomaly occurs in first sampled parameters sampled by a second optical module 122 in the second electronic device 112. FIG. 25 is a sampling diagram obtained by collecting first sampled parameters by a second optical module when an optical jumper bending fault occurs. Refer to FIG. 24 and FIG. 25. When the optical jumper bending fault occurs in the communication system, a main feature of the sampling diagram is as follows: The first sampled parameter (for example, a photogenerated current) of the second optical module 122 has a descent waveform when an optical jumper is bent, and a descent rate and a descent difference are strongly related to external force action time and a bending degree. Generally, the first sampled parameter may decrease to about half of a normal operating value, that is, a waveform of the first sampled parameters has a degradation characteristic. During specific implementation, a decrease amplitude value may be preset according to an actual application scenario. When identifying that the first sampled parameter has a degradation characteristic, a first processing unit in the second optical module 122 may determine that the fault type information is input optical power degradation. The second electronic device 112 may determine, based on the fault type information and the network topology relationship, that the fault cause is the optical jumper bending fault, and the fault point is at a location of a first optical jumper 131 or a second optical jumper 132.

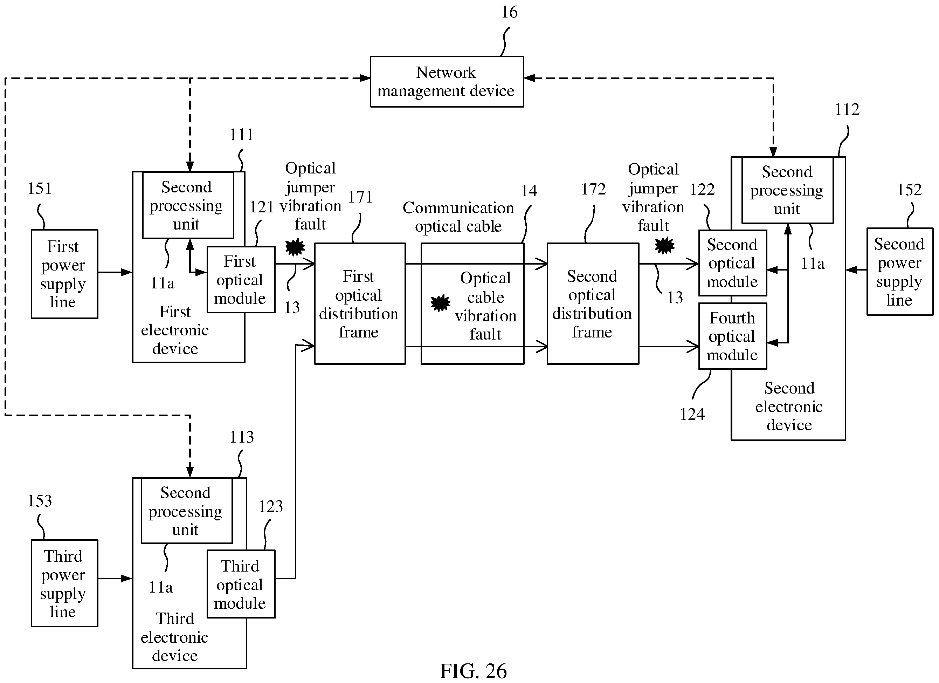

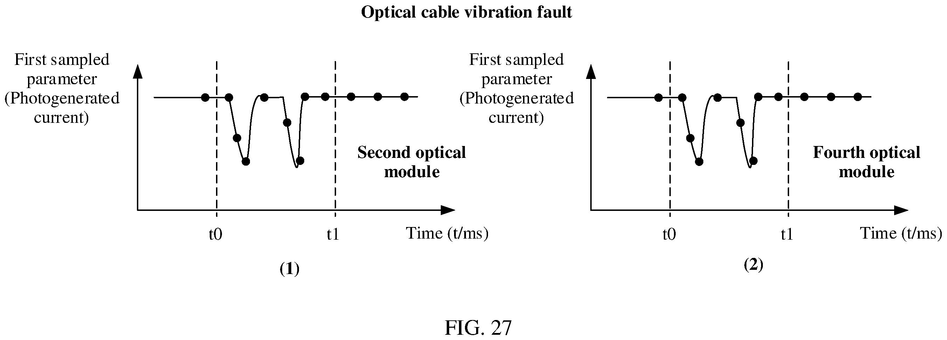

FIG. 26 is a diagram of a communication system in which an optical cable vibration fault or an optical jumper vibration fault occurs according to an embodiment of this application. A structure of the communication system shown in FIG. 26 is similar to the structure of the communication system shown in FIG. 20. Details are not described herein again. When the optical cable vibration fault occurs in an optical signal transmission link, for example, when a communication optical cable 14 vibrates under an action of an external force, an anomaly occurs in first sampled parameters sampled by a second optical module 122 and a fourth optical module 124 that share a cable for transmission and that are in a second electronic device 112. FIG. 27 shows sampling diagrams obtained by collecting first sampled parameters by a second optical module and a fourth optical module when an optical cable vibration fault occurs. (1) in FIG. 27 is a sampling diagram obtained by collecting first sampled parameters by the second optical module when the optical cable vibration fault occurs. (2) in FIG. 27 is a sampling diagram obtained by collecting first sampled parameters by the fourth optical module when the optical cable vibration fault occurs. Refer to FIG. 26 and FIG. 27. When the optical cable vibration fault occurs in the communication system, a main feature of the sampling diagrams of the second optical module 122 and the fourth optical module 124 is as follows: A fluctuation event occurs in the first sampled parameters (for example, photogenerated currents), and a quantity and amplitude of fluctuations are directly related to a quantity and degree of vibrations. After the vibration disappears, the first sampled parameter may restore a before-fluctuation value.

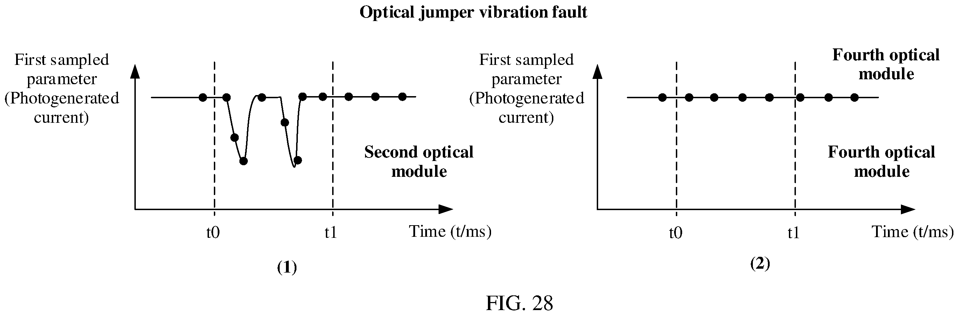

Still refer to FIG. 26. When the optical jumper vibration fault occurs in the optical signal transmission link, an anomaly occurs in first sampled parameters sampled by at least one of the second optical module 122 and the fourth optical module 124 that share a cable for transmission and that are in the second electronic device 112. FIG. 28 shows sampling diagrams obtained by collecting first sampled parameters by a second optical module and a fourth optical module when an optical jumper vibration fault occurs. (1) in FIG. 28 is a sampling diagram obtained by collecting first sampled parameters by the second optical module. (2) in FIG. 28 is a sampling diagram obtained by collecting first sampled parameters by the fourth optical module. Refer to FIG. 26 and FIG. 28. When the optical jumper vibration fault occurs in the communication system, a main feature of the sampling diagrams is as follows: A sampling diagram of one of the two optical modules that share a cable for transmission has a fluctuation characteristic, and a sampling diagram of the other optical module is normal. For example, in FIG. 28, the sampling diagram of the second optical module has a fluctuation characteristic, and the sampling diagram of the fourth optical module is normal.

During specific implementation, as shown in FIG. 26, a first processing unit in the second optical module 122 and a first processing unit in the fourth optical module 124 may determine the fault type information based on the first sampled parameters. For example, the fault type information corresponding to the sampling diagrams (1) and (2) in FIG. 27 is input optical power fluctuation, the fault type information corresponding to the sampling diagram (1) in FIG. 28 is input optical power fluctuation, and the sampling diagram (2) in FIG. 28 is normal (no fault type information exists). The second electronic device 112 may determine a fault cause and a fault point location based on the fault type information of the second optical module 122 and the fourth optical module 124 and a network topology relationship of a network system in which the optical module is locatedsecond 112 is. When the second electronic device 112 detects that the fault type information of at least two optical modules that share a cable for transmission is input optical power fluctuation, for example, the fault type information corresponding to the sampling diagrams of the second optical module 122 and the fourth optical module 124 in FIG. 27 is input optical power fluctuation, it may be determined that the fault cause is the optical cable vibration fault, and the fault point is at a location of the communication optical cable 14. When the second electronic device 112 detects that the fault type information of at least one of the optical modules that share a cable for transmission is input optical power fluctuation, and other optical modules are normal, for example, the fault type information corresponding to the sampling diagram of the second optical module 122 in FIG. 28 is input optical power fluctuation, and the sampling diagram of the fourth optical module 124 is normal, it may be determined that the fault cause is the optical jumper vibration fault, and the fault point is at a location of an optical jumper corresponding to the optical module whose fault type information is input optical power fluctuation.

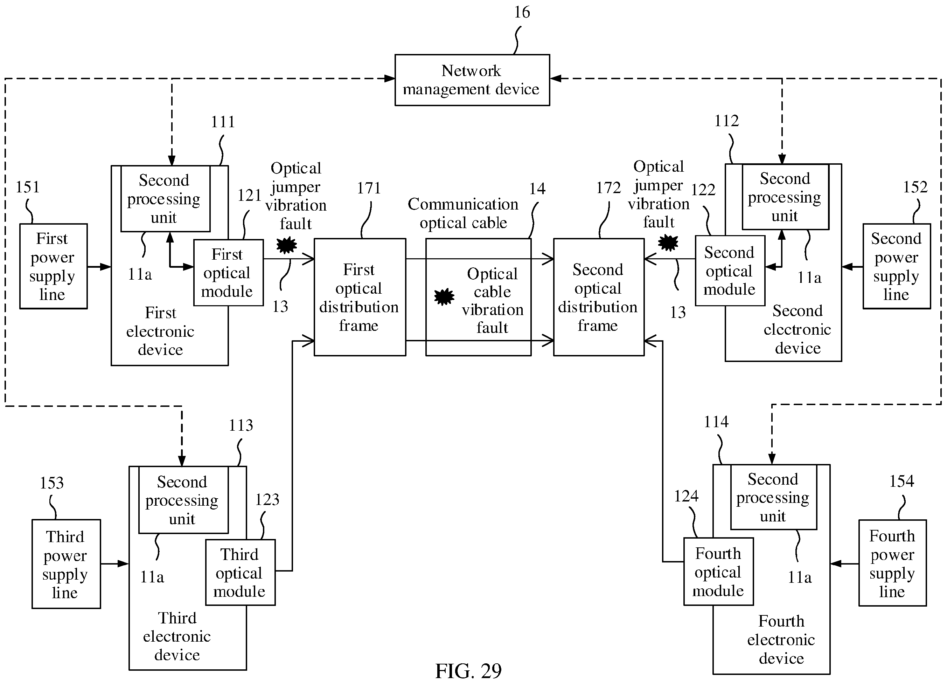

FIG. 29 is another diagram of a communication system in which an optical cable vibration fault or an optical jumper vibration fault occurs according to an embodiment of this application. FIG. 29 is different from FIG. 26 in that: In FIG. 29, a second optical module 122 and a fourth optical module 124 that share a cable for transmission are distributed in different electronic devices, where the second optical module 122 is located in a second electronic device 112, and the fourth optical module 124 is located in a fourth electronic device 114.

As shown in FIG. 29, when the optical cable vibration fault occurs in an optical signal transmission link, for example, when a communication optical cable 14 vibrates under an action of an external force, an anomaly occurs in first sampled parameters sampled by the second optical module 122 and the fourth optical module 124 that share a cable for transmission and that are in the second electronic device 112. For sampling diagrams obtained by collecting the first sampled parameters by the second optical module and the fourth optical module, refer to FIG. 27. Refer to FIG. 27 and FIG. 29. When the optical cable vibration fault occurs in the communication system, a main feature of the sampling diagrams of the second optical module 122 and the fourth optical module 124 is as follows: A fluctuation event occurs in the first sampled parameters (for example, photogenerated currents), and a quantity and amplitude of fluctuations are directly related to a quantity and degree of vibrations. After the vibration disappears, the first sampled parameter may restore a before-fluctuation value.

Still refer to FIG. 29. When the optical jumper vibration fault occurs in an optical signal transmission link, an anomaly occurs in first sampled parameters sampled by at least one of the second optical module 122 and the fourth optical module 124 that share a cable for transmission and that are in the second electronic device 112. For sampling diagrams obtained by collecting the first sampled parameters by the second optical module and the fourth optical module, refer to FIG. 28. Refer to FIG. 28 and FIG. 29. When the optical jumper vibration fault occurs in the communication system, a main feature of the sampling diagrams is as follows: A sampling diagram of one of the two optical modules that share a cable for transmission has a fluctuation characteristic, and a sampling diagram of the other optical module is normal. For example, in FIG. 28, the sampling diagram of the second optical module has a fluctuation characteristic, and the sampling diagram of the fourth optical module is normal.

During specific implementation, as shown in FIG. 29, a first processing unit in the second optical module 122 and a first processing unit in the fourth optical module 124 may determine the fault type information based on the first sampled parameters. For example, the fault type information corresponding to the sampling diagrams (1) and (2) in FIG. 27 is input optical power fluctuation, the fault type information corresponding to the sampling diagram (1) in FIG. 28 is input optical power fluctuation, and the sampling diagram (2) in FIG. 28 is normal (no fault type information exists). The second electronic device 112 obtains fault type information and fault generation time information of the second optical module 122, and reports the fault type information and the fault generation time information of the second optical module 122 to a network management device 16. The fourth electronic device 114 obtains fault type information and fault generation time information of the fourth optical module 124, and reports the fault type information and the fault generation time information of the fourth optical module 124 to the network management device 16. The network management device 16 may determine the fault cause and the fault point location based on the fault type information and fault generation time of the second optical module 122 and the fourth optical module 124 and the network topology relationship of the network system in which the optical module is locateds are. When the network management device 16 detects that the fault type information of at least two optical modules that share a cable for transmission is input optical power fluctuation, for example, the fault type information corresponding to the sampling diagrams of the second optical module 122 and the fourth optical module 124 in FIG. 27 is input optical power fluctuation, it may be determined that the fault cause is the optical cable vibration fault, and the fault point is at a location of the communication optical cable 14. When the network management device 16 detects that the fault type information of at least one of the optical modules that share a cable for transmission is input optical power fluctuation, and other optical modules are normal, for example, the fault type information corresponding to the sampling diagram of the second optical module 122 in FIG. 28 is input optical power fluctuation, and the sampling diagram of the fourth optical module 124 is normal, it may be determined that the fault cause is the optical jumper vibration fault, and the fault point is at a location of an optical jumper corresponding to the optical module whose fault type information is input optical power fluctuation.

In FIG. 16 to FIG. 29, any one of the first optical module 121, the second optical module 122, the third optical module 123, or the fourth optical module 124 may be any one of an optical-to-electrical conversion module, an optical amplification module, or an optical switching module. Correspondingly, the first sampled parameter may be a photogenerated current. When the first optical module 121, the second optical module 122, the third optical module 123, and the fourth optical module 124 are optical-to-electrical conversion modules, the optical-to-electrical conversion modules can generate and detect a plurality of real-time parameters. Based on these implementation parameters, a plurality of fault locating manners may be implemented. The optical-to-electrical conversion module has a plurality of parameters such as a photogenerated current, an optical signal amplitude, a pre-FEC bit error rate, a post-FEC bit error rate, an electrical eye pattern amplitude, an optical signal phase, an optical signal spectrum, and the like. In addition to the photogenerated current, any one of the optical signal amplitude, the pre-FEC bit error rate, the post-FEC bit error rate, the electrical eye pattern amplitude, the optical signal phase, and the optical signal spectrum may also be used as the foregoing first sampled parameter. In other words, the first processing unit in the optical module may determine the fault type information based on any one of the optical signal amplitude, the pre-FEC bit error rate, the post-FEC bit error rate, the electrical eye pattern amplitude, the optical signal phase, and the optical signal spectrum.

In some other embodiments of this application, in some fault scenarios of the communication system, at least two parameters may be used as the first sampled parameters. The first processing unit in the optical module may determine the fault type information based on the at least two parameters at a fault occurrence moment. Subsequently, the electronic device or the network management device may determine the fault cause and the fault point based on the fault type information and the network topology relationship.

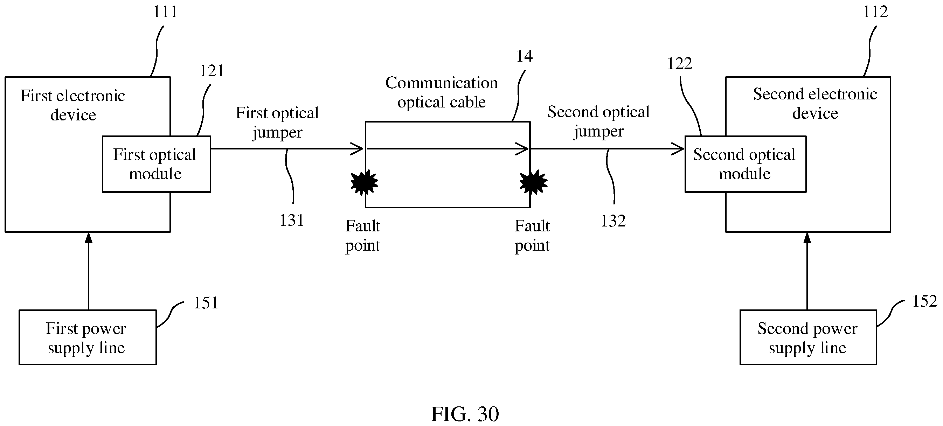

For example, FIG. 30 is a diagram of a communication system in which an optical path quality degradation fault occurs according to an embodiment of this application. As shown in FIG. 30, an optical signal output by a first optical module 121 in a first electronic device 111 is input to a second optical module 122 in a second electronic device 112 through a first optical jumper 131, a communication optical cable 14, and a second optical jumper 132. In this way, transmission of optical signals between the first optical module 121 and the second optical module 122 is implemented. The first optical module 121 and the second optical module 122 may be optical-to-electrical conversion modules. Generally, the optical path quality degradation fault aggravates multipath interference (Multi Path Interference, MPI) degradation, and triggers an optical signal transmission link to generate bit errors. A fault point is usually a pluggable connection point between the communication optical cable 14 and an optical jumper (the first optical jumper 131 or the second optical jumper 132). Therefore, when the optical path quality degradation fault occurs in the optical signal transmission link, an anomaly occurs in first sampled parameters sampled by the second optical module 122 in the second electronic device 112. The first sampled parameter may include a pre-FEC bit error rate and a photogenerated current. During actual application, an optical digital signal processor may be disposed in the second optical module 122, and a function of detecting and reporting a bit error rate is implemented by using the optical digital signal processor.

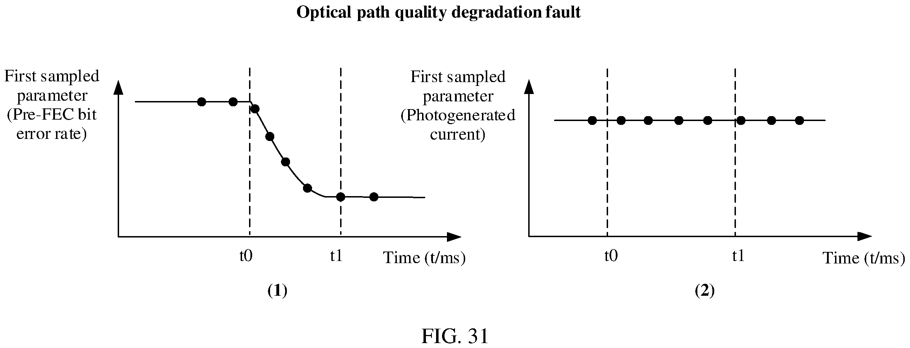

FIG. 31 shows sampling diagrams obtained by collecting first sampled parameters by a second optical module when an optical path quality degradation fault occurs. (1) in FIG. 31 is a sampling diagram obtained by collecting pre-FEC bit error rates by the second optical module when the optical path quality degradation fault occurs. (2) in FIG. 31 is a sampling diagram obtained by collecting photogenerated currents by the second optical module when the optical path quality degradation fault occurs. Refer to FIG. 30 and FIG. 31. When the optical path degradation fault occurs in the communication system, a main feature of the sampling diagrams obtained through collection by the second optical module 122 is as follows: The pre-FEC bit error rate degrades to a specific threshold, and the photogenerated current does not change within a fault window (generally a corresponding optical power is within a range of 1 dB). During specific implementation, when identifying that the pre-FEC bit error rate and the photogenerated current meet the characteristic, a first processing unit in the second optical module 122 may determine that the fault type information is optical power multipath interference degradation. The second electronic device 112 may determine, based on the fault type information and the network topology relationship, that the fault cause is the optical path quality degradation fault, and the fault point is the pluggable connection point between the communication optical cable 14 and the optical jumper (the first optical jumper 131 or the second optical jumper 132). For example, the pluggable connection point between the communication optical cable 14 and the optical jumper is contaminated.

The foregoing describes a plurality of scenarios in which a fault occurs in the communication system. During specific implementation, the communication system may also generate other fault scenarios. Examples are not described one by one herein. The following describes in detail a specific process in which the optical module determines the fault type information in this embodiment of this application with reference to the accompanying drawings.

As shown in FIG. 5, the optical module in this embodiment of this application may include the first processing unit 201, and the sampling unit 202, the sampled information storage unit 203, and the fault information storage unit 204 that are separately electrically connected to the first processing unit 201. The sampling unit 202 is configured to collect first sampled parameters, and store the first sampled parameters in the sampled information storage unit 203 by using the first processing unit 201. The first processing unit 201 is configured to: when identifying alarm information, read the first sampled parameters in the sampled information storage unit 203, determine, based on the first sampled parameters, fault type information corresponding to the alarm information, and store the fault type information in the fault information storage unit 204. In this way, functions such as collection, storage, and analysis of the first sampled parameters may be implemented inside the optical module 12. Subsequently, the electronic device 11 or the network management device 16 reads the fault type information stored in the optical module 12, and can quickly and accurately determine the fault cause and the fault point location based on the network topology relationship of the communication system.

To help the electronic device or the network management device subsequently determine the fault cause and the fault point location, the fault information storage unit 204 may store the fault type information, and the fault information storage unit 204 may further store fault generation time information corresponding to the alarm information.

Still refer to FIG. 5. The sampling unit 202 may be specifically configured to collect the first sampled parameters at millisecond-level sampling time precision. The millisecond-level sampling time precision indicates that the sampling unit 202 collects at least two pieces of data within 1s. Higher sampling precision of the sampling unit 202 may indicate that more sampled data is provided for determining the fault type information. In addition, because the optical module 12 does not need to send the first sampled parameters to the electronic device 11, sampling precision of the sampling unit 202 is high, and data transmission pressure between the optical module 12 and the electronic device 11 is not increased. During specific implementation, the optical module 12 in a normal operating state may collect the first sampled parameters in real time, encode the first sampled parameters, and store the encoded first sampled parameters in the sampled information storage unit 203 by using the first processing unit 201. If storage space in the sampled information storage unit 203 is full, the space is covered from the beginning in a wrapped connection manner.

The first processing unit 201 may be specifically configured to: when identifying the alarm information, continue to store, in the sampled information storage unit 203, the first sampled parameters that are of p sampling points and that are collected by the sampling unit 202, where p is an integer greater than or equal to 0, during specific implementation, a specific value of p may be set according to an application scenario, and for example, p may be a value ranging from 10 to 1000; read the first sampled parameters (including at least two pieces of sampling point data) that are in a preset time window and that are in the sampled information storage unit 203; and determine, based on the read first sampled parameters, the fault type information corresponding to the alarm information. In this embodiment of this application, when identifying the alarm information, the first processing unit 201 continues to store, in the sampled information storage unit 203, the first sampled parameters that are of the p sampling points and that are collected by the sampling unit 202, and reads the first sampled parameters that are in the preset time window and that are in the sampled information storage unit 203, where p is greater than or equal to 0. In other words, when identifying the alarm information, the first processing unit 201 may immediately read the first sampled parameters in the sampled information storage unit 203, or may delay a period of time before reading the first sampled parameters in the sampled information storage unit 203. In this way, since the first sampled parameters obtained by the first processing unit after identifying the alarm information is large in data amount, the first processing unit 201 may determine, according to a waveform of the obtained first sampled parameters in the preset time window, the fault type information corresponding to the alarm information. Therefore, accuracy of fault analysis is high.

During actual application, after reading the first sampled parameters that are in the preset time window and that are in the sampled information storage unit 203, the first processing unit 201 may extract feature parameters of the first sampled parameters in the preset time window, and may, for example, store the extracted feature parameters in a buffer queue of the first processing unit 201 according to a classification result by using a supervised and/or unsupervised algorithm. The first processing unit 201 may classify fault types based on the feature parameters of the first sampled parameters in the preset time window, to determine the fault type information corresponding to the alarm information.

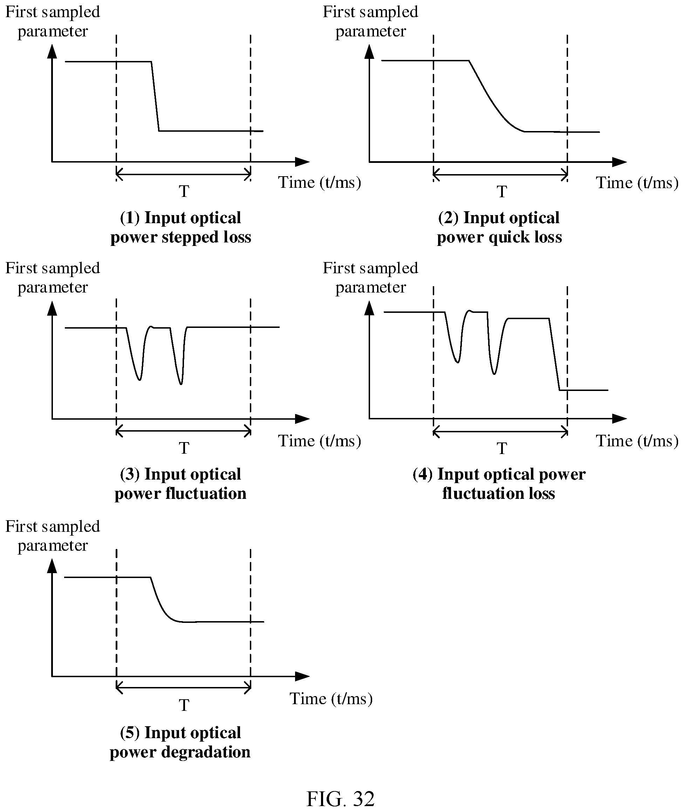

In some embodiments of this application, for example, in the several fault scenarios shown in FIG. 16 to FIG. 29, the first sampled parameter may include a photogenerated current or an optical signal amplitude. In some cases, the first sampled parameter may alternatively be another parameter. This is not limited herein. FIG. 32 shows diagrams of waveforms of first sampled parameters corresponding to different fault type information according to an embodiment of this application. As shown in FIG. 32, the first processing unit 201 may be specifically configured to:
after reading the first sampled parameters in the preset time window T, compare the first sampled parameter at an initial moment with the first sampled parameter at a last moment.

As shown in (3) in FIG. 32, if a difference between the first sampled parameter at the initial moment and the first sampled parameter at the last moment is less than a first threshold (that is, the difference between the first sampled parameter at the initial moment and the first sampled parameter at the last moment is small), and a fluctuation event occurs in a waveform rule of the first sampled parameters in the preset time window T, in other words, the first sampled parameters in the preset time window T may restore a before-fluctuation value after fluctuation, the fault type information corresponding to the alarm information is input optical power fluctuation;
as shown in (4) in FIG. 32, if a difference between the first sampled parameter at the initial moment and the first sampled parameter at the last moment is greater than the first threshold, the first sampled parameter at the last moment is less than a second threshold (that is, the difference between the first sampled parameter at the initial moment and the first sampled parameter at the last moment is large, and a first sampled value at the last moment is small), and a fluctuation and descent event occurs in a waveform rule of the first sampled parameters in the preset time window T, in other words, the first sampled parameters in the preset time window T have a small value after fluctuation, the fault type information corresponding to the alarm information is an input optical power fluctuation loss;
as shown in (2) in FIG. 32, if a difference between the first sampled parameter at the initial moment and the first sampled parameter at the last moment is greater than the first threshold, the first sampled parameter at the last moment is less than a second threshold (that is, the difference between the first sampled parameter at the initial moment and the first sampled parameter at the last moment is large, and the first sampled parameter at the last moment is small), and a quick descent event occurs in a waveform rule of the first sampled parameters in the preset time window T, in other words, the first sampled parameters in the preset time window T quickly decrease to a small value, the fault type information corresponding to the alarm information is an input optical power quick loss;
as shown in (1) in FIG. 32, if a difference between the first sampled parameter at the initial moment and the first sampled parameter at the last moment is greater than the first threshold, the first sampled parameter at the last moment is less than a second threshold (that is, the difference between the first sampled parameter at the initial moment and the first sampled parameter at the last moment is large, and a first sampled value at the last moment is small), and a stepped descent event occurs in a waveform rule of the first sampled parameters in the preset time window T, in other words, the first sampled parameters in the preset time window T decrease to a small value in a stepped manner, the fault type information corresponding to the alarm information is an input optical power stepped loss; or
as shown in (5) in FIG. 32, if a difference between the first sampled parameter at the initial moment and the first sampled parameter at the last moment is greater than the first threshold (that is, the difference between the first sampled parameter at the initial moment and the first sampled parameter at the last moment is large), the first sampled parameter at the last moment is greater than a second threshold, and a waveform rule of the first sampled parameters in the preset time window T has a degradation characteristic, in other words, in the preset time window T, the first sampled parameters decrease to a specific extent, and the first sampled parameter at the last moment ranges from the second threshold and the first threshold, for example, the first sampled parameter at the last moment may be half of the first sampled parameter at the initial moment, the fault type information corresponding to the alarm information is input optical power degradation.

In this embodiment of this application, the fault type information is determined based on the first sampled parameters in the preset time window. The fault type information corresponding to the alarm information can be accurately determined based on the waveform and the endpoint values of the first sampled parameters in the preset time window, so that accuracy of subsequently determining the fault cause and the fault point is high.

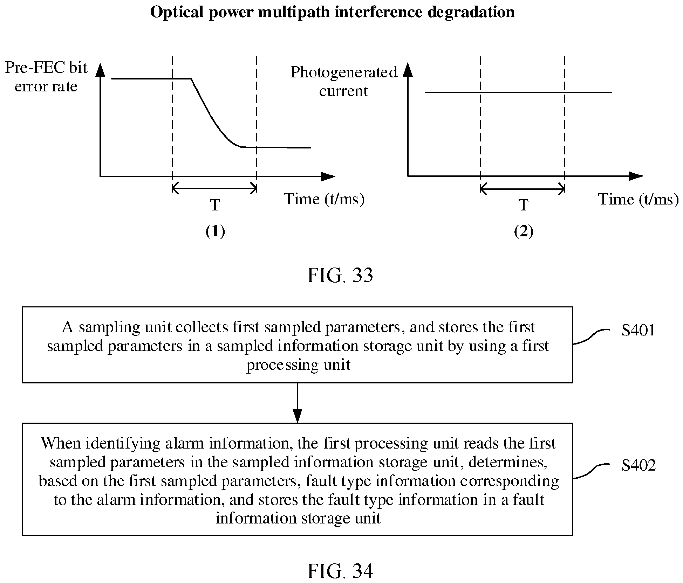

In some other embodiments of this application, for example, in the optical path quality degradation fault scenario shown in FIG. 30, the first sampled parameter may include at least two types of parameters. For example, the first sampled parameter may include a photogenerated current and a pre-FEC bit error rate. The first processing unit in the optical module may determine the fault type information based on the at least two parameters used when a fault occurs. In this way, the first processing unit performs fault classification based on a large quantity of parameters, and can accurately determine a fault type corresponding to the alarm information. This improves accuracy of locating a fault cause. FIG. 33 shows diagrams of waveforms of first sampled parameters corresponding to an optical path quality degradation fault according to an embodiment of this application. (1) in FIG. 33 is a diagram of a waveform of pre-FEC bit error rates when the optical path quality degradation fault occurs. (2) in FIG. 33 is a diagram of a waveform of photogenerated currents when the optical path quality degradation fault occurs. As shown in FIG. 33, the first processing unit 201 may be specifically configured to:
after reading the first sampled parameters in the preset time window, compare the photogenerated current at the initial moment with the photogenerated current at the last moment, and compare the pre-FEC bit error rate at the initial moment with the pre-FEC bit error rate at the last moment.

If a difference between the photogenerated current at the initial moment and the photogenerated current at the last moment is less than a first threshold, and a difference between the pre-FEC bit error rate at the initial moment and the pre-FEC bit error rate at the last moment is greater than a third threshold (that is, the difference between the photogenerated current at the initial moment and the photogenerated current at the last moment is small, and the difference between the pre-FEC bit error rate at the initial moment and the pre-FEC bit error rate at the last moment is large), in other words, in the preset time window T, the pre-FEC bit error rate decreases, and the photogenerated current basically does not change, the fault type information corresponding to the alarm information is optical power multipath interference degradation.

During specific implementation, specific values of the first threshold, the second threshold, the third threshold, and the preset time window may be set according to factors such as an application scenario of the network system.

The optical module in this embodiment of this application may perform a fault type determining method. FIG. 34 is a flowchart of a fault type determining method according to an embodiment of this application. As shown in FIG. 34, the fault type determining method may include the following steps.

S401: The sampling unit collects first sampled parameters, and stores the first sampled parameters in the sampled information storage unit by using the first processing unit.

S402: When identifying alarm information, the first processing unit reads the first sampled parameters in the sampled information storage unit, determines, based on the first sampled parameters, fault type information corresponding to the alarm information, and stores the fault type information in the fault information storage unit.

In the fault type determining method provided in this embodiment of this application, when identifying the alarm information, the first processing unit may determine, based on the first sampled parameters, the fault type information corresponding to the alarm information, and store the fault type information in the fault information storage unit. In this way, functions such as collection, storage, and analysis of the first sampled parameters may be implemented inside the optical module. Subsequently, the electronic device or the network management device reads the fault type information stored in the optical module, and can quickly and accurately determine the fault cause and the fault point location based on the network topology relationship of the communication system. In this way, the fault in the communication system can be quickly corrected, and troubleshooting costs can be reduced.

In this embodiment of this application, the optical module has at least the following several manners of determining an alarm.

### Determining manner 1:

As shown in FIG. 10, the optical module 12 may further include the alarm information generation unit 205.

The fault type determining method may further include:
The sampling unit 202 sends the first sampled parameters to the alarm information generation unit 205; and
the alarm information generation unit 205 determines whether the first sampled parameters are within a preset threshold range, generates alarm information when the first sampled parameters are out of the threshold range, and sends the alarm information to the first processing unit 201.

During specific implementation, the first sampled parameter may be an analog parameter, a quantized analog parameter, or a digital parameter. For example, the alarm information may be that a digital logic signal changes from a low level to a high level, or the alarm information may be that a digital logic signal changes from a high level to a low level. Certainly, the alarm information may alternatively be information of another type. This is not limited herein. The alarm information generation unit 205 may receive, in real time, the plurality of first sampled parameters output by the sampling unit 202, compare the received first sampled parameters with endpoint values of the preset threshold range one by one, and generate the alarm information when the first sampled parameters are greater than a maximum value of the preset threshold range or less than a minimum value of the preset threshold range.

In the determining manner 1, a parameter used by the alarm information generation unit 205 to determine an alarm status and a parameter used by the first processing unit 201 to determine the fault type information may be the same. For example, when the optical module in this embodiment of this application is an optical-to-electrical conversion module, an optical-to-electrical amplification module, an optical switching module, or another module, the first sampled parameter may include a photogenerated current. When the optical module is an optical-to-electrical conversion module, the first sampled parameter may include parameters such as a photogenerated current, an optical signal amplitude, a pre-FEC bit error rate, a post-FEC bit error rate, an electrical eye pattern amplitude, an optical signal phase, or an optical signal spectrum. Certainly, in some cases, the first sampled parameter may further include another parameter. This is not limited herein.

### Determining manner 2:

As shown in FIG. 10, the optical module 12 may further include the alarm information generation unit 205.

The fault type determining method may further include:
The sampling unit 202 collects second sampled parameters, and sends the second sampled parameters to the alarm information generation unit, where the second sampled parameters are different from the first sampled parameters; and
the alarm information generation unit 205 determines whether the second sampled parameters are within a preset threshold range, generates alarm information when the second sampled parameters are out of the threshold range, and sends the alarm information to the first processing unit. The alarm information generation unit 205 may receive, in real time, the plurality of second sampled parameters output by the sampling unit 202, compare the received second sampled parameters with endpoint values of the preset threshold range one by one, and generate the alarm information when the second sampled parameters are greater than a maximum value of the preset threshold range or less than a minimum value of the preset threshold range.

The sampling unit may be specifically configured to collect the second sampled parameters in real time at millisecond-level sampling time precision. The millisecond-level sampling time precision indicates that the sampling unit collects at least two pieces of data within 1s. Higher sampling precision of the sampling unit may indicate that more sampled data is provided for determining the fault type information. During specific implementation, the sampling unit 202 may collect the first sampled parameters and the second sampled parameters at the same time. Alternatively, the sampling unit 202 may collect the first sampled parameters and the second sampled parameters alternately, and may, for example, collect the second sampled parameter several ms (for example, 5 ms) after collecting the first sampled parameter, then collect the first sampled parameter several ms later, and so on.

The determining manner 2 is different from the determining manner 1 in that a parameter used by the alarm information generation unit 205 to determine an alarm status and a parameter used by the first processing unit 201 to determine the fault type information are different. Specifically, the first processing unit 201 determines the fault type information based on the first sampled parameters, and the alarm information generation unit 205 determines the alarm status based on the second sampled parameters different from the first sampled parameters. For example, when the optical module is an optical-to-electrical conversion module, the first sampled parameter may include a photogenerated current, and the second sampled parameter may include an optical signal amplitude; or the first sampled parameter may include a photogenerated current, and the second sampled parameter may include a pre-FEC bit error rate. During specific implementation, the first sampled parameter and the second sampled parameter may alternatively include another parameter. This is not limited herein.

In the determining manner 1 and the determining manner 2, the alarm information generation unit 205 is configured to monitor the first sampled parameters in real time. When the first sampled parameters are abnormal, the alarm information generation unit 205 may detect an anomaly in a timely manner, generate the alarm information, and send the alarm information to the first processing unit 201.

### Determining manner 3:

As shown in FIG. 5, a function of determining the alarm status in the optical module 12 may alternatively be implemented by using the first processing unit 201.

Similar to the alarm information generation unit functioning in the determining manner 1, the first processing unit in the determining manner 3 may determine the alarm status based on the first sampled parameters, that is, the first processing unit 201 may determine whether the first sampled parameters are within a preset threshold range, and generate the alarm information when the first sampled parameters are out of the threshold range. The first processing unit 201 may receive, in real time, the plurality of first sampled parameters output by the sampling unit 202, compare the received first sampled parameters with endpoint values of the preset threshold range one by one, and generate the alarm information when the first sampled parameters are greater than a maximum value of the preset threshold range or less than a minimum value of the preset threshold range.

Alternatively, similar to the alarm information generation unit functioning in the determining manner 2, the first processing unit in the determining manner 3 may determine the alarm status based on the second sampled parameters different from the first sampled parameters, that is, the first processing unit 201 may determine whether the second sampled parameters are within a preset threshold range, and generate the alarm information when the second sampled parameters are out of the threshold range. The first processing unit 201 may receive, in real time, the plurality of second sampled parameters output by the sampling unit 202, compare the received second sampled parameters with endpoint values of the preset threshold range one by one, and generate the alarm information when the second sampled parameters are greater than a maximum value of the preset threshold range or less than a minimum value of the preset threshold range.

As shown in FIG. 5, in a possible implementation, the sampling unit 202 collects the first sampled parameters at millisecond-level sampling time precision. The millisecond-level sampling time precision indicates that the sampling unit 202 collects at least two pieces of data within 1s. Higher sampling precision of the sampling unit 202 may indicate that more sampled data is provided for determining the fault type information. In addition, because the optical module 12 does not need to send the first sampled parameters to the electronic device 11, sampling precision of the sampling unit 202 is high, and data transmission pressure between the optical module 12 and the electronic device 11 is not increased. During specific implementation, the optical module 12 in a normal operating state may collect the first sampled parameters in real time, encode the first sampled parameters, and store the encoded first sampled parameters in the sampled information storage unit 203 by using the first processing unit 201. If storage space in the sampled information storage unit 203 is full, the space is covered from the beginning in a wrapped connection manner.

The foregoing step S402 may specifically include:
When identifying the alarm information, the first processing unit 201 continues to store, in the sampled information storage unit 203, the first sampled parameters that are of p sampling points and that are collected by the sampling unit 202, where p is an integer greater than or equal to 0, during specific implementation, a specific value of p may be set according to an application scenario, and for example, p may be a value ranging from 10 to 1000; and
the first processing unit 201 reads the first sampled parameters (including at least two pieces of sampling point data) that are in a preset time window and that are in the sampled information storage unit 203; and
determines, based on the read first sampled parameters, the fault type information corresponding to the alarm information.

In this embodiment of this application, when identifying the alarm information, the first processing unit 201 continues to store, in the sampled information storage unit 203, the first sampled parameters that are of the p sampling points and that are collected by the sampling unit 202, and reads the first sampled parameters that are in the preset time window and that are in the sampled information storage unit 203, where p is greater than or equal to 0. In other words, when identifying the alarm information, the first processing unit 201 may immediately read the first sampled parameters in the sampled information storage unit 203, or may delay a period of time before reading the first sampled parameters in the sampled information storage unit 203. In this way, since the first sampled parameters obtained by the first processing unit after identifying the alarm information is large in data amount, the first processing unit 201 may determine, according to a waveform of the obtained first sampled parameters in the preset time window, the fault type information corresponding to the alarm information. Therefore, accuracy of fault analysis is high.

In a possible implementation, after reading the first sampled parameters in the sampled information storage unit and before determining the fault type information corresponding to the alarm information, the first processing unit may further detect whether the sampled information storage unit is zeroed out, and if the sampled information storage unit is not zeroed out, may control the sampled information storage unit to be zeroed out.

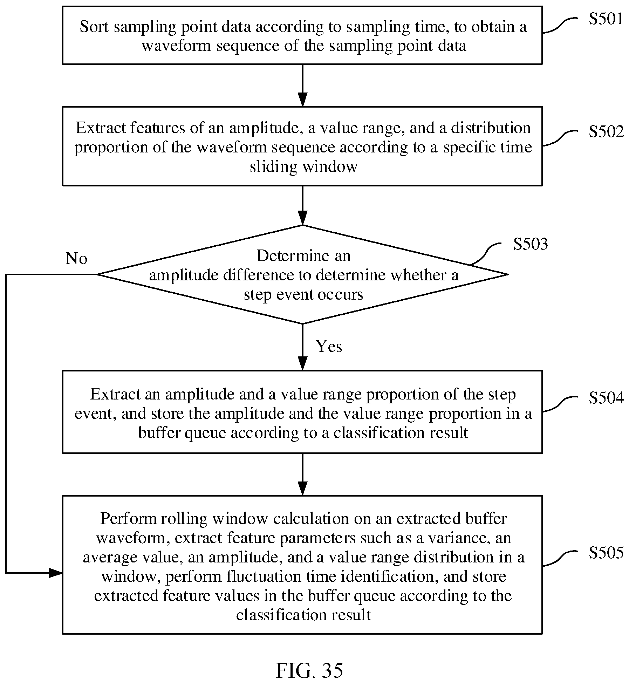

During actual application, after reading the first sampled parameters that are in the preset time window and that are in the sampled information storage unit 203, the first processing unit 201 may extract feature parameters of the first sampled parameters in the preset time window. The first processing unit 201 may classify fault types based on the feature parameters of the first sampled parameters in the preset time window, to determine the fault type information corresponding to the alarm information. FIG. 35 is a flowchart of extracting feature parameters of the first sampled parameters by the first processing unit according to an embodiment of this application. As shown in FIG. 35, a method for extracting the feature parameters of the first sampled parameters by the first processing unit may include the following steps.

S501: Sort sampling point data according to sampling time, to obtain a waveform sequence of the sampling point data. During specific implementation, after collecting the first sampled parameters, the sampling unit may encode the first sampled parameters, and store the encoded first sampled parameters in the sampled information storage unit by using the first processing unit. Therefore, in step S501, the sampling point data may be sorted based on the encoding.

S502: Extract features of an amplitude, a value range, and a distribution proportion of the waveform sequence according to a specific time sliding window.

S503: Determine an amplitude difference to determine whether a step event occurs; and if yes, perform step S504; or if not, perform step S505.

S504: Extract an amplitude and a value range proportion of the step event, and store the amplitude and the value range proportion in a buffer queue according to a classification result.

S505: Perform rolling window calculation on an extracted buffer waveform, extract feature parameters such as a variance, an average value, an amplitude, and a value range distribution in a window, perform fluctuation time identification, and store extracted feature values in the buffer queue according to the classification result.

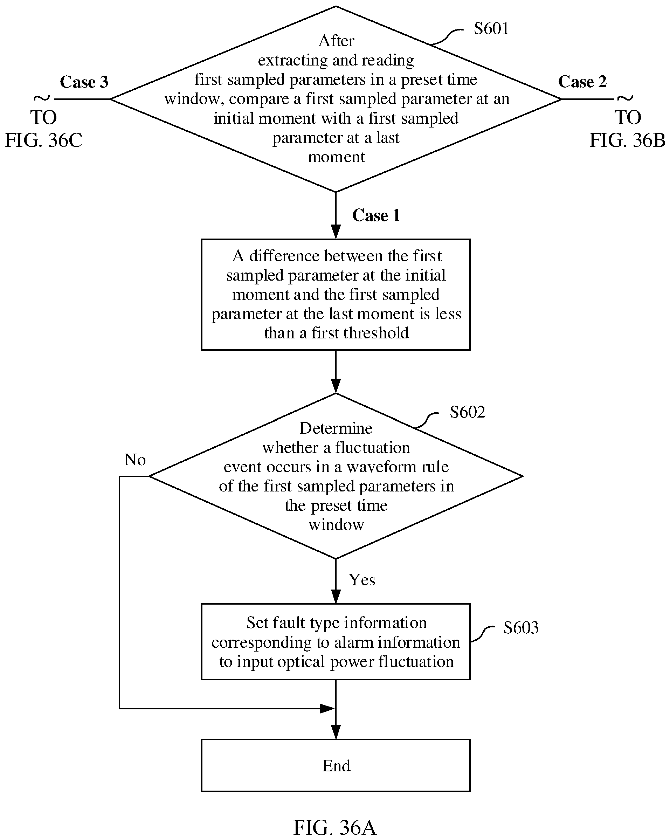

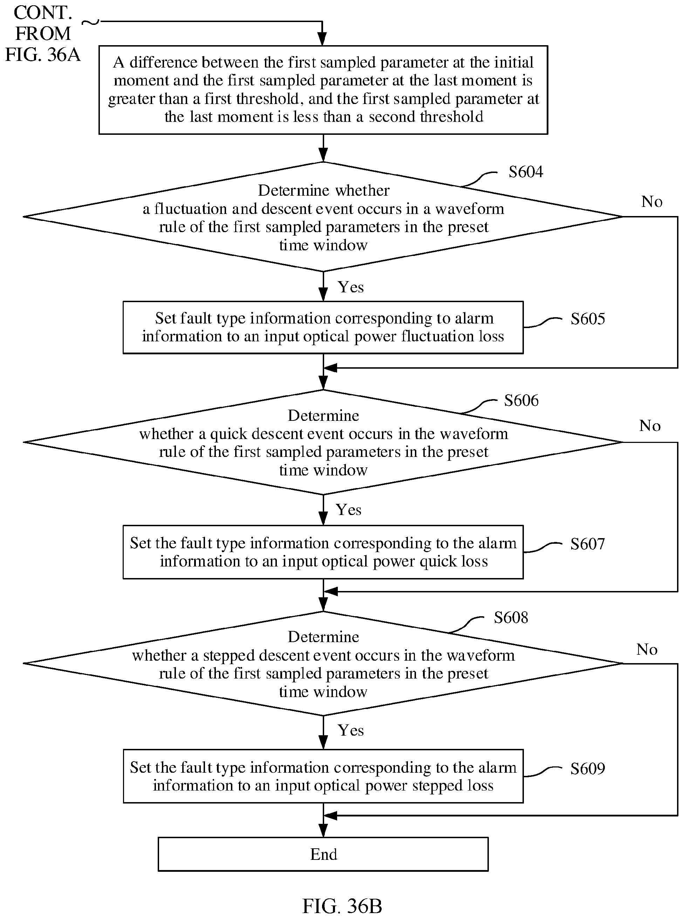

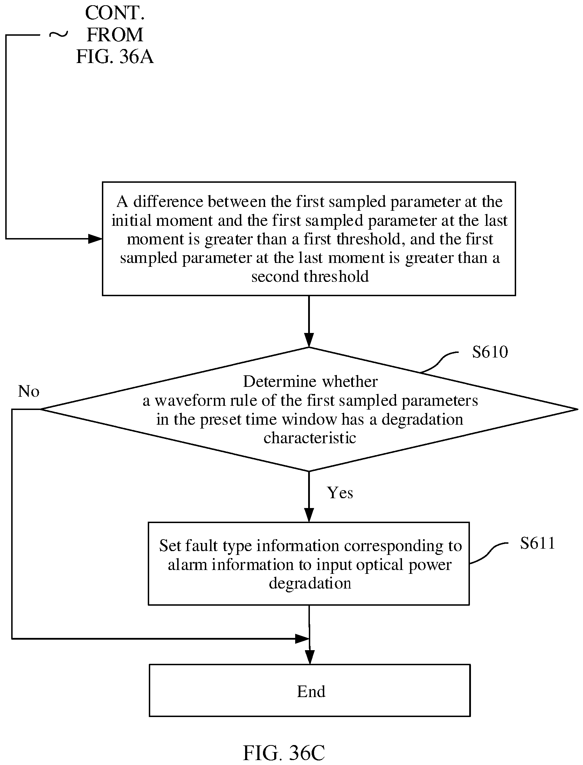

In some embodiments of this application, for example, in the several fault scenarios shown in FIG. 16 to FIG. 29, the first sampled parameter may include a photogenerated current or an optical signal amplitude. In some cases, the first sampled parameter may alternatively be another parameter. This is not limited herein. FIG. 36 is a flowchart of determining fault type information by a first processing unit according to an embodiment of this application. As shown in FIG. 36, that the first processing unit determines, based on the read first sampled parameters, the fault type information corresponding to the alarm information may specifically include the following steps.

S601: After reading the first sampled parameters in the preset time window, compare the first sampled parameter at an initial moment with the first sampled parameter at a last moment. During specific implementation, the first processing unit may extract events in a buffer queue and sort the events according to time, so as to determine, in a subsequent step, whether a fluctuation event, a fluctuation and descent event, or the like occurs in the waveform of the first sampled parameters.

Case 1: A difference between the first sampled parameter at the initial moment and the first sampled parameter at the last moment is less than a first threshold. That is, the first sampled parameter at the initial moment slightly changes to the first sampled parameter at the last moment. For example, when the first sampled parameter is a photogenerated current, an optical power change corresponding to the difference between the photogenerated current at the initial moment and the photogenerated current at the last moment is about 1 dB. Perform step S602.

S602: Determine whether a fluctuation event occurs in a waveform rule of the first sampled parameters in the preset time window; and if yes, perform step S603; or if not, end this procedure.

S603: Set the fault type information corresponding to the alarm information to input optical power fluctuation.

Case 2: A difference between the first sampled parameter at the initial moment and the first sampled parameter at the last moment is greater than the first threshold, and the first sampled parameter at the last moment is less than a second threshold. That is, the difference between the first sampled parameter at the initial moment and the first sampled parameter at the last moment is large, and a first sampled value at the last moment is small (a state at the last moment is close to a state of no photocurrent). Perform step S604.

S604: Determine whether a fluctuation and descent event occurs in a waveform rule of the first sampled parameters in the preset time window, that is, determine whether the first sampled parameters have a fluctuation characteristic and whether the first sampled parameters show a descent trend over time; and if yes, perform step S605; or if not, perform step S606.

S605: Set the fault type information corresponding to the alarm information to an input optical power fluctuation loss.

S606: Determine whether a quick descent event occurs in the waveform rule of the first sampled parameters in the preset time window, for example, if a time window in which the first sampled parameter decreases from a normal value to no photogenerated current ranges from 20 ms to 500 ms, the waveform rule of the first sampled parameters has a quick descent characteristic; if yes, perform step S607; or if not, perform step S608.

S607: Set the fault type information corresponding to the alarm information to an input optical power quick loss.

S608: Determine whether a stepped descent event occurs in the waveform rule of the first sampled parameters in the preset time window, for example, if a time window in which the first sampled parameter decreases from a normal value to no photogenerated current is less than 20 ms, the waveform rule of the first sampled parameter has a stepped descent characteristic; and if yes, perform step S609; or if not, end this procedure.

S609: Set the fault type information corresponding to the alarm information to an input optical power stepped loss.

Case 3: A difference between the first sampled parameter at the initial moment and the first sampled parameter at the last moment is greater than the first threshold, and the first sampled parameter at the last moment is greater than a second threshold. For example, when the first sampled parameter is a photogenerated current, an optical power corresponding to the photogenerated current decreases by about 3 dB. Perform step S610.

S610: Determine whether a waveform rule of the first sampled parameters in the preset time window has a degradation characteristic (the first sampled parameters show a descent trend over time but not a stepped descent); and if yes, perform step S611; or if not, end this procedure.

S611: Set the fault type information corresponding to the alarm information to input optical power degradation.

During specific implementation, different bits in the fault information storage unit may store different fault type information respectively. Table 1 describes a list of correspondences between bits in the fault information storage unit and the fault type information. As shown in Table 1, a bit 3 to a bit 7 in the fault information storage unit may be set as bits for storing the fault type information, and a bit 0, a bit 1, and a bit 2 may be set as reserved bits. If the bit 3 to the bit 7 are set to 0, it may indicate that no fault occurs. When the bit 7 is set to 1, it may indicate that the fault type information is the input optical power stepped loss, and the corresponding fault cause is a device power-off fault. When a bit 6 is set to 1, it may indicate that the fault type information is the input optical power quick loss, and the corresponding fault cause is an optical jumper fall-off fault. When a bit 5 is set to 1, it may indicate that the fault type information is the input optical power fluctuation loss, and the corresponding fault cause is an optical cable breakage fault or an optical jumper damage fault. When a bit 4 is set to 1, it may indicate that the fault type information is input optical power fluctuation, and the corresponding fault cause is an optical cable vibration fault or an optical jumper vibration fault. When the bit 3 is set to 1, it may indicate that the fault type information is input optical power degradation, and the corresponding fault cause is an optical jumper bending fault. In the foregoing step S603, the bit 4 may be set to 1. In the foregoing step S605, the bit 5 may be set to 1. In the foregoing step S607, the bit 6 may be set to 1. In the foregoing step S609, the bit 7 may be set to 1. In the foregoing step S611, the bit 3 may be set to 1.

In this embodiment of this application, the correspondences shown in Table 1 are used as an example. During specific implementation, the correspondences between the bits in the fault information storage unit and the fault type information may be set based on an actual requirement. This is not limited herein.

**Table 1 List of the correspondences between the bits in the fault information storage unit and the fault type information**

| Bit | Fault type information | Value meaning | Fault cause |
|---|---|---|---|
| Bit 7 | Input optical power stepped loss | 0: No fault occurs | Device power-off fault |
| | | 1: A fault occurs | |
| Bit 6 | Input optical power quick loss | 0: No fault occurs | Optical jumper fall-off fault |
| | | 1: A fault occurs | |
| Bit 5 | Input optical power fluctuation loss | 0: No fault occurs | Optical cable breakage fault or optical jumper damage fault |
| | | 1: A fault occurs | |
| Bit 4 | Input optical power fluctuation | 0: No fault occurs | Optical cable vibration fault or optical jumper vibration fault |
| | | 1: A fault occurs | |
| Bit 3 | Input optical power degradation | 0: No fault occurs | Optical jumper bending fault |
| | | 1: A fault occurs | |
| Bit 2 | Reserved bits | | |
| Bit 1 | Reserved bits | | |
| Bit 0 | Analysis result status identifier | 0: Being analyzed; | This bit is optional. When the analysis result status identifier is not provided, this bit is reserved. |
| | | 1: Analysis completed | |
| | | | When the analysis result status identifier is provided and is being analyzed, this bit is set to 0. After analysis is completed, this bit is set to 1. |

In some other embodiments of this application, for example, in the optical path quality degradation fault scenario shown in FIG. 30, the first sampled parameter may include at least two types of parameters. For example, the first sampled parameter may include a photogenerated current and a pre-FEC bit error rate. Refer to FIG. 33. That the first processing unit determines, based on the read first sampled parameters, the fault type information corresponding to the alarm information may specifically include:
after reading the first sampled parameters in the preset time window, comparing the photogenerated current at the initial moment with the photogenerated current at the last moment, and comparing the pre-FEC bit error rate at the initial moment with the pre-FEC bit error rate at the last moment.

If a difference between the photogenerated current at the initial moment and the photogenerated current at the last moment is less than a first threshold, and a difference between the pre-FEC bit error rate at the initial moment and the pre-FEC bit error rate at the last moment is greater than a third threshold (that is, the difference between the photogenerated current at the initial moment and the photogenerated current at the last moment is small, and the difference between the pre-FEC bit error rate at the initial moment and the pre-FEC bit error rate at the last moment is large), in other words, in the preset time window T, the pre-FEC bit error rate decreases, and the photogenerated current basically does not change, the fault type information corresponding to the alarm information is optical power multipath interference degradation.

During specific implementation, bits for storing the fault type information may be set in the fault information storage unit. Table 2 describes another list of correspondences between bits in the fault information storage unit and the fault type information. As shown in Table 2, a bit 7 in the fault information storage unit may be set as a bit for storing the fault type information, and a bit 0 to a bit 6 are set as reserved bits. When the bit 7 is set to 0, it indicates that no fault occurs. When the bit 7 is set to 1, it indicates that the fault type information is optical power multipath interference degradation, and the corresponding fault cause is optical path quality degradation. When identifying that the difference between the photogenerated current at the initial moment and the photogenerated current at the last moment is less than the first threshold, and the difference between the pre-FEC bit error rate at the initial moment and the pre-FEC bit error rate at the last moment is greater than the third threshold, the first processing unit may set the bit 7 in the fault information storage unit to 1.

In this embodiment of this application, the correspondences shown in Table 2 are used as an example. During specific implementation, the correspondences between the bits in the fault information storage unit and the fault type information may be set based on an actual requirement. This is not limited herein.

During specific implementation, specific values of the first threshold, the second threshold, the third threshold, and the preset time window may be set according to factors such as an application scenario of the network system.

**Table 2 Another list of the correspondences between the bits in the fault information storage unit and the fault type information**

| Bit | Fault type information | Value meaning | Note |
|---|---|---|---|
| Bit 7 | Optical power multipath interference degradation | 0: No fault occurs | Optical path quality degradation fault |
| | | 1: A fault occurs | |
| Bit 6 | Reserved bits | | |
| Bit 5 | Reserved bits | | |
| Bit 4 | Reserved bits | | |
| Bit 3 | Reserved bits | | |
| Bit 2 | Reserved bits | | |
| Bit 1 | Reserved bits | | |
| Bit 0 | Reserved bits | | |

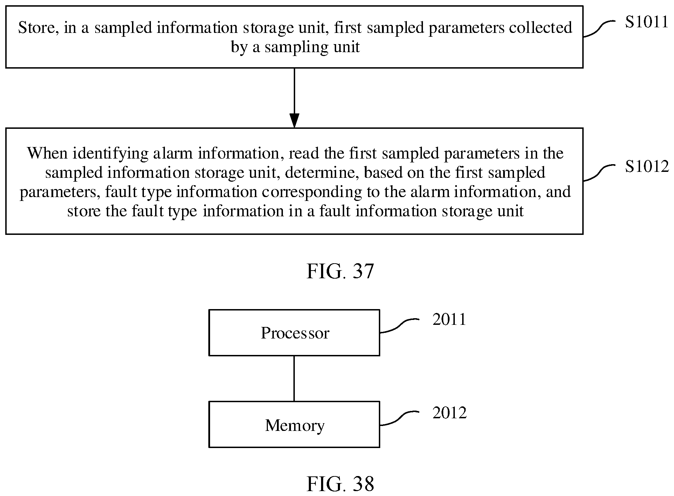

Based on a same technical concept, an embodiment of this application further provides another fault type determining method. The fault type determining method is applied to the first processing unit in the optical module. FIG. 37 is a flowchart of another fault type determining method according to an embodiment of this application. As shown in FIG. 37, the method may include the following steps.

S1011: Store, in the sampled information storage unit, the first sampled parameters collected by the sampling unit.

S1012: When identifying alarm information, read the first sampled parameters in the sampled information storage unit, determine, based on the first sampled parameters, fault type information corresponding to the alarm information, and store the fault type information in the fault information storage unit.

In the fault type determining method provided in this embodiment of this application, when identifying the alarm information, the first processing unit may determine, based on the first sampled parameters, the fault type information corresponding to the alarm information, and store the fault type information in the fault information storage unit. In this way, functions such as collection, storage, and analysis of the first sampled parameters may be implemented inside the optical module. Subsequently, the electronic device or the network management device reads the fault type information stored in the optical module, and can quickly and accurately determine the fault cause and the fault point location based on the network topology relationship of the communication system. In this way, the fault in the communication system can be quickly corrected, and troubleshooting costs can be reduced.

For a specific implementation of the fault type determining method shown in FIG. 37, refer to a function of the first processing unit in the fault type determining method shown in FIG. 34. Details are not described herein again.

Based on a same technical concept, an embodiment of this application further provides a fault type determining apparatus. FIG. 38 is a diagram of a structure of a fault type determining apparatus according to an embodiment of this application. As shown in FIG. 38, the fault type determining apparatus may include a processor 2011 and a memory 2012. The memory 2012 is configured to store the steps in the fault type determining method shown in FIG. 37. The processor 2011 is configured to perform the steps stored in the memory 2012.

For a specific implementation of the fault type determining apparatus shown in FIG. 38, refer to the implementation of the fault type determining method shown in FIG. 37. Details are not described herein again.

The foregoing describes a specific process in which the optical module determines the fault type information. The following describes in detail a process in which the electronic device or the network management device determines the fault cause and the fault point with reference to the accompanying drawings.

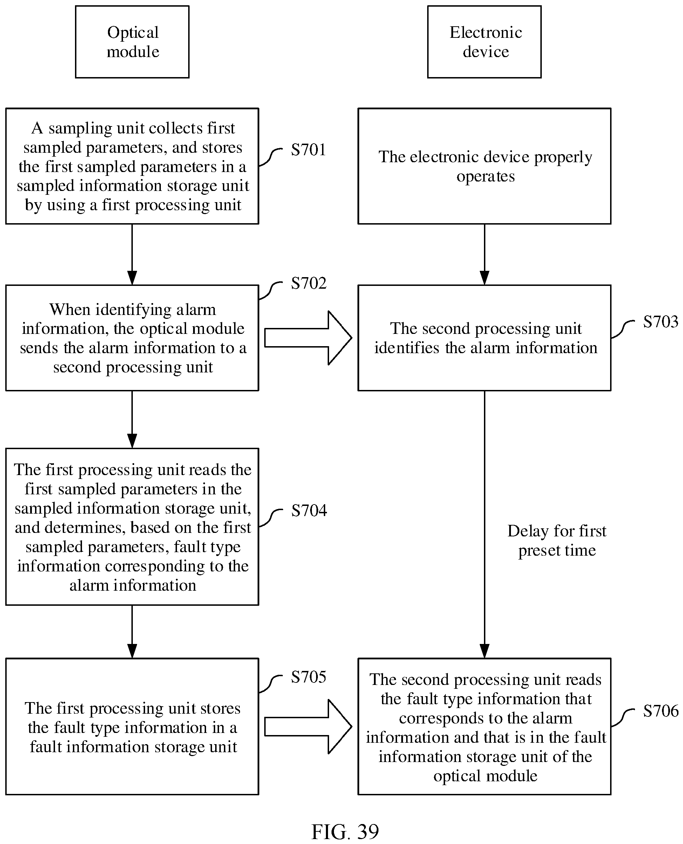

A fault processing method may be performed in the communication system in embodiments of this application. FIG. 39 is a flowchart of a fault processing method according to an embodiment of this application. As shown in FIG. 39, the fault processing method may include the following steps.

S701: The sampling unit collects first sampled parameters, and stores the first sampled parameters in the sampled information storage unit by using the first processing unit. For step S701, refer to step S401. Details are not described herein again.

S702: When identifying alarm information, the optical module sends the alarm information to the second processing unit.

S703: The second processing unit in the electronic device identifies the alarm information.

S704: The first processing unit reads the first sampled parameters in the sampled information storage unit, and determines, based on the first sampled parameters, fault type information corresponding to the alarm information. For a specific process in which the first processing unit determines the fault type information, refer to the foregoing description. Details are not described herein again.

S705: The first processing unit stores the fault type information in the fault information storage unit.

S706: After first preset time after receiving the alarm information, the second processing unit reads the fault type information that corresponds to the alarm information and that is in the fault information storage unit. During specific implementation, the first processing unit in the optical module may respond to a query request of the second processing unit, and report the fault type information stored in the fault information storage unit to the second processing unit, so that the second processing unit reads the fault type information in the fault information storage unit.

In the fault processing method in this embodiment of this application, when identifying the alarm information, the first processing unit in the optical module may determine, based on the first sampled parameters, the fault type information corresponding to the alarm information, and store the fault type information in the fault information storage unit. The second processing unit in the electronic device may read, after first preset time after identifying the alarm information, the fault type information that corresponds to the alarm information and that is in the fault information storage unit, and the electronic device or a network management device can quickly and accurately determine a fault cause and a fault point location based on the fault type information and a network topology relationship of a communication system in which the optical module is located. Therefore, the optical module does not need to transmit a large amount of sampled data to the electronic device. This shortens data transmission time, and reduces data transmission pressure between the optical module and the electronic device. Therefore, after an optical path fault occurs in the communication system in embodiments of this application, delay time required for determining the fault cause and the fault point location is short, and the fault cause and the fault point location can be located in a timely manner.

In the foregoing step S702, the first processing unit in the optical module is connected to the second processing unit through a communication bus, and the first processing unit may send the alarm information to the second processing unit through the communication bus. Alternatively, when the optical module includes an alarm information generation unit, the alarm information generation unit may be connected to the second processing unit through a hardware pin interface, and the alarm information generation unit may send the alarm information to the second processing unit through a level jump of the hardware pin interface. Alternatively, the first processing unit may write the alarm information into the fault information storage unit, and the second processing unit may query the alarm information stored in the fault information storage unit through a communication bus and the first processing unit.

In the foregoing step S706, after identifying the alarm information, the second processing unit needs to wait for the first preset time and then read the fault type information in the fault information storage unit, so that the first processing unit can complete the operation of determining and storing the fault type information within the first preset time. During specific implementation, specific duration of the first preset time may be determined based on an actual calculation amount of the first processing unit, so that the second processing unit can read the fault type information after waiting for the first preset time.

In a possible implementation, the first processing unit may further delete the fault type information from the fault information storage unit after the second processing unit reads the fault type information, so that after reporting the fault type information, the optical module restores to a state of being indicated by no alarm information.

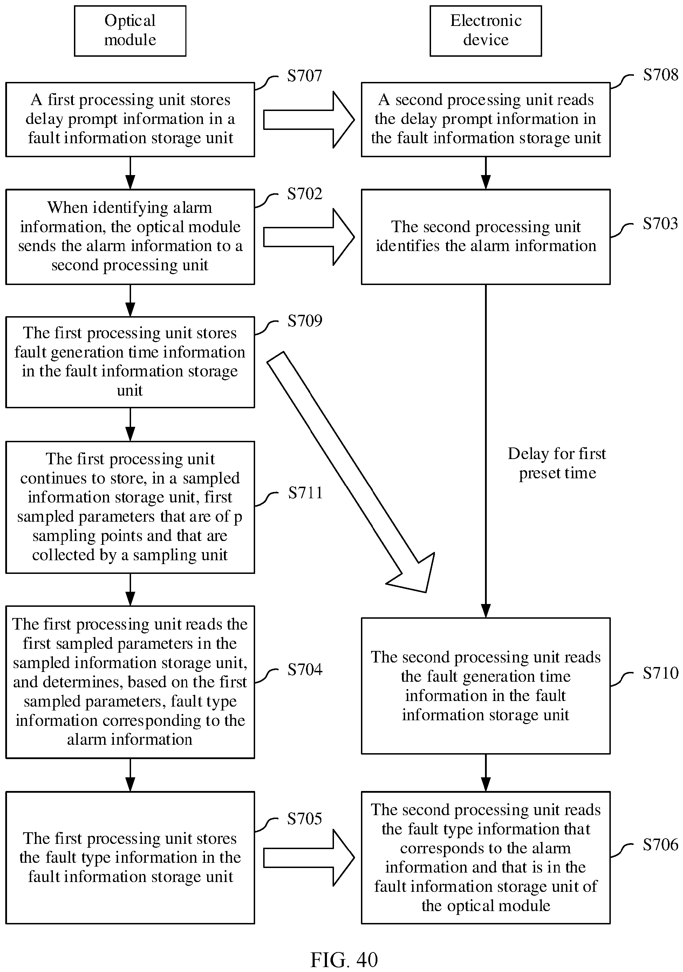

FIG. 40 is another flowchart of a fault processing method according to an embodiment of this application. As shown in FIG. 40, before the foregoing step S702, the method may further include the following steps.

S707: The first processing unit stores delay prompt information in the fault information storage unit.

S708: The second processing unit reads the delay prompt information in the fault information storage unit.

The delay prompt information indicates shortest duration from time when the second processing unit receives the alarm information to time when the second processing unit can read the fault type information corresponding to the alarm information. The first preset time is greater than or equal to the shortest duration. This can ensure that the second processing unit can read the fault type information after waiting for the first preset time. At least the following needs to be considered for the shortest duration: a time length required for the first processing unit to continue to store the first sampled parameters collected by the sampling unit in the sampled information storage unit after the optical module generates the alarm information, a time length required for the first processing unit to read the first sampled parameters in the sampled information storage unit, and a time length required by the first processing unit to determine the fault type information based on the first sampled parameters. During specific implementation, the delay prompt information may be written into the fault information storage unit in a manufacturing process of the optical module.

In FIG. 40, an example in which step S708 is performed before step S703 is used. That is, the second processing unit may read the delay prompt information before identifying the alarm information. During specific implementation, the second processing unit may alternatively read the delay information after identifying the alarm information. That is, step S708 may alternatively be performed after step S703.

Still refer to FIG. 40. After step S702, the method may further include the following steps.

S709: The first processing unit stores fault generation time information in the fault information storage unit.

S710: The second processing unit reads the fault generation time information in the fault information storage unit.

In this way, the electronic device or the network management device may subsequently determine a fault cause and a fault point location.

In addition, after step S709 and before step S704, the method may further include the following steps.

S711: The first processing unit continues to store, in the sampled information storage unit, the first sampled parameters that are of p sampling points and that are collected by the sampling unit, where p is an integer greater than or equal to 0. During specific implementation, a specific value of p may be set according to an application scenario. For example, p may be a value ranging from 10 to 1000. In this way, since the first sampled parameters obtained by the first processing unit after identifying the alarm information is large in data amount, the first processing unit can more accurately determine the fault type information. Accuracy of fault analysis is high.

During actual application, after the foregoing step S705, the first processing unit may further store completion prompt information in the fault information storage unit. The completion prompt information indicates that the first processing unit has completed the operation of determining and storing the fault type information. After reading the completion prompt information in the fault information storage unit, the second processing unit may read the fault generation time information and the fault type information in the fault type information storage unit, that is, may perform the operations such as step S710 and step S706. In a possible implementation, a bit for storing the completion prompt information may be set in the fault information storage unit. For example, the preset bit 0 in Table 1 may be set as the bit for storing the completion prompt information. When the bit 0 is set to 0, "being analyzed" is indicated. That is, the first processing unit does not complete the operation of determining and storing the fault type information. When the bit 0 is set to 1, "analysis completed" is indicated. That is, the first processing unit has completed the operation of determining and storing the fault type information. Certainly, another bit may alternatively be used to store the completion prompt information. This is not limited herein.

In this embodiment of this application, when identifying an alarm, the optical module may provide the electronic device with a plurality of types of information such as the delay prompt information, the fault generation time information, and the fault type information, so that the electronic device or the network management device can more accurately determine the fault cause and the fault point location, to quickly correct a fault in the communication system and reduce fault processing costs.

During specific implementation, different locations in the fault information storage unit may store the fault type information, the delay prompt information, the fault generation time, and the like respectively. Table 3 describes correspondences between information in the fault information storage unit and formats. As shown in Table 3, a bit may be set in the fault information storage unit to store the fault type information, and each bit may represent one type of fault type information. For a specific setting manner, refer to Table 1 and Table 2. Details are not described herein again. A bit may be set in the fault information storage unit to store the delay prompt information. The delay prompt information is generally less than 255 seconds. In addition, a plurality of bits may be set to store the fault generation time information. For example, six bits may be set to store time information such as a year, a month, a day, an hour, a minute, and a second of fault generation time, respectively. For another example, four bits may be set to store a time difference between the fault generation time and set time. The fault generation time may be determined based on the set time and the time difference. For example, the set time may be set to January 1, 1970, and the fault generation time may be 00:00:00 on May 1, 2022. Therefore, the time difference is 1651334400 and is expressed as a hexadecimal value 0x626D5D00. In this embodiment of this application, the correspondences shown in Table 3 are used as an example. During specific implementation, the correspondences between the information in the fault information storage unit and the formats may be set based on an actual requirement. This is not limited herein.

**Table 3 Correspondences between the information in the fault information storage unit and the formats**

| Address | Size (Bytes) | Name | Example | Note |
|---|---|---|---|---|
| X | 1+1 | Fault type information | X: 00010000 | Each bit indicates a type of fault type information. |
| | | | X+1: 00000000 | |
| X+2 | 1 | Delay prompt information | ttt | The unit is second. Generally, the length does not exceed 255 seconds. |
| X+3 | 6 | Fault generation time information | X+3: Year (YY) | For example, in 2022, the last two bits (22) are used and converted into a binary value 00010110. |
| | | | X+2: Momth (MM) | A month value is converted into a binary value. |
| | | | X+3: Day (DD) | A date value is converted into a binary value. |
| | | | X+4: Hour (HH) | A 24-hour value is converted into a binary value. |
| | | | X+5: Minute (mm) | A minute value is converted into a binary value. |
| | | | X+6: Second (ss) | A second value is converted into a binary value. |
| X+3 | 4 | Fault generation time information | X+3-X+6: 0x626D5D00 | Seconds since January 1, 1970 (00:00:00 GMT). For example, if fault generation time is 00:00:00 on May 1, 2022, a second value is 1651334400 and is expressed as a hexadecimal value 0x626D5D00. |

In some embodiments of this application, the electronic device may determine the fault cause based on the read fault type information and the network topology relationship of the network system in which the electronic device is located.

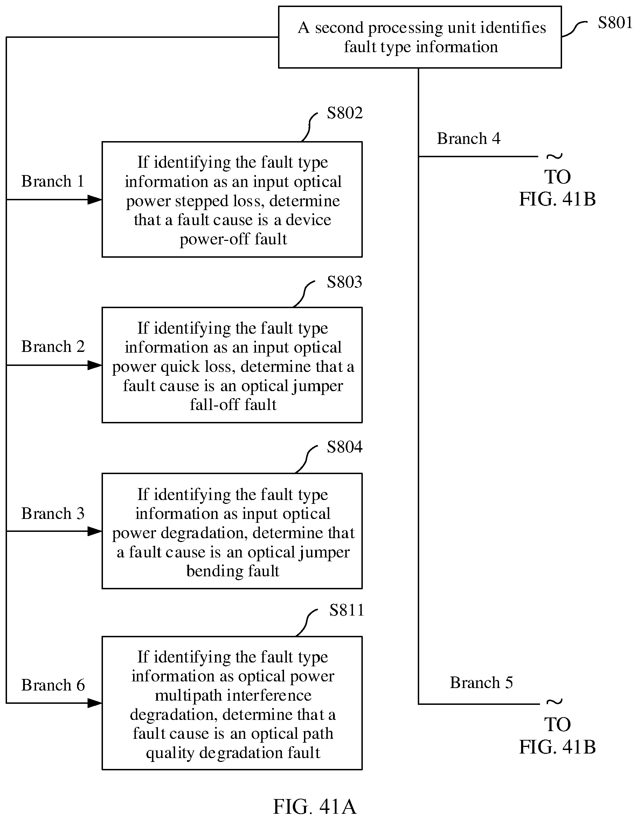

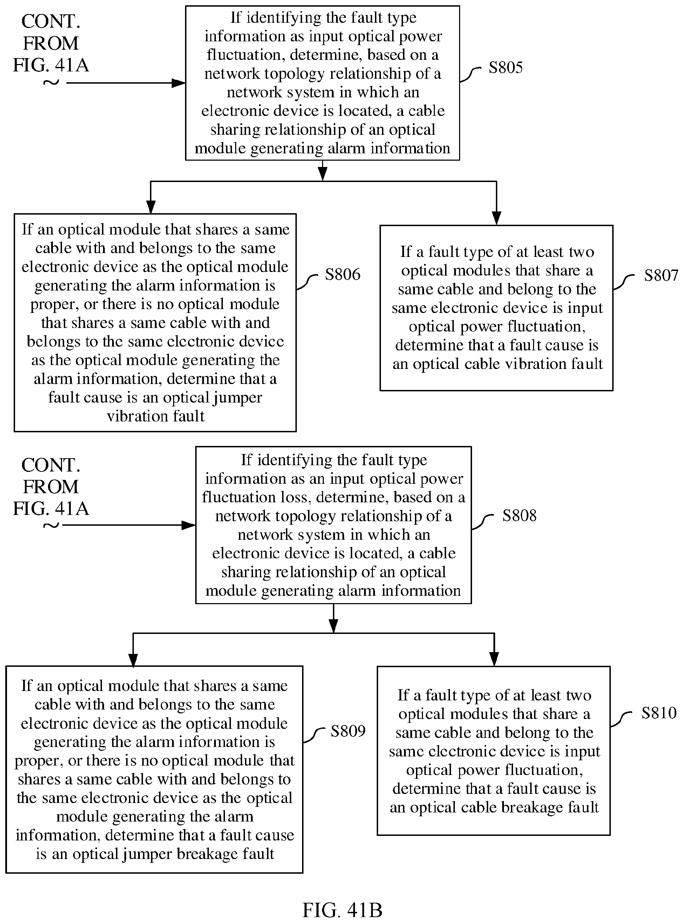

FIG. 41 is another flowchart of a fault processing method according to an embodiment of this application. The second processing unit in the electronic device may perform steps shown in FIG. 41. As shown in FIG. 41, that the second processing unit determines the fault cause based on the read fault type information and the network topology relationship of the network system in which the optical module is located may specifically include the following steps.

S801: The second processing unit identifies fault type information. According to an identification result, there may be the following branches:

### Branch 1:

S802: If identifying the fault type information as an input optical power stepped loss, determine that the fault cause is a device power-off fault. For example, in the device power-off fault scenario shown in FIG. 16, the fault point location is a power supply line of a peer electronic device. For example, in FIG. 16, the fault point is at the location of the first power supply line 151.

### Branch 2:

S803: If identifying the fault type information as an input optical power quick loss, determine that the fault cause is an optical jumper fall-off fault. For example, in the optical jumper fall-off fault scenario shown in FIG. 18, the fault point is at the location of the first optical jumper 131 or the second optical jumper 132.

### Branch 3:

S804: If identifying the fault type information as input optical power degradation, determine that the fault cause is an optical jumper bending fault. For example, in the optical jumper bending fault scenario shown in FIG. 24, the fault point is at the location of the first optical jumper 131 or the second optical jumper 132.

### Branch 4:

S805: If identifying the fault type information as input optical power fluctuation, determine, based on the network topology relationship of the network system, a cable sharing relationship of the optical module generating the alarm information.

S806: If an optical module that shares a same cable with and belongs to the same electronic device as the optical module generating the alarm information is proper, or there is no optical module that shares a same cable with and belongs to the same electronic device as the optical module generating the alarm information, determine that the fault cause is an optical jumper vibration fault. For example, in the optical jumper vibration fault scenario shown in FIG. 26, if the fault type information of the second optical module 122 is input optical power fluctuation, and the fourth optical module 124 is normal, the fault cause is that the optical jumper vibration fault occurs in the optical signal transmission link of the second optical module 122, and the fault point is at the location of the optical jumper 13 corresponding to the second optical module 122.

S807: If the fault type of at least two optical modules that share a same cable and belong to the same electronic device is input optical power fluctuation, determine that the fault cause is an optical cable vibration fault. For example, in the optical cable vibration fault scenario shown in FIG. 26, if the fault type information of both the second optical module 122 and the fourth optical module 124 is input optical power fluctuation, the fault cause is the optical cable vibration fault, and the fault point is at the location of the communication optical cable 14.

### Branch 5:

S808: If identifying the fault type information as an input optical power fluctuation loss, determine, based on the network topology relationship of the network system, a cable sharing relationship of the optical module generating the alarm information.

S809: If an optical module that shares a same cable with and belongs to the same electronic device as the optical module generating the alarm information is proper, or there is no optical module that shares a same cable with and belongs to the same electronic device as the optical module generating the alarm information, determine that the fault cause is an optical jumper breakage fault. For example, in the optical jumper breakage fault scenario shown in FIG. 20, if the fault type information of the second optical module 122 is an input optical power fluctuation loss, and the fourth optical module 124 is normal, the fault cause is that the optical jumper breakage fault occurs in the optical signal transmission link of the second optical module 122, and the fault point is at the location of the optical jumper 13 corresponding to the second optical module 122.

S810: If the fault type of at least two optical modules that share a same cable and belong to the same electronic device is input optical power fluctuation, determine that the fault cause is an optical cable breakage fault. For example, in the optical cable breakage fault scenario shown in FIG. 20, if the fault type information of both the second optical module 122 and the fourth optical module 124 is input optical power fluctuation, the fault cause is the optical cable breakage fault, and the fault point is at the location of the communication optical cable 14.

### Branch 6:

S811: If identifying the fault type information as optical power multipath interference degradation, determine that the fault cause is an optical path quality degradation fault. For example, in the optical path quality degradation fault scenario shown in FIG. 30, the fault point is the pluggable connection point between the communication optical cable 14 and the optical jumper (the first optical jumper 131 or the second optical jumper 132). For example, the pluggable connection point between the communication optical cable 14 and the optical jumper is contaminated.

In conclusion, the electronic device can accurately determine the fault cause based on information such as the fault type information and fault generation time information of the optical module in combination with information such as fault type information and fault generation time of another optical module. In addition, after determining the fault cause, the electronic device may further push information such as the fault cause and the fault point location to the user.

In some other embodiments of this application, the electronic device may upload, to the network management device, information such as the fault type information and fault generation time information that correspond to the alarm information, and the network management device may determine the fault cause based on the read fault type information and a network topology relationship of a network system in which the electronic device is located.

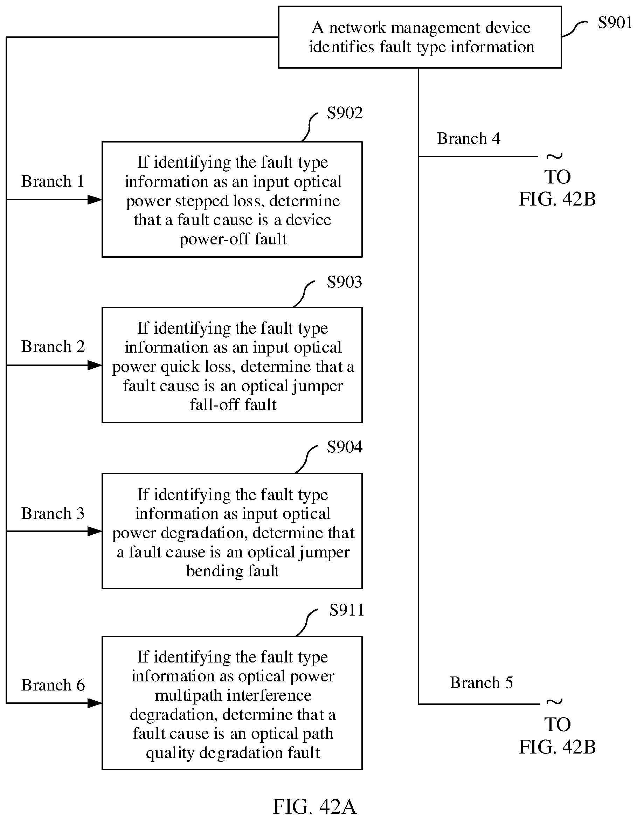

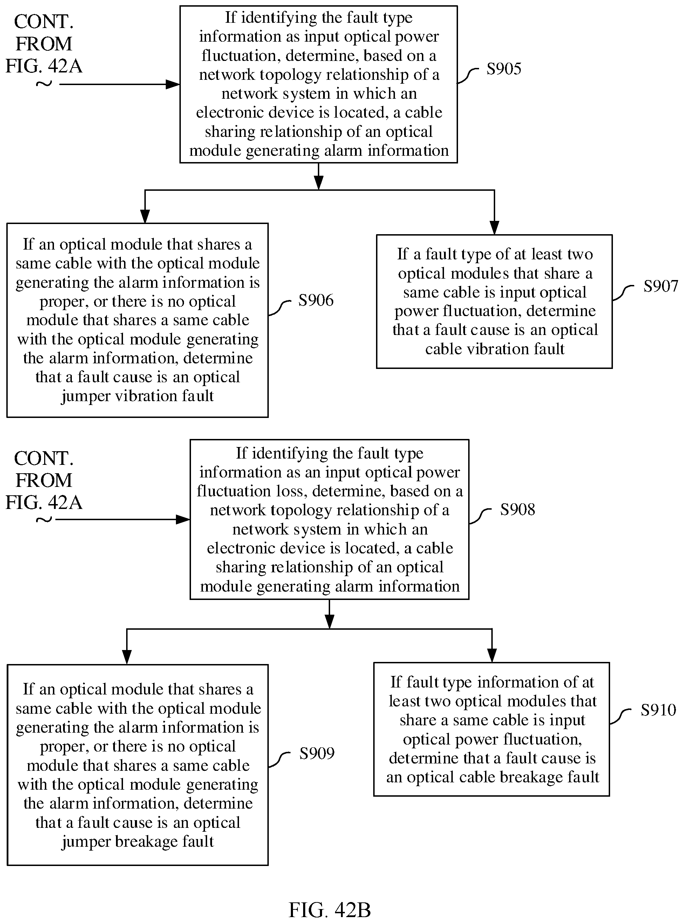

FIG. 42 is another flowchart of a fault processing method according to an embodiment of this application. The network management device may perform steps shown in FIG. 42. As shown in FIG. 42, that the network management device determines the fault cause based on the read fault type information and a network topology relationship of a network system in which the optical module is located may specifically include the following steps.

S901: The network management device identifies the fault type information. According to an identification result, there may be the following branches:

### Branch 1:

S902: If identifying the fault type information as an input optical power stepped loss, determine that the fault cause is a device power-off fault. For example, in the device power-off fault scenario shown in FIG. 16, the fault point location is a power supply line of a peer electronic device. For example, in FIG. 16, the fault point is at the location of the first power supply line 151.

### Branch 2:

S903: If identifying the fault type information as an input optical power quick loss, determine that the fault cause is an optical jumper fall-off fault. For example, in the optical jumper fall-off fault scenario shown in FIG. 18, the fault point is at the location of the first optical jumper 131 or the second optical jumper 132.

### Branch 3:

S904: If identifying the fault type information as input optical power degradation, determine that the fault cause is an optical jumper bending fault. For example, in the optical jumper bending fault scenario shown in FIG. 24, the fault point is at the location of the first optical jumper 131 or the second optical jumper 132.

### Branch 4:

S905: If identifying the fault type information as input optical power fluctuation, determine, based on the network topology relationship of the network system, a cable sharing relationship of the optical module generating the alarm information.

S906: If an optical module that shares a same cable with the optical module generating the alarm information is proper, or there is no optical module that shares a same cable with the optical module generating the alarm information, determine that the fault cause is an optical jumper vibration fault. For example, in the optical jumper vibration fault scenario shown in FIG. 29, if the fault type information of the second optical module 122 is input optical power fluctuation, and the fourth optical module 124 is normal, the fault cause is that the optical jumper vibration fault occurs in the optical signal transmission link of the second optical module 122, and the fault point is at the location of the optical jumper 13 corresponding to the second optical module 122.

S907: If the fault type of at least two optical modules that share a same cable is input optical power fluctuation, determine that the fault cause is an optical cable vibration fault. For example, in the optical cable vibration fault scenario shown in FIG. 29, if the fault type information of both the second optical module 122 and the fourth optical module 124 is input optical power fluctuation, the fault cause is the optical cable vibration fault, and the fault point is at the location of the communication optical cable 14.

### Branch 5:

S908: If identifying the fault type information as an input optical power fluctuation loss, determine, based on the network topology relationship of the network system, a cable sharing relationship of the optical module generating the alarm information.

S909: If an optical module that shares a same cable with the optical module generating the alarm information is proper, or there is no optical module that shares a same cable with the optical module generating the alarm information, determine that the fault cause is an optical jumper breakage fault. For example, in the optical jumper breakage fault scenario shown in FIG. 23, if the fault type information of the second optical module 122 is an input optical power fluctuation loss, and the fourth optical module 124 is normal, the fault cause is that the optical jumper breakage fault occurs in the optical signal transmission link of the second optical module 122, and the fault point is at the location of the optical jumper 13 corresponding to the second optical module 122.

S910: If the fault type information of at least two optical modules that share a same cable is input optical power fluctuation, determine that the fault cause is an optical cable breakage fault. For example, in the optical cable breakage fault scenario shown in FIG. 23, if the fault type information of both the second optical module 122 and the fourth optical module 124 is input optical power fluctuation, the fault cause is the optical cable breakage fault, and the fault point is at the location of the communication optical cable 14.

### Branch 6:

S911: If identifying the fault type information as optical power multipath interference degradation, determine that the fault cause is an optical path quality degradation fault. For example, in the optical path quality degradation fault scenario shown in FIG. 30, the fault point is the pluggable connection point between the communication optical cable 14 and the optical jumper (the first optical jumper 131 or the second optical jumper 132). For example, the pluggable connection point between the communication optical cable 14 and the optical jumper is contaminated.

In conclusion, the network management device can accurately determine the fault cause based on information such as the fault type information and fault generation time information of the optical module in combination with information such as fault type information and fault generation time of another optical module. In addition, after determining the fault cause, the network management device may further push information such as the fault cause and the fault point location to the user.

The foregoing describes a specific process in which the electronic device or the network management device determines the fault cause and the fault point. During specific implementation, in another fault scenario, the electronic device or the network management device may also use a similar method to determine the fault cause and the fault point location. Examples are not described one by one herein.

In embodiments of this application, a process of determining the fault cause and the fault point location may be implemented in the electronic device, or may be implemented in the network management device, or the electronic device may preliminarily determine the fault cause and the fault point location, and then the network management device performs secondary determining. Through a combination of the electronic device and the network management device, effect of accurately determining the fault cause and the fault point location is achieved.

Although preferred embodiments of this application are described, persons skilled in the art can make changes and modifications to these embodiments after they learn of a basic inventive concept. Therefore, the appended claims are intended to be construed as including the preferred embodiments and all changes and modifications that fall within the scope of this application.

Clearly, persons skilled in the art can make various modifications and variations to embodiments of this application without departing from the spirit and scope of embodiments of this application. In this case, this application is intended to cover these modifications and variations of the embodiments of this application provided that they fall within the scope of protection defined by the following claims and their equivalent technologies.

## Claims

1. An optical module, comprising: a first processing unit, and a sampling unit, a sampled information storage unit, and a fault information storage unit that are separately electrically connected to the first processing unit, wherein
the sampling unit is configured to collect first sampled parameters, and store the first sampled parameters in the sampled information storage unit by using the first processing unit; and
the first processing unit is configured to: when identifying alarm information, read the first sampled parameters in the sampled information storage unit, determine, based on the first sampled parameters, fault type information corresponding to the alarm information, and store the fault type information in the fault information storage unit.

2. The optical module according to claim 1, further comprising: an alarm information generation unit, wherein
the alarm information generation unit is separately electrically connected to the sampling unit and the first processing unit;
the sampling unit is further configured to send the first sampled parameters to the alarm information generation unit; and
the alarm information generation unit is configured to: determine whether the first sampled parameters are within a preset threshold range, generate the alarm information when the first sampled parameters are out of the threshold range, and send the alarm information to the first processing unit.

3. The optical module according to claim 1, further comprising: an alarm information generation unit, wherein
the alarm information generation unit is separately electrically connected to the sampling unit and the first processing unit;
the sampling unit is further configured to collect second sampled parameters, and send the second sampled parameters to the alarm information generation unit, wherein the second sampled parameters are different from the first sampled parameters; and
the alarm information generation unit is configured to: determine whether the second sampled parameters are within a preset threshold range, generate the alarm information when the second sampled parameters are out of the threshold range, and send the alarm information to the first processing unit.

4. The optical module according to any one of claims 1 to 3, wherein the sampling unit is specifically configured to collect the first sampled parameters at millisecond-level sampling time precision; and
the first processing unit is specifically configured to: when identifying the alarm information, continue to store, in the sampled information storage unit, the first sampled parameters that are of p sampling points and that are collected by the sampling unit, wherein p is an integer greater than or equal to 0; read the first sampled parameters that are in a preset time window and that are in the sampled information storage unit; and determine, based on the read first sampled parameters, the fault type information corresponding to the alarm information.

5. The optical module according to claim 4, wherein the first processing unit is specifically configured to:
after reading the first sampled parameters in the preset time window, compare the first sampled parameter at an initial moment with the first sampled parameter at a last moment; and
if a difference between the first sampled parameter at the initial moment and the first sampled parameter at the last moment is less than a first threshold, and a fluctuation event occurs in a waveform rule of the first sampled parameters in the preset time window, the fault type information corresponding to the alarm information is input optical power fluctuation;
if a difference between the first sampled parameter at the initial moment and the first sampled parameter at the last moment is greater than the first threshold, the first sampled parameter at the last moment is less than a second threshold, and a fluctuation and descent event occurs in a waveform rule of the first sampled parameters in the preset time window, the fault type information corresponding to the alarm information is an input optical power fluctuation loss;
if a difference between the first sampled parameter at the initial moment and the first sampled parameter at the last moment is greater than the first threshold, the first sampled parameter at the last moment is less than a second threshold, and a quick descent event occurs in a waveform rule of the first sampled parameters in the preset time window, the fault type information corresponding to the alarm information is an input optical power quick loss;
if a difference between the first sampled parameter at the initial moment and the first sampled parameter at the last moment is greater than the first threshold, the first sampled parameter at the last moment is less than a second threshold, and a stepped descent event occurs in a waveform rule of the first sampled parameters in the preset time window, the fault type information corresponding to the alarm information is an input optical power stepped loss; or
if a difference between the first sampled parameter at the initial moment and the first sampled parameter at the last moment is greater than the first threshold, the first sampled parameter at the last moment is greater than a second threshold, and a waveform rule of the first sampled parameters in the preset time window has a degradation characteristic, the fault type information corresponding to the alarm information is input optical power degradation.

6. The optical module according to claim 4, wherein the first sampled parameter comprises a photogenerated current and a pre-FEC bit error rate; and
the first processing unit is specifically configured to:
after reading the first sampled parameters in the preset time window, compare the photogenerated current at an initial moment with the photogenerated current at a last moment, and compare the pre-FEC bit error rate at the initial moment with the pre-FEC bit error rate at the last moment; and
if a difference between the photogenerated current at the initial moment and the photogenerated current at the last moment is less than a first threshold, and a difference between the pre-FEC bit error rate at the initial moment and the pre-FEC bit error rate at the last moment is greater than a third threshold, the fault type information corresponding to the alarm information is optical power multipath interference degradation.

7. An electronic device, comprising a second processing unit and the optical module according to any one of claims 1 to 6, wherein the optical module is connected to the second processing unit;
the optical module is configured to: when identifying alarm information, send the alarm information to the second processing unit; and
the second processing unit is configured to: after first preset time after receiving the alarm information, read fault type information that corresponds to the alarm information and that is in the fault information storage unit of the optical module.

8. The electronic device according to claim 7, wherein the first processing unit is further configured to store delay prompt information in the fault information storage unit;
the second processing unit is further configured to read the delay prompt information in the fault information storage unit; and
the delay prompt information indicates shortest duration from time when the second processing unit receives the alarm information to time when the second processing unit is capable of reading the fault type information corresponding to the alarm information, and the first preset time is greater than or equal to the shortest duration.

9. The electronic device according to claim 7 or 8, wherein the first processing unit is further configured to: after the second processing unit reads the fault type information, delete the fault type information from the fault information storage unit.

10. The electronic device according to any one of claims 7 to 9, wherein the second processing unit is further configured to determine a fault cause based on the read fault type information and a network topology relationship of a network system in which the optical module is located.

11. The electronic device according to claim 10, wherein the second processing unit is specifically configured to:
if identifying the fault type information as input optical power fluctuation, determine, based on the network topology relationship of the network system, a cable sharing relationship of the optical module generating the alarm information; and if an optical module that shares a same cable with and belongs to the same electronic device as the optical module generating the alarm information is proper, or there is no optical module that shares a same cable with and belongs to the same electronic device as the optical module generating the alarm information, determine that the fault cause is an optical jumper vibration fault; or if the fault type of at least two optical modules that share a same cable and belong to the same electronic device is input optical power fluctuation, determine that the fault cause is an optical cable vibration fault; or
if identifying the fault type information as an input optical power fluctuation loss, determine, based on the network topology relationship of the network system, a cable sharing relationship of the optical module generating the alarm information; and if an optical module that shares a same cable with and belongs to the same electronic device as the optical module generating the alarm information is proper, or there is no optical module that shares a same cable with and belongs to the same electronic device as the optical module generating the alarm information, determine that the fault cause is an optical jumper breakage fault; or if the fault type of at least two optical modules that share a same cable and belong to the same electronic device is input optical power fluctuation, determine that the fault cause is an optical cable breakage fault.

12. The electronic device according to any one of claims 7 to 9, wherein the second processing unit is further configured to determine a fault cause based on the read fault type information.

13. The electronic device according to claim 12, wherein the second processing unit is specifically configured to:
if identifying the fault type information as an input optical power stepped loss, determine that the fault cause is a device power-off fault;
if identifying the fault type information as an input optical power quick loss, determine that the fault cause is an optical jumper fall-off fault;
if identifying the fault type information as input optical power degradation, determine that the fault cause is an optical jumper bending fault; or
if identifying the fault type information as optical power multipath interference degradation, determine that the fault cause is an optical path quality degradation fault.

14. A communication system, comprising: the electronic device according to any one of claims 7 to 13, and a power supply line, wherein
the power supply line is configured to supply power to the electronic device.

15. The communication system according to claim 14, further comprising: a network management device, wherein
the network management device is configured to obtain fault type information of the electronic device, and determine a fault cause based on the fault type information and the network topology relationship of the network system.

16. The communication system according to claim 15, wherein the electronic device is specifically configured to:
if identifying the fault type information as input optical power fluctuation, determine, based on the network topology relationship of the network system, a cable sharing relationship of the optical module generating the alarm information; and if an optical module that shares a same cable with the optical module generating the alarm information is proper, or there is no optical module that shares a same cable with the optical module generating the alarm information, determine that the fault cause is an optical jumper vibration fault; or if the fault type of at least two optical modules that share a same cable is input optical power fluctuation, determine that the fault cause is an optical cable vibration fault; or
if identifying the fault type information as an input optical power fluctuation loss, determine, based on the network topology relationship of the network system, a cable sharing relationship of the optical module generating the alarm information; and if an optical module that shares a same cable with the optical module generating the alarm information is proper, or there is no optical module that shares a same cable with as the optical module generating the alarm information, determine that the fault cause is an optical jumper breakage fault; or if the fault type information of at least two optical modules that share a same cable is input optical power fluctuation, determine that the fault cause is an optical cable breakage fault.

17. The communication system according to claim 14, further comprising: a network management device, wherein
the network management device is configured to obtain fault type information of the electronic device, and determine a fault cause based on the fault type information.

18. The communication system according to claim 17, wherein the electronic device is specifically configured to:
if identifying the fault type information as an input optical power stepped loss, determine that the fault cause is a device power-off fault;
if identifying the fault type information as an input optical power quick loss, determine that the fault cause is an optical jumper fall-off fault;
if identifying the fault type information as input optical power degradation, determine that the fault cause is an optical jumper bending fault; or
if identifying the fault type information as optical power multipath interference degradation, determine that the fault cause is an optical path quality degradation fault.

19. A fault type determining method, wherein the fault type processing method is applied to a first processing unit in an optical module, and comprises:
storing, in a sampled information storage unit, first sampled parameters collected by a sampling unit; and
when identifying alarm information, reading the first sampled parameters in the sampled information storage unit, determining, based on the first sampled parameters, fault type information corresponding to the alarm information, and storing the fault type information in the fault information storage unit.

20. The fault type determining method according to claim 19, wherein the reading the first sampled parameters in the sampled information storage unit and determining, based on the first sampled parameters, fault type information corresponding to alarm information when identifying the alarm information specifically comprises:
when identifying the alarm information, continuing to store, in the sampled information storage unit, the first sampled parameters that are of p sampling points and that are collected by the sampling unit, wherein p is an integer greater than or equal to 0;
reading the first sampled parameters that are in a preset time window and that are in the sampled information storage unit; and
determining, based on the read first sampled parameters, the fault type information corresponding to the alarm information.

21. The fault type determining method according to claim 20, wherein
the determining, based on the read first sampled parameters, the fault type information corresponding to the alarm information specifically comprises:
after reading the first sampled parameters in the preset time window, comparing the first sampled parameter at an initial moment with the first sampled parameter at a last moment; and
if a difference between the first sampled parameter at the initial moment and the first sampled parameter at the last moment is less than a first threshold, and a fluctuation event occurs in a waveform rule of the first sampled parameters in the preset time window, the fault type information corresponding to the alarm information is input optical power fluctuation;
if a difference between the first sampled parameter at the initial moment and the first sampled parameter at the last moment is greater than the first threshold, the first sampled parameter at the last moment is less than a second threshold, and a fluctuation and descent event occurs in a waveform rule of the first sampled parameters in the preset time window, the fault type information corresponding to the alarm information is an input optical power fluctuation loss;
if a difference between the first sampled parameter at the initial moment and the first sampled parameter at the last moment is greater than the first threshold, the first sampled parameter at the last moment is less than a second threshold, and a quick descent event occurs in a waveform rule of the first sampled parameters in the preset time window, the fault type information corresponding to the alarm information is an input optical power quick loss;
if a difference between the first sampled parameter at the initial moment and the first sampled parameter at the last moment is greater than the first threshold, the first sampled parameter at the last moment is less than a second threshold, and a stepped descent event occurs in a waveform rule of the first sampled parameters in the preset time window, the fault type information corresponding to the alarm information is an input optical power stepped loss; or
if a difference between the first sampled parameter at the initial moment and the first sampled parameter at the last moment is greater than the first threshold, the first sampled parameter at the last moment is greater than a second threshold, and a waveform rule of the first sampled parameters in the preset time window has a degradation characteristic, the fault type information corresponding to the alarm information is input optical power degradation.

22. The fault type determining method according to claim 20, wherein the first sampled parameter comprises a photogenerated current and a pre-FEC bit error rate; and
the determining, based on the read first sampled parameters, the fault type information corresponding to the alarm information specifically comprises:
after reading the first sampled parameters in the preset time window, comparing the photogenerated current at an initial moment with the photogenerated current at a last moment, and comparing the pre-FEC bit error rate at the initial moment with the pre-FEC bit error rate at the last moment; and
if a difference between the photogenerated current at the initial moment and the photogenerated current at the last moment is less than a first threshold, and a difference between the pre-FEC bit error rate at the initial moment and the pre-FEC bit error rate at the last moment is greater than a third threshold, the fault type information corresponding to the alarm information is optical power multipath interference degradation.

23. A fault type determining apparatus, comprising: a processor and a memory, wherein
the memory is configured to store the steps in the fault type determining method according to any one of claims 19 to 22; and
the processor is configured to perform the steps stored in the memory.

24. A fault processing method, wherein the fault processing method is applied to a communication system, the communication system comprises an electronic device, the electronic device comprises a second processing unit and an optical module, and the optical module comprises a first processing unit, and a sampling unit, a sampled information storage unit, and a fault information storage unit that are separately electrically connected to the first processing unit;
and
the fault processing method comprises:
collecting, by the sampling unit, first sampled parameters, and storing the first sampled parameters in the sampled information storage unit by using the first processing unit;
when identifying alarm information, sending, by the optical module, the alarm information to the second processing unit;
reading, by the first processing unit, the first sampled parameters in the sampled information storage unit, determining, based on the first sampled parameters, fault type information corresponding to the alarm information, and storing the fault type information in the fault information storage unit; and
after first preset time after receiving the alarm information, reading, by the second processing unit, the fault type information that corresponds to the alarm information and that is in the fault information storage unit.

25. The fault processing method according to claim 24, further comprising:
storing, by the first processing unit, the delay prompt information in the fault information storage unit; and
reading, by the second processing unit, the delay prompt information in the fault information storage unit, wherein
the delay prompt information indicates shortest duration from time when the second processing unit receives the alarm information to time when the second processing unit is capable of reading the fault type information corresponding to the alarm information, and the first preset time is greater than or equal to the shortest duration.

26. The fault processing method according to claim 24 or 25, further comprising:
determining, by the second processing unit, a fault cause based on the read fault type information and a network topology relationship of a network system in which the electronic device is located.

27. The fault processing method according to any one of claims 24 to 26, wherein the communication system further comprises a network management device; and
the fault processing method further comprises:
obtaining, by the network management device, fault type information of the electronic device, and determining a fault cause based on the fault type information and the network topology relationship of the network system.
